# EUROPEAN PATENT SPECIFICATION

(11) **EP 4 122 785 B1**
(45) Date of publication and mention of the grant of the patent: **06.05.2026**
(21) Application number: 21787694.5
(22) Date of filing: 22.02.2021
(51) Int. Cl.: B60T 8/48, B60T 13/68

(54) **HYDRAULIC REGULATION UNIT FOR BRAKING SYSTEM IN AUTOMOBILE, BRAKING SYSTEM AND CONTROL METHOD**
HYDRAULISCHE REGULIERUNGSEINHEIT FÜR EIN BREMSSYSTEM IN EINEM FAHRZEUG, BREMSSYSTEM UND STEUERVERFAHREN
UNITÉ DE RÉGULATION HYDRAULIQUE POUR SYSTÈME DE FREINAGE DANS UNE AUTOMOBILE, SYSTÈME DE FREINAGE ET PROCÉDÉ DE COMMANDE

(30) Priority: 13.04.2020 CN 202010286285
(43) Date of publication of application: 25.01.2023
(73) Proprietor: Shenzhen Yinwang Intelligent Technologies Co., Ltd., Shenzhen, Guangdong 518129 (CN)
(72) Inventor: YANG, Weimiao, Shenzhen, Guangdong 518129 (CN); ZHANG, Yongsheng, Shenzhen, Guangdong 518129 (CN); LIU, Donghao, Shenzhen, Guangdong 518129 (CN); ZHANG, Wei, Shenzhen, Guangdong 518129 (CN)
(74) Representative: Pfenning, Meinig & Partner mbB
(86) International application number: PCT/CN2021/077229
(87) International publication number: WO 2021/208594

(56) References cited:
- CN-A- 102 975 706
- CN-A- 102 975 706
- CN-A- 104 442 767
- CN-A- 106 143 458
- CN-A- 109 153 376
- CN-A- 109 562 751
- DE-B4- 10 059 348
- JP-B2- 5 167 954
- US-A1- 2019 217 834

## Description

### TECHNICAL FIELD

This application relates to the field of vehicles, and more specifically, to a hydraulic adjustment unit of a brake system in a vehicle, a brake system in a vehicle, a vehicle, and a control method for a brake system in a vehicle.

### BACKGROUND

A brake system in a vehicle is a system that implements forced braking on wheels of the vehicle by applying specific braking force to the wheels of the vehicle. A function of the brake system is to enable a traveling vehicle to forcibly decelerate or even stop according to a requirement of a driver or a controller, or enable a stopped vehicle to park stably under various road conditions (for example, on a ramp), or keep a speed of a vehicle traveling downhill stable.

As a popular brake system, an electro-hydraulic brake (Electro-Hydraulic Brake, EHB) system usually includes a fluid reservoir configured to accommodate brake fluid. When the brake system needs to provide braking force to the wheels of the vehicle, the brake fluid in the fluid reservoir may be delivered to a supercharging device. The supercharging device pressurizes the brake fluid, to provide braking force to the wheels through an oil inlet pipe. When the brake system needs to depressurize the wheels of the vehicle, a pressure difference between pressure of the brake fluid in the fluid reservoir and pressure of brake fluid in a wheel cylinder may be used, so that the brake fluid in the wheel cylinder is delivered to the fluid reservoir through an oil return pipe, to provide braking force to the wheels next time.

At present, with development of vehicle electrification and intelligence, a vehicle poses an increasingly high requirement on the brake system. After some issues such as brake-by-wire characteristic and redundancy backup are considered, the brake system also needs to meet a control requirement on high depressurization efficiency. Therefore, to meet the control requirement on the high depressurization efficiency of the brake system, a brake system with high depressurization efficiency is urgently needed.
CN 102 975 706 A discloses an automobile brake boosting and controlling device, comprising a liquid storage tank (, a high-pressure gas tank, an electronic control unit and a boosting and controlling unit, wherein the boosting and controlling unit has a piston mechanism and four wheel control hydraulic pipelines; the piston mechanism is in communication with the liquid storage tank, the high-pressure gas tank and the four wheel control hydraulic pipelines, respectively; and the electronic control unit is connected to the piston mechanism and the four wheel control hydraulic pipelines by means of a circuit.
US 2019/217834 A1 discloses a hydraulic control apparatus and a brake system capable of improving responsiveness in terms of increasing a pressure in a wheel cylinder. The hydraulic control apparatus includes a connection fluid passage connected to a wheel cylinder of a wheel, a first hydraulic source, and a second hydraulic source. The first hydraulic source includes a first discharge port connected to the connection fluid passage and a first intake port connected to a reservoir storing brake fluid therein. The second hydraulic source includes a second discharge port connected to the connection fluid passage and a second intake port connected to the reservoir.

### SUMMARY

This application provides a hydraulic adjustment unit of a brake system in a vehicle, a brake system in a vehicle, a vehicle, and a control method for a brake system in a vehicle, to improve depressurization efficiency when the brake system depressurizes a wheel cylinder.

According to a first aspect, a hydraulic adjustment unit of a brake system in a vehicle is provided, including a first fluid reservoir 29, a second fluid reservoir 2, a first oil return pipe 110, and a second oil return pipe 120. The first oil return pipe 110 is configured to connect to wheel cylinders 151 and 152 of a vehicle, so that brake fluid in the wheel cylinders 151 and 152 of the vehicle is delivered to the first fluid reservoir 29, to depressurize wheels of the vehicle. The second oil return pipe 120 is configured to connect to the wheel cylinders 151 and 152 of the vehicle through oil inlet pipes 130 and 140 of a brake system, so that the brake fluid in the wheel cylinders 151 and 152 of the vehicle is delivered to the second fluid reservoir 2 through the oil inlet pipes 130 and 140 of the brake system, to depressurize the wheels of the vehicle.

In an embodiment of this application, the brake fluid is simultaneously delivered from the wheel cylinders 151 and 152 to the fluid reservoirs through the first oil return pipe 110 and the second oil return pipe 120, to depressurize the wheels of the vehicle. This helps improve depressurization efficiency of the brake system in depressurizing the wheel cylinders. In addition, this avoids low braking efficiency of an existing brake system, in which the wheels of the vehicle can be depressurized through only one oil return pipe.

In addition, the second oil return pipe 120 is connected to the oil inlet pipes 130 and 140. In a depressurization process, the brake fluid in the wheel cylinders 151 and 152 may be delivered to the fluid reservoirs through the oil inlet pipes 130 and 140, to depressurize the wheels of the vehicle. That is, the oil inlet pipes 130 and 140 are reused as oil return pipes in the depressurization process, which helps reduce complexity of deploying brake pipes in the brake system.

In the first aspect, oil inlet pipes of the hydraulic adjustment unit include a first oil inlet pipe 130 and a second oil inlet pipe 140. The second oil return pipe 120 is connected to the first oil inlet pipe 130 by using a first reducing valve 10. If the first reducing valve 10 is in a closed state, the second oil return pipe 120 is connected to the first oil inlet pipe 130. If the first reducing valve 10 is in an open state, the second oil return pipe 120 is disconnected from the first oil inlet pipe 130. The second oil return pipe 120 is connected to the second oil inlet pipe 140 by using a second reducing valve 11. If the second reducing valve 11 is in a closed state, the second oil return pipe 120 is connected to the second oil inlet pipe 140. If the second reducing valve 11 is in an open state, the second oil return pipe 120 is disconnected from the second oil inlet pipe 140.

In an embodiment of this application, closing or opening of the first reducing valve 10 and the second reducing valve 11 is controlled, to control the second oil return pipe 120, the first oil inlet pipe 130, and the second oil inlet pipe 140 to be closed or opened. This helps enrich an operating mode of the brake system, so that the brake system can be used in a wider range of scenarios.

In a possible implementation, the hydraulic adjustment unit includes a master cylinder 3 and a pressure providing apparatus 18. The master cylinder 3 provides braking force to a first wheel 25 of the vehicle through a first oil inlet pipe branch 131 of the first oil inlet pipe 130. The master cylinder 3 provides braking force to a second wheel 26 of the vehicle through a second oil inlet pipe branch 132 of the first oil inlet pipe 130. The master cylinder 3 provides braking force to a third wheel 27 of the vehicle through a third oil inlet pipe branch 141 of the second oil inlet pipe 140. The master cylinder 3 provides braking force to a fourth wheel 28 of the vehicle through a fourth oil inlet pipe branch 142 of the second oil inlet pipe 140. The pressure providing apparatus 18 provides braking force to the first wheel 25 and the second wheel 26 through a third oil inlet pipe 150, the first oil inlet pipe branch 131, and the second oil inlet pipe branch 132. The third oil inlet pipe 150 is connected to the first oil inlet pipe branch 131, and the third oil inlet pipe 150 is connected to the second oil inlet pipe branch 132. The pressure providing apparatus 18 provides braking force to the third wheel 27 and the fourth wheel 28 through a fourth oil inlet pipe 160, the third oil inlet pipe branch 141, and the fourth oil inlet pipe branch 142. The fourth oil inlet pipe 160 is connected to the third oil inlet pipe branch 141, and the fourth oil inlet pipe 160 is connected to the fourth oil inlet pipe branch 142.

In an embodiment of this application, the master cylinder 3 provides braking force to the wheels through the first oil inlet pipe 130 and the second oil inlet pipe 140, and the pressure providing apparatus 18 may provide the braking force to the vehicle through the third oil inlet pipe 150 and the fourth oil inlet pipe 160. This helps improve efficiency of the brake system in providing braking force to the wheels.

In a possible implementation, the first oil inlet pipe 130 is connected to the first oil inlet pipe branch 131 and the second oil inlet pipe branch 132 by using a first isolation valve 12. If the first isolation valve 12 is in an open state, brake fluid in the first oil inlet pipe 130 is blocked by the first isolation valve 12, and cannot flow into wheel cylinders for the first wheel 25 and the second wheel 26 through the first oil inlet pipe branch 131 and the second oil inlet pipe branch 132. The second oil inlet pipe 140 is connected to the third oil inlet pipe branch 141 and the fourth oil inlet pipe branch 142 by using a second isolation valve 13. If the second isolation valve 13 is in an open state, brake fluid in the second oil inlet pipe 140 is blocked by the first isolation valve 12, and cannot flow into the first wheel 25 and the second wheel 26 through the third oil inlet pipe branch 141 and the fourth oil inlet pipe branch 142.

In an embodiment of this application, the first oil inlet pipe 130 is connected to the first oil inlet pipe branch 131 and the second oil inlet pipe branch 132 by using the first isolation valve 12. The second oil inlet pipe 140 is connected to the third oil inlet pipe branch 141 and the fourth oil inlet pipe branch 142 by using the second isolation valve 13. In this way, the first isolation valve 12 and the second isolation valve 13 are closed or opened, to control whether the brake system provides braking force to the vehicle through the first oil inlet pipe 130 and the second oil inlet pipe 140, to increase the operating mode of the brake system. For example, when the first isolation valve 12 and the second isolation valve 13 are in an open state, the foregoing pressure providing apparatu 18 may provide braking force to the vehicle.

In a possible implementation, the first fluid reservoir 29 and the second fluid reservoir 2 are a same fluid reservoir, or the first fluid reservoir 29 and the second fluid reservoir 2 are different fluid reservoirs.

In an embodiment of this application, the first fluid reservoir 29 and the second fluid reservoir 2 are a same fluid reservoir. This helps reduce a quantity of components in the brake system, to reduce costs of the brake system. When the first liquid storage apparatus 29 and the second liquid storage apparatus 2 are different liquid storage apparatuses, a capacity of the brake system to store brake fluid is improved.

According to a second aspect, a brake system in a vehicle is provided, including a first liquid storage apparatus 29, a second liquid storage apparatus 2, a first oil return pipe 110, a second oil return pipe 120, and a plurality of wheel cylinders 151 and 152. The first oil return pipe 110 is connected to the plurality of wheel cylinders 151 and 152. The first oil return pipe 110 is configured to deliver brake fluid in the plurality of wheel cylinders 151 and 152 to the first liquid storage apparatus 29, to depressurize a plurality of wheels. The second oil return pipe 120 is connected to the plurality of wheel cylinders 151 and 152 through oil inlet pipes 130 and 140 of the brake system in a vehicle. The second oil return pipe 120 is configured to deliver the brake fluid in the wheel cylinders 151 and 152 of the vehicle to the second liquid storage apparatus 2 through the oil inlet pipes 130 and 140 of the brake system, to depressurize the wheels of the vehicle.

In an embodiment of this application, the brake fluid is simultaneously delivered from the wheel cylinders 151 and 152 to the fluid reservoirs through the first oil return pipe 110 and the second oil return pipe 120, to depressurize the wheels of the vehicle. This helps improve depressurization efficiency of the brake system in depressurizing the wheel cylinders. In addition, this avoids low braking efficiency of an existing brake system, in which the wheels of the vehicle can be depressurized through only one oil return pipe.

In addition, the second oil return pipe 120 is connected to the oil inlet pipes 130 and 140. In a depressurization process, the brake fluid in the wheel cylinders 151 and 152 may be delivered to the fluid reservoirs through the oil inlet pipes 130 and 140, to depressurize the wheels of the vehicle. That is, the oil inlet pipes 130 and 140 are reused as oil return pipes in the depressurization process, which helps reduce complexity of deploying brake pipes in the brake system.

In a possible implementation, the oil inlet pipes of the brake system include a first oil inlet pipe 130 and a second oil inlet pipe 140. The second oil return pipe 120 is connected to the first oil inlet pipe 130 by using a first reducing valve 10. If the first reducing valve 10 is in a closed state, the second oil return pipe 120 is connected to the first oil inlet pipe 130. If the first reducing valve 10 is in an open state, the second oil return pipe 120 is disconnected from the first oil inlet pipe 130. The second oil return pipe 120 is connected to the second oil inlet pipe 140 by using a second reducing valve 11. If the second reducing valve 11 is in a closed state, the second oil return pipe 120 is connected to the second oil inlet pipe 140. If the second reducing valve 11 is in an open state, the second oil return pipe 120 is disconnected from the second oil inlet pipe 140.

In an embodiment of this application, closing or opening of the first reducing valve 10 and the second reducing valve 11 is controlled, to control the second oil return pipe 120, the first oil inlet pipe 130, and the second oil inlet pipe 140 to be closed or opened. This helps enrich an operating mode of the brake system, so that the brake system can be used in a wider range of scenarios.

In a possible implementation, the brake system further includes a master cylinder 3 and a pressure providing apparatus 18. The master cylinder 3 provides braking force to a first wheel 25 of the vehicle through a first oil inlet pipe branch 131 of the first oil inlet pipe 130. The master cylinder 3 provides braking force to a second wheel 26 of the vehicle through a second oil inlet pipe branch 132 of the first oil inlet pipe 130. The master cylinder 3 provides braking force to a third wheel 27 of the vehicle through a third oil inlet pipe branch 141 of the second oil inlet pipe 140. The master cylinder 3 provides braking force to a fourth wheel 28 of the vehicle through a fourth oil inlet pipe branch 142 of the second oil inlet pipe 140. The pressure providing apparatus 18 provides braking force to the first wheel 25 and the second wheel 26 through a third oil inlet pipe 150, the first oil inlet pipe branch 131, and the second oil inlet pipe branch 132. The third oil inlet pipe 150 is connected to the first oil inlet pipe branch 131, and the third oil inlet pipe 150 is connected to the second oil inlet pipe branch 132. The pressure providing apparatus 18 provides braking force to the third wheel 27 and the fourth wheel 28 through a fourth oil inlet pipe 160, the third oil inlet pipe branch 141, and the fourth oil inlet pipe branch 142. The fourth oil inlet pipe 160 is connected to the third oil inlet pipe branch 141, and the fourth oil inlet pipe 160 is connected to the fourth oil inlet pipe branch 142.

In an embodiment of this application, the master cylinder 3 provides the braking force to the wheels through the first oil inlet pipe 130 and the second oil inlet pipe 140, and the pressure providing apparatus 18 may provide braking force to the vehicle through the third oil inlet pipe 150 and the fourth oil inlet pipe 160. This helps improve efficiency of the brake system in providing braking force to the wheels.

In a possible implementation, the first oil inlet pipe 130 is connected to the first oil inlet pipe branch 131 and the second oil inlet pipe branch 132 by using a first isolation valve 12. If the first isolation valve 12 is in an open state, brake fluid in the first oil inlet pipe 130 is blocked by the first isolation valve 12, and cannot flow into wheel cylinders for the first wheel 25 and the second wheel 26 through the first oil inlet pipe branch 131 and the second oil inlet pipe branch 132. The second oil inlet pipe 140 is connected to the third oil inlet pipe branch 141 and the fourth oil inlet pipe branch 142 by using a second isolation valve 13. If the second isolation valve 13 is in an open state, brake fluid in the second oil inlet pipe 140 is blocked by the first isolation valve 12, and cannot flow into the first wheel 25 and the second wheel 26 through the third oil inlet pipe branch 141 and the fourth oil inlet pipe branch 142.

In an embodiment of this application, the first oil inlet pipe 130 is connected to the first oil inlet pipe branch 131 and the second oil inlet pipe branch 132 by using the first isolation valve 12. The second oil inlet pipe 140 is connected to the third oil inlet pipe branch 141 and the fourth oil inlet pipe branch 142 by using the second isolation valve 13. In this way, the first isolation valve 12 and the second isolation valve 13 are closed or opened, to control whether the brake system provides braking force to the vehicle through the first oil inlet pipe 130 and the second oil inlet pipe 140, to increase the operating mode of the brake system. For example, when the first isolation valve 12 and the second isolation valve 13 are in an open state, the foregoing pressure providing apparatus 18 may provide braking force to the vehicle.

In a possible implementation, the first fluid reservoir 29 and the second fluid reservoir 2 are a same fluid reservoir, or the first fluid reservoir 29 and the second fluid reservoir 2 are different fluid reservoirs.

In an embodiment of this application, the first fluid reservoir 29 and the second fluid reservoir 2 are a same fluid reservoir. This helps reduce a quantity of components in the brake system, to reduce costs of the brake system. When the first liquid storage apparatus 29 and the second liquid storage apparatus 2 are different liquid storage apparatuses, a capacity of the brake system to store brake fluid is improved.

According to a third aspect, a vehicle is provided, including any possible brake system in the second aspect.

According to a fourth aspect, a control method for a brake system in a vehicle is provided, including: A controller of a brake system controls first control valves 16 and 17 to be in a closed state, to connect a first oil return pipe 110 to a wheel cylinder of the brake system, so that brake fluid in the wheel cylinder of the brake system flows into a first fluid reservoir 29 of the brake system through the first oil return pipe 110 of the brake system, to depressurize wheels of a vehicle. The controller controls second control valves 10 and 11 to be in a closed state, to connect oil inlet pipes 130 and 140 of the brake system to a second oil return pipe 120 of the brake system, so that the brake fluid in the wheel cylinder of the brake system flows into a second fluid reservoir 2 of the brake system through the oil inlet pipes 130 and 140 and the second oil return pipe 120 of the brake system.

In an embodiment of this application, the brake fluid is simultaneously delivered from the wheel cylinders 151 and 152 to the fluid reservoirs through the first oil return pipe 110 and the second oil return pipe 120, to depressurize the wheels of the vehicle. This helps improve depressurization efficiency of the brake system in depressurizing the wheel cylinders. In addition, this avoids low braking efficiency of an existing brake system, in which the wheels of the vehicle can be depressurized through only one oil return pipe.

In addition, the second oil return pipe 120 is connected to the oil inlet pipes 130 and 140. In a depressurization process, the brake fluid in the wheel cylinders 151 and 152 may be delivered to the fluid reservoirs through the oil inlet pipes 130 and 140, to depressurize the wheels of the vehicle. That is, the oil inlet pipes 130 and 140 are reused as oil return pipes in the depressurization process, which helps reduce complexity of deploying brake pipes in the brake system.

In a possible implementation, that the controller controls the second control valves to be in a closed state includes: if a depressurization rate of the brake system is less than a preset depressurization rate threshold, the controller controls the second control valves 10 and 11 to be in a closed state.

In an embodiment of this application, when the depressurization efficiency of the brake system is less than the preset depressurization rate threshold, the controller may control the second control valves 10 and 11 to be in a closed state, to depressurize the vehicle through the second oil return pipe 120. This helps improve performance of the brake system.

In a possible implementation, the oil inlet pipes of the brake system include a first oil inlet pipe 130 and a second oil inlet pipe 140. The second oil return pipe 120 is connected to the first oil inlet pipe 130 by using a first reducing valve 10. The second oil return pipe 120 is connected to the second oil inlet pipe 140 by using a second reducing valve 11. That the controller controls the second control valves to be in a closed state includes: The controller controls the first reducing valve 10 in the second control valves 10 and 11 to be in a closed state, to connect the second oil return pipe 120 to the first oil inlet pipe 130 in the oil inlet pipes of the brake system. The controller controls the second reducing valve 11 in the second control valves 10 and 11 to be in a closed state, to connect the second oil return pipe 120 to the second oil inlet pipe 140 in the oil inlet pipes of the brake system.

In an embodiment of this application, closing or opening of the first reducing valve 10 and the second reducing valve 11 is controlled, to control the second oil return pipe 120, the first oil inlet pipe 130, and the second oil inlet pipe 140 to be closed or opened. This helps enrich an operating mode of the brake system, so that the brake system can be used in a wider range of scenarios.

In a possible implementation, a master cylinder 3 of the brake system provides braking force to a first wheel 25 of the vehicle through a first oil inlet pipe branch 131 of the first oil inlet pipe 130, and provides braking force to a second wheel 26 of the vehicle through a second oil inlet pipe branch 132 of the first oil inlet pipe 130. The master cylinder 3 provides braking force to a third wheel 27 of the vehicle through a third oil inlet pipe branch 141 of the second oil inlet pipe 140, and provides braking force to a fourth wheel 28 of the vehicle through a fourth oil inlet pipe branch 142 of the second oil inlet pipe 140. The method further includes: The controller controls a pressure providing apparatus 18 of the brake system to provide braking force to the first wheel 25 and the second wheel 26 through a third oil inlet pipe 150 of the brake system, the first oil inlet pipe branch 131, and the second oil inlet pipe branch 132. The third oil inlet pipe 150 is connected to the first oil inlet pipe branch 131, and the third oil inlet pipe 150 is connected to the second oil inlet pipe branch 132. The controller controls the pressure providing apparatus 18 to provide braking force to the third wheel 27 and the fourth wheel 28 through a fourth oil inlet pipe 160 of the brake system, the third oil inlet pipe branch 141, and the fourth oil inlet pipe branch 142. The fourth oil inlet pipe 160 is connected to the third oil inlet pipe branch 141, and the fourth oil inlet pipe 160 is connected to the fourth oil inlet pipe branch 142.

In an embodiment of this application, the master cylinder 3 provides braking force to the wheels through the first oil inlet pipe 130 and the second oil inlet pipe 140, and the pressure providing apparatus 18 may provide braking force to the vehicle through the third oil inlet pipe 150 and the fourth oil inlet pipe 160. This helps improve efficiency of the brake system in providing braking force to the wheels.

In a possible implementation, that the controller controls the pressure providing apparatus 18 of the brake system to provide the braking force to the first wheel 25 and the second wheel 26 through the third oil inlet pipe 150 of the brake system, the first oil inlet pipe branch 131, and the second oil inlet pipe branch 132 includes: If the master cylinder 3 is faulty, the controller controls the pressure providing apparatus 18 to provide the braking force to the first wheel 25 and the second wheel 26 through the third oil inlet pipe 150, the first oil inlet pipe branch 131, and the second oil inlet pipe branch 132.

In this embodiment of this application, if the master cylinder 3 is faulty, the controller may control the pressure providing apparatus 18 to provide the braking force to the first wheel 25 and the second wheel 26, to improve redundancy performance of the brake system.

In a possible implementation, that the controller controls the pressure providing apparatus 18 to provide the braking force to the third wheel 27 and the fourth wheel 28 through the fourth oil inlet pipe 160 of the brake system, the third oil inlet pipe branch 141, and the fourth oil inlet pipe branch 142 includes: If the master cylinder 3 is faulty, the controller controls the pressure providing apparatus 18 to provide the braking force to the third wheel 27 and the fourth wheel 28 through the fourth oil inlet pipe 160, the third oil inlet pipe branch 141, and the fourth oil inlet pipe branch 142.

In this embodiment of this application, if the master cylinder 3 is faulty, the controller may control the pressure providing apparatus 18 to provide the braking force to the third wheel 27 and the fourth wheel 28, to improve redundancy performance of the brake system.

In a possible implementation, that the controller controls the pressure providing apparatus 18 of the brake system to provide the braking force to the first wheel 25 and the second wheel 26 through the third oil inlet pipe 150, the first oil inlet pipe branch 131, and the second oil inlet pipe branch 132 includes: If a pressurization rate of the brake system is less than a preset pressurization rate threshold, the controller controls the pressure providing apparatus 18 of the brake system to provide the braking force to the first wheel 25 and the second wheel 26 through the third oil inlet pipe 150, the first oil inlet pipe branch 131, and the second oil inlet pipe branch 132.

In an embodiment of this application, if the pressurization rate of the brake system is less than the preset pressurization rate threshold, the controller may control the pressure providing apparatus 18 to provide the braking force to the first wheel 25 and the second wheel 26, to improve braking efficiency of the brake system.

In a possible implementation, that the controller controls the pressure providing apparatus 18 to provide the braking force to the third wheel 27 and the fourth wheel 28 through the fourth oil inlet pipe 160, the third oil inlet pipe branch 141, and the fourth oil inlet pipe branch 142 includes: If the pressurization rate of the brake system is less than the preset pressurization rate threshold, the controller controls the pressure providing apparatus 18 to provide the braking force to the third wheel 27 and the fourth wheel 28 through the fourth oil inlet pipe 160, the third oil inlet pipe branch 141, and the fourth oil inlet pipe branch 142.

In an embodiment of this application, if the pressurization rate of the brake system is less than the preset pressurization rate threshold, the controller may control the pressure providing apparatus 18 to provide the braking force to the third wheel 27 and the fourth wheel 28, to improve the braking efficiency of the brake system.

According to a non-claimed fifth aspect, a control apparatus is provided. The control apparatus includes a processing unit and a storage unit. The storage unit is configured to store instructions. The processing unit executes the instructions stored in the storage unit, so that the control apparatus performs any possible method of the third aspect.

Optionally, the control apparatus may be an independent controller in a vehicle, or may be a chip having a control function in a vehicle. The processing unit may be a processor. The storage unit may be a memory (for example, a register or cache) in the chip, or a storage unit (for example, a read-only memory or a random access

It should be noted that in the foregoing controller, the memory is coupled to the processor. That the memory is coupled to the processor may be understood as that the memory is located inside the processor, or the memory is located outside the processor, so that the memory is independent of the processor.

According to a non-claimed sixth aspect, a computer program product is provided. The computer program product includes computer program code. When the computer program code is run on a computer, the computer is enabled to perform the methods in the foregoing aspects.

It should be noted that the computer program code can be totally or partially stored in a first storage medium. The first storage medium can be encapsulated with a processor, or encapsulated separately from a processor. This is not specifically limited in this embodiment of this application.

According to a non-claimed seventh aspect, a computer-readable medium is provided. The computer-readable medium stores program code. When the computer program code is run on a computer, the computer is enabled to perform the methods in the foregoing aspects.

### BRIEF DESCRIPTION OF DRAWINGS

FIG. 1 is a schematic diagram of an architecture of an existing electro-hydraulic brake system 100;
FIG. 2 is a schematic diagram of a hydraulic adjustment unit 200 of a brake system according to an embodiment of this application;
FIG. 3 is a schematic diagram of a hydraulic adjustment unit 300 of a brake system according to an embodiment of this application;
FIG. 4 is a schematic diagram of a hydraulic adjustment unit 400 according to an embodiment of this application;
FIG. 5 is a schematic diagram of a hydraulic adjustment unit 500 according to an embodiment of this application;
FIG. 6 is a schematic diagram of a brake system 600 according to an embodiment of this application;
FIG. 7 is a schematic diagram of a pressurization path of brake fluid in a brake system 600 according to an embodiment of this application;
FIG. 8 is a schematic diagram of a pressurization path of brake fluid in a brake system in a brake-by-wire mode according to an embodiment of this application;
FIG. 9 is a schematic diagram of a pressurization path of brake fluid in a brake system in a depressurization process according to an embodiment of this application;
FIG. 10 is a schematic diagram of a pressurization path of brake fluid when a high-speed pressurization mode is combined with a brake-by-wire mode according to an embodiment of this application;
FIG. 11 is a schematic diagram of a brake pipe in which brake fluid is located in a pressure preservation process when a high-speed pressurization mode is combined with a brake-by-wire mode according to an embodiment of this application;
FIG. 12 is a schematic diagram of a depressurization path of brake fluid in a depressurization process when a high-speed pressurization mode is combined with a brake-by-wire mode according to an embodiment of this application;
FIG. 13 is a schematic diagram of a pressurization path of brake fluid in a brake system 600 according to an embodiment of this application;
FIG. 14 is a schematic diagram of a brake pipe in which brake fluid is located in a pressure preservation process of the brake system in a redundant braking mode according to an embodiment of this application;
FIG. 15 is a schematic diagram of a depressurization path of brake fluid in a brake system in a redundant braking mode in a depressurization process according to an embodiment of this application;
FIG. 16 is a schematic diagram of a pressurization path of brake fluid in a brake system 600 in a mechanical braking mode according to an embodiment of this application;
FIG. 17 is a schematic diagram of a depressurization path of brake fluid in a brake system in a mechanical braking mode according to an embodiment of this application;
FIG. 18 is a schematic diagram of a pressurization path of brake fluid in a brake system 700 according to an embodiment of this application;
FIG. 19 is a schematic diagram of a brake pipe in which brake fluid is located in a pressure preservation process in a brake-by-wire mode of a brake system according to an embodiment of this application;
FIG. 20 is a schematic diagram of a depressurization path of brake fluid in a brake system in a depressurization process according to an embodiment of this application;
FIG. 21 is a schematic diagram of a pressurization path of brake fluid in a brake system when a high-speed pressurization mode is combined with a brake-by-wire mode according to an embodiment of this application;
FIG. 22 is a schematic diagram of a brake pipe in which brake fluid is located in a pressure preservation process of a brake system when a high-speed pressurization mode is combined with a brake-by-wire mode according to an embodiment of this application;
FIG. 23 is a schematic diagram of a depressurization path of brake fluid in a brake system in a depressurization process according to an embodiment of this application;
FIG. 24 is a schematic diagram of a pressurization path of brake fluid in a brake system 700 according to an embodiment of this application;
FIG. 25 is a schematic diagram of a brake pipe in which brake fluid is located in a pressure preservation process of the brake system in a redundant braking mode according to an embodiment of this application;
FIG. 26 is a schematic diagram of a depressurization path of brake fluid in a brake system in a redundant braking mode in a depressurization process according to an embodiment of this application;
FIG. 27 is a schematic diagram of a pressurization path of brake fluid in a brake system 700 in a mechanical braking mode according to an embodiment of this application;
FIG. 28 is a schematic diagram of a depressurization path of brake fluid in a brake system 700 in a mechanical braking mode according to an embodiment of this application;
FIG. 29 is a flowchart of a control method according to an embodiment of this application;
FIG. 30 is a flowchart of a control method according to another embodiment of this application;
FIG. 31 is a flowchart of a control method according to another embodiment of this application;
FIG. 32A and FIG. 32B is a flowchart of a control method according to another embodiment of this application;
FIG. 33A and FIG. 33B is a flowchart of a control method according to another embodiment of this application;
FIG. 34 is a schematic diagram of a control apparatus according to an embodiment of this application; and
FIG. 35 is a schematic block diagram of a controller according to an embodiment of this application.

### DESCRIPTION OF EMBODIMENTS

The following describes the technical solutions of this application with reference to the accompanying drawings.

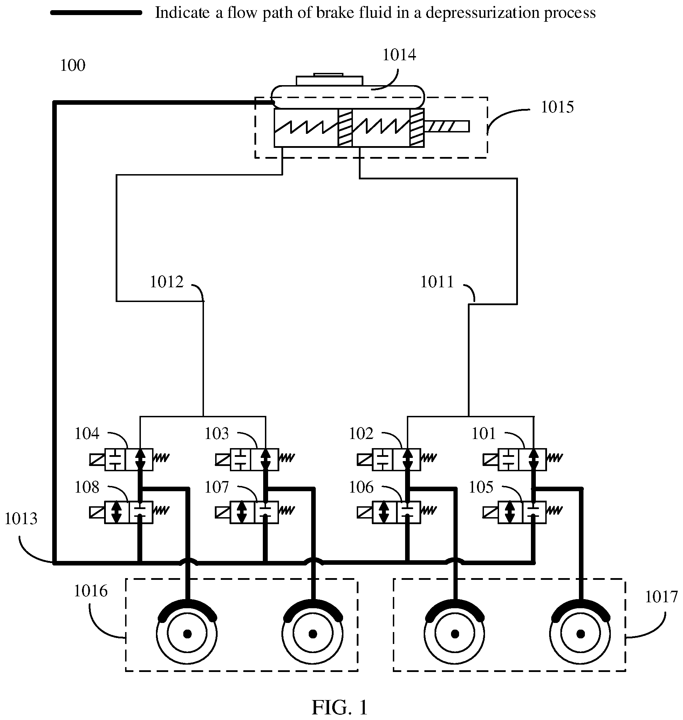

For ease of understanding this application, the following first describes an existing electro-hydraulic brake (Electro-Hydraulic Brake, EHB) system with reference to FIG. 1.

FIG. 1 is a schematic diagram of an architecture of an existing electro-hydraulic brake system 100. The brake system 100 shown in FIG. 1 includes a master cylinder 1015, a first brake pipe 1011, a second brake pipe 1012, a third brake pipe 1013, a fluid reservoir 1014, a wheel cylinder 1017 for a first group of wheels, a wheel cylinder 1016 for a second group of wheels, a plurality of first control valves 101, 102, 103, and 104, and a plurality of second control valves 105, 106, 107, and 108.

When braking force needs to be provided for wheels of a vehicle, a controller in the brake system 100 controls the plurality of first control valves 101, 102, 103, and 104 to be in a closed state, and controls the plurality of second control valves 105, 106, 107, and 108 to be in an open state. The fluid reservoir 1014 provides brake fluid to the master cylinder 1015. Correspondingly, the master cylinder 1015 delivers the brake fluid to the wheel cylinder 1017 for the first group of wheels through the first brake pipe 1011, to provide braking force to the first group of wheels. The master cylinder 1015 delivers the brake fluid to the wheel cylinder 1016 for the second group of wheels through the second brake pipe 1012, to provide brake force to the second group of wheels.

It should be noted that in a process of providing braking force to the wheels, the first brake pipe 1011 and the second brake pipe 1012 are configured to provide braking force to the wheels of the vehicle. Therefore, the first brake pipe 1011 and the second brake pipe 1012 are also referred to as "oil inlet pipes".

When the wheels of the vehicle need to be depressurized, the controller in the brake system 100 controls the plurality of first control valves 101, 102, 103, and 104 to be in an open state, and controls the plurality of second control valves 105, 106, 107, and 108 to be in a closed state. In this case, pressure of brake fluid in the wheel cylinder 1017 for the first group of wheels and pressure of brake fluid in the wheel cylinder 1016 for the second group of wheels are higher than that of brake fluid in the master cylinder 1015, that is, a hydraulic difference exists. Therefore, the hydraulic difference may be used to deliver the brake fluid in the wheel cylinder 1017 for the first group of wheels and the brake fluid in the wheel cylinder 1016 for the second group of wheels to the fluid reservoir 1014 through the third brake pipe 1013.

It should be noted that in a process of depressurizing the wheels of the vehicle, the third brake pipe 1013 is configured to depressurize the wheels of the vehicle. Therefore, the third brake pipe 1013 is also referred to as an "oil return pipe".

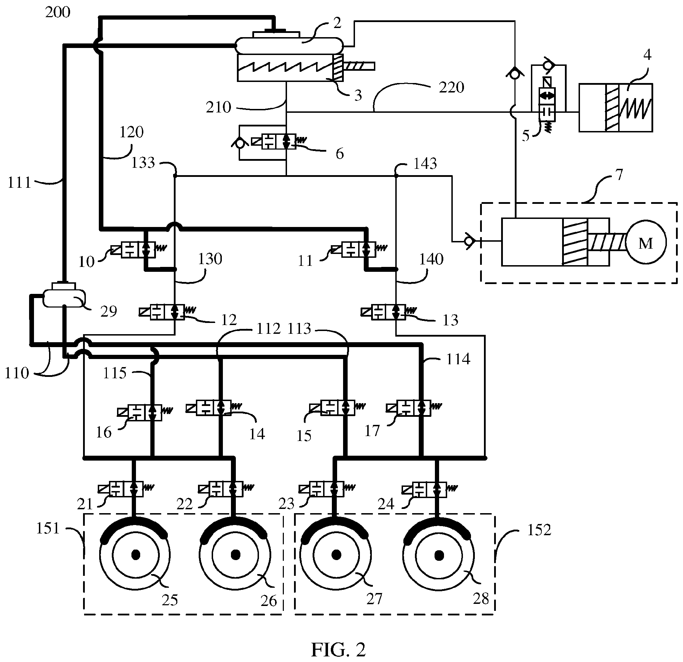

Based on the brake system 100 described above, it can be learned that when the wheels of the vehicle need to be depressurized, only the third brake pipe 1013 is used as an oil return pipe, which limits depressurization efficiency of a brake pipe. Therefore, to improve the depressurization efficiency of the brake system, this application provides a new hydraulic adjustment unit 200 of a brake system. The hydraulic adjustment unit 200 includes a plurality of parallel oil return pipes. In this way, when the wheels of the vehicle need to be depressurized, brake fluid may be simultaneously delivered from the wheel cylinders of the vehicle to the fluid reservoir through the plurality of oil return pipes, to improve the depressurization efficiency of the brake system. The following describes the hydraulic adjustment unit 200 of the brake system according to an embodiment of this application with reference to FIG. 2.

It should be noted that for ease of describing a connection relationship between braking components in the brake system, the terms "pressure outlet port", "pressure inlet port", and the like are used. The "pressure outlet port" may be understood as a port through which brake fluid flows out, and the "pressure inlet port" may be understood as a port through which the brake fluid flows in. In other words, the "pressure outlet port" and the "pressure inlet port" may be understood to define functions of a port. The "pressure outlet port" and the "pressure inlet port" may be configured to define functions of a physical port in different operating modes. Alternatively, the "pressure outlet port" and the "pressure inlet port" may correspond to two different physical ports. This is not limited in embodiments of this application.

Usually, as described below, when a pressure inlet port of a device A is connected to a pressure outlet port of a device B, it may be understood as that the pressure inlet port and the pressure outlet port correspond to two physical ports, and are used to describe a connection relationship between the device A and the device B.

In addition, an "oil return pipe" and an "oil inlet pipe" described below may correspond to different brake pipes, or may correspond to a same brake pipe. The "oil return pipe" and the "oil inlet pipe" are distinguished only based on functions of the brake pipes in the brake system. For example, when the "oil return pipe" and the "oil inlet pipe" correspond to a same brake pipe 1, it may be understood as that in the process of depressurizing the wheels of the vehicle, the brake pipe 1 in the brake system is configured to deliver the brake fluid in the wheel cylinders to the fluid reservoir. In this case, the brake pipe 1 may be referred to as the "oil return pipe". In the process of pressurizing the wheels of the vehicle, the brake pipe 1 is configured to provide brake fluid to the wheels of the vehicle, to provide braking force to the wheels of the vehicle. In this case, the brake pipe 1 may be referred to as the "oil inlet pipe".

Unless otherwise specified, the "oil return pipe" and the "oil inlet pipe" usually correspond to two different brake pipes.

In addition, an "oil inlet valve", an "oil outlet valve", and an "isolation valve" described below are distinguished only based on functions of control valves in the brake system. A control valve for controlling an oil inlet pipe to be connected or disconnected may be referred to as an "oil inlet valve" or a "booster valve". A controller for controlling an oil return pipe to be connected or disconnected may be referred to as an "oil outlet valve" or a "reducing valve". A control valve for isolating two stages of brake subsystems may be referred to as an "isolation valve". The foregoing control valves may be commonly used valves such as solenoid valves in an existing brake system. This is not specifically limited in embodiments of this application.

In addition, a "first oil return pipe 110", a "second oil return pipe 120", a "first oil inlet pipe 130", and a "second oil inlet pipe 130" described below may be understood as one or more brake pipe sections that implement a specific function. For example, the first oil inlet pipe 130 is a plurality of brake pipe sections configured to connect a master cylinder 3 to a wheel cylinder 151 for the first group of wheels.

In addition, when the following describes an architecture of the brake system and the vehicle with reference to the accompanying drawings, the accompanying drawings schematically show two operating states (open or closed) that may be implemented by each control valve. This does not limit a current operating state of the control valve to be as shown in the drawings.

FIG. 2 is a schematic diagram of the hydraulic adjustment unit 200 of the brake system according to an embodiment of this application. The hydraulic adjustment unit 200 shown in FIG. 2 includes a first fluid reservoir 29, a first oil return pipe 110, and a second oil return pipe 120.

The first oil return pipe 110 is configured to connect to wheel cylinders 151 and 152 of a vehicle, so that brake fluid in the wheel cylinders 151 and 152 of the vehicle is delivered to the first fluid reservoir 29, to depressurize wheels of the vehicle.

The first oil return pipe 110 is configured to connect to the wheel cylinders 151 and 152 of the vehicle. It may be understood as that a pressure inlet port of the first oil return pipe 110 is configured to connect to pressure outlet ports of the wheel cylinders 151 and 152.

The wheel cylinder of the vehicle may be understood as one of wheel cylinders in the vehicle, for example, a wheel cylinder for a first wheel. Alternatively, the wheel cylinder of the vehicle may be understood as a wheel cylinder for all wheels in the vehicle.

Optionally, when the wheel cylinders 151 and 152 need to be depressurized, pressure of the brake fluid in the wheel cylinders 151 and 152 is higher than that of brake fluid in the first fluid reservoir 29. In this way, a pressure difference between the pressure of the brake fluid in the wheel cylinders 151 and 152 and the pressure of the brake fluid in the first fluid reservoir 29 may be utilized, to transfer the pressure of the brake fluid in the wheel cylinders 151 and 152 to the first fluid reservoir 29 through the first oil return pipe 110.

The second oil return pipe 120 is configured to connect to the wheel cylinders 151 and 152 of the vehicle through oil inlet pipes 130 and 140 of a brake system, so that the brake fluid in the wheel cylinders 151 and 152 of the vehicle is delivered to a second fluid reservoir 2 through the oil inlet pipes 130 and 140 of the brake system, to depressurize the wheels of the vehicle.

A pressure inlet port of the second oil return pipe 120 is connected to pressure outlet ports of the oil inlet pipes 130 and 140. Correspondingly, pressure inlet ports of the oil inlet pipes 130 and 140 are connected to pressure outlet ports of the wheel cylinders 151 and 152.

It should be noted that in a braking process, the oil inlet pipes 130 and 140 are connected to the wheel cylinders 151 and 152, so that brake fluid is fed into the wheel cylinders 151 and 152, to provide braking force to the wheels of the vehicle. When the wheel cylinders 151 and 152 need to be depressurized, the foregoing oil inlet pipes 130 and 140 may be used as oil return pipes. The brake fluid in the wheel cylinders 151 and 152 is delivered to the pressure inlet port of the second oil return pipe 120, and then delivered to the second fluid reservoir 2 through the second oil return pipe 120.

Optionally, the oil inlet pipes 130 and 140 may include the first oil inlet pipe 130 and the second oil inlet pipe 140. The first oil inlet pipe 130 is configured to feed brake fluid into a wheel cylinder 151 for a first group of wheels, to provide braking force to the first group of wheels. The second oil inlet pipe 140 is configured to feed brake fluid into a wheel cylinder 152 for a second group of wheels, to provide braking force to the second group of wheels.

First group of wheels 25 and 26 are different from second group of wheels 27 and 28. For example, the first group of wheels 25 and 26 may include a right front wheel of the vehicle and a left front wheel of the vehicle. Correspondingly, the second group of wheels 27 and 28 may include a left rear wheel of the vehicle and a right rear wheel of the vehicle. In this case, the brake system is arranged in an H-shape. For another example, the first group of wheels 25 and 26 may include the right front wheel of the vehicle and the left rear wheel of the vehicle. Correspondingly, the second group of wheels 27 and 28 may include the right rear wheel of the vehicle and the left front wheel of the vehicle. In this case, the brake system is arranged in an X-shape.

As described above, when the brake system implements pressurization and depressurization functions, functions of the oil inlet pipes 130 and 140 are different. In order that the oil inlet pipes 130 and 140 implement a function of pressurizing or depressurizing the wheel cylinders, the oil inlet pipes 130 and 140 may be connected to the second oil return pipe 120 by using reducing valves 10 and 11. In this way, when the reducing valves 10 and 11 are in an open state, the oil inlet pipes 130 and 140 are disconnected from the second oil return pipe 120, and the brake system may provide braking force to the wheel cylinders 151 and 152 of the vehicle through the oil inlet pipes 130 and 140. When the reducing valves 10 and 11 are in a closed state, the oil inlet pipes 130 and 140 are connected to the second oil return pipe 120, and the brake system may depressurize the wheel cylinders 151 and 152 of the vehicle through the oil inlet pipes 130 and 140.

To be specific, the oil inlet pipes of the brake system include the first oil inlet pipe 130 and the second oil inlet pipe 140. The second oil return pipe 120 is connected to the first oil inlet pipe 130 by using the first reducing valve 10. If the first reducing valve 10 is in a closed state, the second oil return pipe 120 is connected to the first oil inlet pipe 130. If the first reducing valve 10 is in an open state, the second oil return pipe 120 is disconnected from the first oil inlet pipe 130. The second oil return pipe 120 is connected to the second oil inlet pipe 140 by using the second reducing valve 11. If the second reducing valve 11 is in a closed state, the second oil return pipe 120 is connected to the second oil inlet pipe 140. If the second reducing valve 11 is in an open state, the second oil return pipe 120 is disconnected from the second oil inlet pipe 140.

Optionally, to save costs, the first fluid reservoir and the second fluid reservoir may be a same fluid reservoir. The fluid reservoir may be the second fluid reservoir 2 or the first fluid reservoir 29. Generally, to improve a utilization rate of brake fluid, in a process of depressurizing the wheels, the fluid reservoir is configured to accommodate the brake fluid delivered from the wheel cylinders of the vehicle. In a process of providing braking force to the wheels, the fluid reservoir may further provide brake fluid to a supercharging device (for example, a master cylinder) of the brake system. Certainly, if the utilization rate of the brake fluid is not considered, the fluid reservoir may not provide the brake fluid to the supercharging device of the brake system. This is not limited in this embodiment of this application.

Optionally, the first fluid reservoir 29 and the second fluid reservoir 2 may be connected through a pipe (as shown in 111 in FIG. 2), so that brake fluid can flow between the first fluid reservoir 29 and the second fluid reservoir 2, to provide the brake fluid to the supercharging device of the brake system in time. Certainly, the first fluid reservoir 29 and the second fluid reservoir 2 may also be fluid reservoirs independent of each other, that is, there is no connected pipe between the first fluid reservoir 29 and the second fluid reservoir 2.

Optionally, when the foregoing supercharging device is a master cylinder 3 of the brake system, the second fluid reservoir 2 and the first fluid reservoir 29 may provide brake fluid to the master cylinder 3 of the brake system. In this case, the first fluid storage apparatus 29 and the second fluid reservoir 2 may be separately connected to a brake fluid inlet port of the master cylinder 3, and independently provide the brake fluid to the master cylinder 3.

Alternatively, the second fluid reservoir 2 may provide the brake fluid to the master cylinder 3 by using the first fluid reservoir 29. FIG. 2 shows a possible connection manner. The second fluid reservoir 2 is located on the first oil return pipe 110. After the first oil return pipe 110 delivers brake fluid from the wheel cylinders 151 and 152 of the vehicle to the second fluid reservoir 2, the second fluid reservoir 2 delivers the brake fluid in the second fluid reservoir 2 to the first fluid reservoir 29 through a first oil return pipe section 111 of the second oil return pipe 120, to provide the brake fluid to the master cylinder 3 by using the first fluid reservoir 29.

Optionally, the first oil outlet pipe may include a first oil outlet pipe branch 115, a second oil outlet pipe branch 112, a third oil outlet pipe branch 113, and a fourth oil outlet pipe branch 114. The first oil outlet pipe branch 115 is configured to depressurize a wheel cylinder for a first wheel 25, the second oil outlet pipe branch 112 is configured to depressurize a wheel cylinder for a second wheel 26, the third oil outlet pipe branch 113 is configured to depressurize a wheel cylinder for a third wheel 27, and the fourth oil outlet pipe branch 114 is configured to depressurize a wheel cylinder for a fourth wheel 28.

Generally, to implement a function of depressurizing some wheels in the vehicle, reducing valves 16, 14, 15, and 17 may be respectively disposed on the first oil outlet pipe branch 115, the second oil outlet pipe branch 112, the third oil outlet pipe branch 113, and the fourth oil outlet pipe branch 114. The fifth reducing valve 16 is disposed on the first oil outlet pipe branch 115, to control whether the first wheel 25 is depressurized. The third reducing valve 14 is disposed on the second oil outlet pipe branch 112, to control whether the second wheel 26 is depressurized. The fourth reducing valve 15 is disposed on the third oil outlet pipe branch 113, to control whether the third wheel 27 is depressurized. The sixth reducing valve 17 is disposed on the fourth oil outlet pipe branch 114, to control whether the fourth wheel 28 is depressurized.

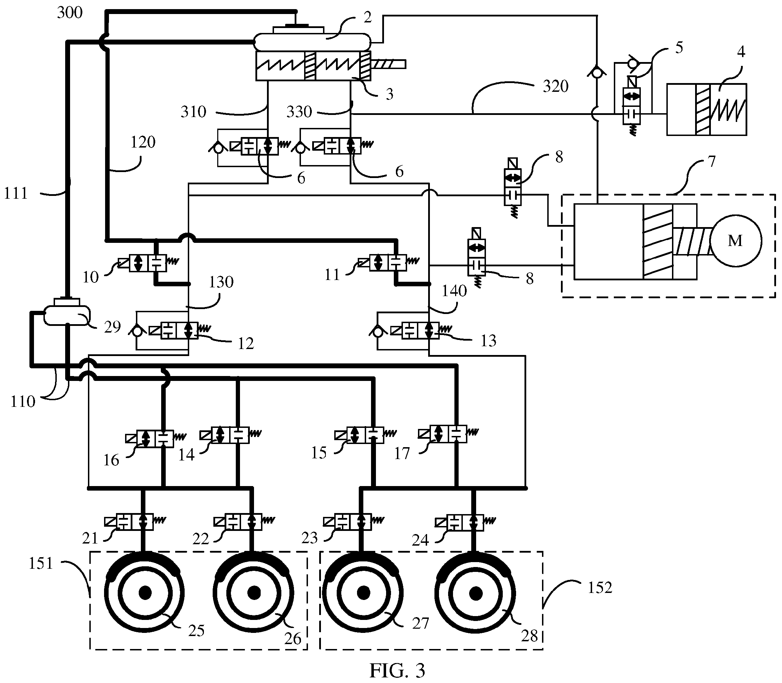

The depressurization solution described above may be applied to a plurality of hydraulic adjustment units. This is not limited in this embodiment of this application. For ease of understanding this application, the following describes, with reference to FIG. 2 and FIG. 3, a hydraulic adjustment unit to which the depressurization solution in this application is applicable. It should be understood that FIG. 2 and FIG. 3 schematically show only two operating states that can be implemented by each control valve. This does not limit a current operating state of the control valve to be as shown in the figure.

The hydraulic adjustment unit 200 shown in FIG. 2 further includes a master cylinder booster valve 6, a pedal feedback simulator 4, a supercharging device 7, a first isolation valve 12, a second isolation valve 13, and a third isolation valve 5. The hydraulic adjustment unit 200 may provide braking force to the wheels of the vehicle in three operating modes. The three operating modes are respectively a mechanical braking mode, a brake-by-wire mode, and an automatic driving mode.

Generally, the supercharging device 7 is configured to assist the hydraulic adjustment unit 200 in implementing a brake-by-wire mode or an intelligent driving mode. The supercharging device 7 provides braking force to the wheels 25, 26, 27, and 28 of the vehicle through the first oil inlet pipe 130 and the second oil inlet pipe 140. Specifically, a pressure outlet port of the supercharging device 7 is connected to a pressure inlet port 133 of the first oil inlet pipe 130, and the pressure outlet port of the supercharging device 7 is connected to a pressure inlet port 143 of the second oil inlet pipe 140.

In the brake-by-wire mode, the master cylinder 3 generally does not directly provide braking force to the wheels. Therefore, an operating state of the master cylinder booster valve 6 needs to be changed, to prevent brake fluid in the master cylinder 3 from flowing into the wheel cylinders 151 and 152 of the vehicle through the first oil inlet pipe 130 and the second oil inlet pipe 140.

Fig. 2 shows a possible connection manner of the master cylinder booster valve 6 in the brake system. The master cylinder 3 feeds the brake fluid into the first oil inlet pipe 130 and the second oil inlet pipe 140 through a brake pipe 210. A pressure inlet port of the brake pipe 210 is connected to a pressure outlet port of the master cylinder 3, and a pressure outlet port of the brake pipe 210 is connected to the pressure inlet port 133 of the first oil inlet pipe 130 and the pressure inlet port 143 of the second oil inlet pipe 140.

The pressure outlet port of the supercharging device 7 is connected to the pressure inlet port 133 of the first oil inlet pipe 130 and the pressure inlet port 143 of the second oil inlet pipe 140.

The master cylinder booster valve 6 is located on a fifth brake pipe 170 between the pressure outlet port of the master cylinder 3 and the pressure inlet ports 133 and 143 of the oil inlet pipes.

As shown in FIG. 2, when the master cylinder booster valve 6 is in an open state, the brake fluid in the master cylinder 3 may flow through the brake pipe 210 and be blocked by the master cylinder booster valve 6. Accordingly, brake fluid in the brake pipe 210 flows to the pedal feedback simulator 4 through the brake pipe 220, to depressurize brake fluid in the fifth brake pipe 170. The third isolation valve 5 is configured to isolate the pedal feedback simulator 4 from the brake system when the pedal feedback simulator 4 does not operate.

Generally, the foregoing master cylinder booster valve 6 is disposed between the pressure outlet port of the master cylinder 3, the pressure inlet port 133 of the first oil inlet pipe 130, and the pressure inlet port 143 of the second oil inlet pipe 140. In addition, the foregoing master cylinder booster valve 6 is located before the supercharging device 7, the pressure inlet port of the first oil inlet pipe 130, and the pressure inlet port of the second oil inlet pipe 140. In this way, the master cylinder booster valve 6 is only configured to isolate the master cylinder 3, to provide braking force to the brake system, but does not affect the supercharging device 7 to provide braking force to the brake system.

In the brake-by-wire mode, the first isolation valve 12, the second isolation valve 13, oil inlet valves 21, 22, 23, 24, and the third isolation valve 5 are in a closed state. The master cylinder booster valve 6, the first reducing valve 10, the second reducing valve 11, the third reducing valve 14, the fourth reducing valve 15, the fifth reducing valve 16, and the sixth reducing valve 17 are in an open state.

When a driver steps on a brake pedal, the master cylinder 3 feeds the brake fluid into the brake pipe 210. The brake pipe 210 is configured to connect an oil outlet port of the master cylinder to brake pipes of the first oil inlet pipe 130 and the second oil inlet pipe 140. Because the master cylinder booster valve 6 is in an open state, the brake fluid fed into the brake pipe 210 is blocked by the master cylinder booster valve 6, and flows to the pedal feedback simulator 4 through the brake pipe 220 and the third isolation valve 5.

A controller controls, based on the required braking force entered by the driver, the supercharging device 7 to feed brake fluid in a hydraulic cylinder into the first oil inlet pipe 130 and the second oil inlet pipe 140. The brake fluid is fed into the wheel cylinder 151 for the first group of wheels through the first oil inlet pipe 130, and fed into the wheel cylinder 152 for the second group of wheels through the second oil inlet pipe 140.

It should be noted that there are many manners in which the controller obtains the required braking force entered by the driver. This is not specifically limited in this embodiment of this application. For example, the controller may obtain, by using a pedal stroke sensor (not shown in the figure) disposed on a master cylinder, a pedal stroke generated by a brake pedal in the master cylinder when the driver steps on the pedal. The controller determines the required braking force based on the pedal stroke and a correspondence between the pedal stroke and the required braking force. For another example, a pressure sensor (not shown in the figure) may be disposed on the brake pipe 210. The pressure sensor is configured to detect pressure of the brake fluid in the brake pipe 210. In this way, the controller may determine the required braking force based on the pressure of the brake fluid in the brake pipe 210 and a correspondence between the pressure of the brake fluid and the required braking force.

In the mechanical braking mode, the master cylinder booster valve 6, the first isolation valve 12, the second isolation valve 13, and the oil inlet valves 21, 22, 23, and 24 are in a closed state. The first reducing valve 10, the second reducing valve 11, the third reducing valve 14, the fourth reducing valve 15, the fifth reducing valve 16, the sixth reducing valve 17, and the third isolation valve 5 are in an open state. When the driver steps on the brake pedal, the master cylinder 3 feeds the brake fluid into the first oil inlet pipe 130 and the second oil inlet pipe 140. The brake fluid flows to the wheel cylinders 151 and 152 of the vehicle through the first oil inlet pipe 130 and the second oil inlet pipe 140.

In an intelligent driving mode, the first isolation valve 12, the second isolation valve 13, the oil inlet valves 21, 22, 23, and 24, and the third isolation valve 5 are in a closed state. The master cylinder booster valve 6, the first reducing valve 10, the second reducing valve 11, the third reducing valve 14, the fourth reducing valve 15, the fifth reducing valve 16, and the sixth reducing valve 17 are in an open state.

The controller may directly control the supercharging device 7 based on the required braking force, to feed brake fluid into the first oil inlet pipe 130 and the second oil inlet pipe 140. The brake fluid is fed into the wheel cylinder 151 for the first group of wheels through the first oil inlet pipe 130, and fed into the wheel cylinder 152 for the second group of wheels through the second oil inlet pipe 140.

It should be noted that in the intelligent driving mode, the required braking force does not need to be provided by the driver, and may be determined based on road condition information of the vehicle.

The foregoing mainly describes several manners in which the hydraulic adjustment unit 200 provides the braking force to the wheels of the vehicle. The following describes a process in which the brake system 100 depressurizes the wheels. In the hydraulic adjustment unit 200, the first isolation valve 12, the second isolation valve 13, the oil inlet valves 21, 22, 23, and 24, the first reducing valve 10, the second reducing valve 11, the third reducing valve 14, the fourth reducing valve 15, the fifth reducing valve 16, and the sixth reducing valve 17 are in a closed state. The master cylinder booster valve 6 and the third isolation valve 5 are controlled to be in an open state.

When the wheels of the vehicle need to be depressurized, pressure of brake fluid in the wheel cylinder 151 for the first group of wheels and brake fluid in the wheel cylinder 152 for the second group of wheels is higher than that of brake fluid in the first fluid reservoir 29 and the second fluid reservoir 2. Therefore, based on a pressure difference between the brake fluid in the wheel cylinder for the first group of wheels and the brake fluid in the second group of wheels, the brake fluid may flow to the first fluid reservoir 29 through the first oil return pipe 110 and the second oil return pipe 120.

The oil inlet valves 21, 22, 23, and 24, the third reducing valve 14, the fourth reducing valve 15, the fifth reducing valve 16, and the sixth reducing valve 17 are in a closed state. Therefore, the first oil return pipe 110 may be connected to an oil return pipe located between the wheel cylinders 151 and 152 of the vehicle and the second fluid reservoir 2. Based on the foregoing pressure difference, the brake fluid may flow from the wheel cylinders 151 and 152 of the vehicle to the second fluid reservoir 2. Then, because the second fluid reservoir 2 and the first fluid reservoir 29 are connected through the first oil return pipe section 111 of the first oil return pipe 110, based on the foregoing pressure difference, the brake fluid may continue to flow from the second fluid reservoir 2 to the first fluid reservoir 29 through the first oil return pipe section 111.

Because the first isolation valve 12, the second isolation valve 13, the first reducing valve 10, and the second reducing valve 11 are in a closed state, the brake fluid flowing out of the wheel cylinders 151 and 152 of the vehicle based on the pressure difference may further flow to the second oil return pipe 120 through the first oil inlet pipe 130 and the second oil inlet pipe 140, and flow to the first fluid reservoir 29 through the second oil return pipe 120.

It should be noted that in a process of depressurizing the wheel cylinders of the vehicle, the first oil inlet pipe 130 and the second oil inlet pipe 140 serve as oil return pipes. As described above, the "oil inlet pipe" is only used to describe functions of the brake pipe from a function perspective, and does not limit the brake pipe to only serving as an oil inlet pipe.

The foregoing describes how to depressurize the wheel cylinders of the vehicle. The depressurization solution in this embodiment of this application may be further used to depressurize a wheel cylinder for a wheel.

The following uses an example in which the wheel cylinder for the first wheel 25 is depressurized for description. It should be understood that a solution of depressurizing a wheel cylinder for another wheel in the vehicle is similar to a solution of depressurizing the wheel cylinder for the first wheel 25. For brevity, details are not described again.

In the hydraulic adjustment unit 200, the first isolation valve 12, the second isolation valve 13, the oil inlet valve 21 for the first wheel, the first reducing valve 10, the second reducing valve 11, and the fifth reducing valve 16 are in a closed state. The oil inlet valves 22, 23, and 24, the third reducing valve 14, the fourth reducing valve 15, the sixth reducing valve 17, the master cylinder booster valve 6, and the third isolation valve 5 that are for the other wheels 26, 27, and 28 are in an open state.

When a wheel cylinder 21 for the first wheel needs to be depressurized, pressure of brake fluid in the wheel cylinder 21 for the first wheel is higher than that of the brake fluid in the first fluid reservoir 29 and the second fluid reservoir 2. Therefore, based on a pressure difference between the pressure of the brake fluid in the wheel cylinder 21 for the first wheel and the pressure of the brake fluid in the fluid reservoirs, the brake fluid in the wheel cylinder 21 for the first wheel may flow to the first fluid reservoir 29 through the first oil return pipe 110 and the second oil return pipe 120.

The oil inlet valve 21 and the fifth reducing valve 16 for the first wheel are in a closed state. Therefore, the first oil return pipe 110 may be connected to an oil return pipe located between the wheel cylinder 21 for the first wheel and the second fluid reservoir 2. Based on the foregoing pressure difference, the brake fluid may flow from the wheel cylinder 21 for the first wheel to the second fluid reservoir 2. Then, because the second fluid reservoir 2 and the first fluid reservoir 29 are connected through the first oil return pipe section 111 of the first oil return pipe 110, based on the foregoing pressure difference, the brake fluid may continue to flow from the second fluid reservoir 2 to the first fluid reservoir 29 through the first oil return pipe section 111.

Because the first isolation valve 12, the second isolation valve 13, the first reducing valve 10, and the second reducing valve 11 are in a closed state, the brake fluid flowing out of the wheel cylinder 21 for the first wheel based on the pressure difference may further flow to the second oil return pipe 120 through the first oil inlet pipe 130 and the first reducing valve 10, and flow to the first fluid reservoir 29 through the second oil return pipe 120.

It should be noted that in a process of depressurizing the wheel cylinders of the vehicle, the first oil inlet pipe 130 serves as an oil return pipe. As described above, the "oil inlet pipe" is only used to describe functions of the brake pipe from a function perspective, and does not limit the brake pipe to only serving as an oil inlet pipe.

FIG. 3 is a schematic diagram of a hydraulic adjustment unit 300 of a brake system according to an embodiment of this application. The hydraulic adjustment unit 300 shown in FIG. 3 is another brake system architecture to which a depressurization solution provided in this application can be applied. It should be noted that a braking component in the hydraulic adjustment unit 300 and a braking component in the hydraulic adjustment unit 200 that implement same functions are represented by same reference signs.

A master cylinder 3 in the hydraulic adjustment unit 300 may be a tandem master cylinder. A first hydraulic chamber of the master cylinder 3 provides braking force to a wheel cylinder 151 for a first group of wheels of a vehicle through a first oil inlet pipe 130. A second hydraulic chamber of the master cylinder 3 provides braking force to a wheel cylinder 152 for a second group of wheels of the vehicle through a second oil inlet pipe 140.

The hydraulic adjustment unit 300 shown in FIG. 3 further includes a master cylinder booster valve 6, a supercharging device booster valve 8, a supercharging device booster valve 9, a pedal feedback simulator 4, a supercharging device 7, a first isolation valve 12, a second isolation valve 13, and a third isolation valve 5. The hydraulic adjustment unit 300 may provide braking force to the wheels of the vehicle in three operating modes. The three operating modes are respectively a mechanical braking mode, a brake-by-wire mode, and an automatic driving mode.

The supercharging device booster valve 8 and the supercharging device booster valve 9 are configured to determine, based on an operating mode of the hydraulic adjustment unit 300, whether the supercharging device 7 is isolated from the hydraulic adjustment unit 300. For example, in the automatic driving mode or the brake-by-wire mode, the supercharging device booster valve 8 and the supercharging device booster valve 9 may be controlled to be in a closed state, to provide braking force to the hydraulic adjustment unit 300. In the mechanical braking mode, the supercharging device booster valve 8 and the supercharging device booster valve 9 may be controlled to be in an open state, to isolate the supercharging device 7 from the hydraulic adjustment unit 300.

In the brake-by-wire mode, the first isolation valve 12, the second isolation valve 13, oil inlet valves 21, 22, 23, and 24, the third isolation valve 5, and the supercharging device booster valve 8 are in a closed state. The master cylinder booster valve 6, a first reducing valve 10, a second reducing valve 11, a third reducing valve 14, a fourth reducing valve 15, a fifth reducing valve 16, and a sixth reducing valve 17 are in an open state.

When a driver steps on a brake pedal, the master cylinder 3 feeds brake fluid in a first hydraulic cylinder into a brake pipe section 310 of the first oil inlet pipe 130, and the master cylinder 3 feeds brake fluid in a second hydraulic cylinder into a brake pipe section 330 of the second oil inlet pipe 140. Because the master cylinder booster valve 6 is in an open state, a flow path of the brake fluid in the brake pipe section 310 and a flow path of the brake fluid in the brake pipe section 330 are blocked by the master cylinder booster valve 6. The brake fluid in the brake pipe section 310 and the brake fluid in the brake pipe section 330 flow to the pedal feedback simulator 4 through a brake pipe 320 and the third isolation valve 5.

A controller controls, based on the required braking force entered by the driver, the supercharging device 7 to feed brake fluid in a hydraulic cylinder into the first oil inlet pipe 130 and the second oil inlet pipe 140. The brake fluid is fed into the wheel cylinder 151 for the first group of wheels through the first oil inlet pipe 130, and fed into the wheel cylinder 152 for the second group of wheels through the second oil inlet pipe 140.

It should be noted that there are many manners in which the controller obtains the required braking force entered by the driver. This is not specifically limited in this embodiment of this application. For example, the controller may obtain, by using a pedal stroke sensor (not shown in the figure) disposed on a master cylinder, a pedal stroke generated by a brake pedal in the master cylinder when the driver steps on the pedal. The controller determines the required braking force based on the pedal stroke and a correspondence between the pedal stroke and the required braking force. For another example, a pressure sensor (not shown in the figure) may be disposed on the brake pipe 310. The pressure sensor is configured to detect pressure of the brake fluid in the brake pipe 310. In this way, the controller may determine the required braking force based on the pressure of the brake fluid in the brake pipe 310 and a correspondence between the pressure of the brake fluid and the required braking force.

In the mechanical braking mode, the master cylinder booster valve 6, the first isolation valve 12, the second isolation valve 13, and the oil inlet valves 21, 22, 23, and 24 are in a closed state. The supercharging device booster valve 8, the first reducing valve 10, the second reducing valve 11, the third reducing valve 14, the fourth reducing valve 15, the fifth reducing valve 16, the sixth reducing valve 17, and the third isolation valve 5 are in an open state. When the driver steps on the brake pedal, the master cylinder 3 feeds the brake fluid in the first hydraulic cylinder into the first oil inlet pipe 130. The brake fluid flows to the wheel cylinder 151 for the first group of wheels through the first oil inlet pipe 130. The master cylinder 3 feeds the brake fluid in the second hydraulic cylinder into the second oil inlet pipe 140. The brake fluid flows to the wheel cylinder 152 of the second group of wheels through the second oil inlet pipe 140.

In the intelligent driving mode, the first isolation valve 12, the second isolation valve 13, the oil inlet valves 21, 22, 23, and 24, the third isolation valve 5, and the supercharging device booster valve 8 are in a closed state. The master cylinder booster valve 6, the first reducing valve 10, the second reducing valve 11, the third reducing valve 14, the fourth reducing valve 15, the fifth reducing valve 16, and the sixth reducing valve 17 are in an open state.

The controller may directly control the supercharging device 7 based on the required braking force, to feed brake fluid into the first oil inlet pipe 130 and the second oil inlet pipe 140. The brake fluid is fed into the wheel cylinder 151 for the first group of wheels through the first oil inlet pipe 130, and fed into the wheel cylinder 152 for the second group of wheels through the second oil inlet pipe 140.

It should be noted that in the intelligent driving mode, the required braking force does not need to be provided by the driver, and may be determined based on road condition information of the vehicle.

The foregoing mainly describes several manners in which the hydraulic adjustment unit 300 provides the braking force to the wheels of the vehicle. The following describes a process in which the hydraulic adjustment unit 300 depressurizes the wheels. Control valves in a closed state in the hydraulic adjustment unit 300 include: the first isolation valve 12, the second isolation valve 13, the oil inlet valves 21, 22, 23, and 24, the first reducing valve 10, the second reducing valve 11, the third reducing valve 14, the fourth reducing valve 15, the fifth reducing valve 16, and the sixth reducing valve 17. Control valves in an open state include the supercharging device booster valve 8, the master cylinder booster valve 6, and the third isolation valve 5.

When the wheels of the vehicle need to be depressurized, pressure of brake fluid in the wheel cylinder 151 for the first group of wheels and brake fluid in the wheel cylinder 152 for the second group of wheels is higher than that of brake fluid in a first fluid reservoir 29 and the second fluid reservoir 2. Therefore, based on a pressure difference between the brake fluid in the wheel cylinder for the first group of wheels and the brake fluid in the second group of wheels, the brake fluid may flow to a first fluid reservoir 29 through the first oil return pipe 110 and the second oil return pipe 120.

The oil inlet valves 21, 22, 23, and 24, the third reducing valve 14, the fourth reducing valve 15, the fifth reducing valve 16, and the sixth reducing valve 17 are in a closed state. Therefore, the first oil return pipe 110 may be connected to an oil return pipe located between the wheel cylinders 151 and 152 of the vehicle and the second fluid reservoir 2. Based on the foregoing pressure difference, the brake fluid may flow from the wheel cylinders 151 and 152 of the vehicle to the second fluid reservoir 2. Then, because the second fluid reservoir 2 and the first fluid reservoir 29 are connected through a first oil return pipe section 111 of the first oil return pipe 110, based on the foregoing pressure difference, the brake fluid may continue to flow from the second fluid reservoir 2 to the first fluid reservoir 29 through the first oil return pipe section 111.

Because the first isolation valve 12, the second isolation valve 13, the first reducing valve 10, and the second reducing valve 11 are in a closed state, the brake fluid flowing out of the wheel cylinders 151 and 152 of the vehicle based on the pressure difference may further flow to the second oil return pipe 120 through the first oil inlet pipe 130 and the second oil inlet pipe 140, and flow to the first fluid reservoir 29 through the second oil return pipe 120.

It should be noted that in a process of depressurizing the wheel cylinders of the vehicle, the first oil inlet pipe 130 and the second oil inlet pipe 140 serve as oil return pipes. As described above, the "oil inlet pipe" is only used to describe functions of the brake pipe from a function perspective, and does not limit the brake pipe to only serving as an oil inlet pipe.

The foregoing describes how to depressurize the wheel cylinders of the vehicle. The depressurization solution in this embodiment of this application may be further used to depressurize a wheel cylinder for a wheel. The following uses an example in which a wheel cylinder for the first wheel 25 is depressurized for description. It should be understood that a solution of depressurizing a wheel cylinder for another wheel in the vehicle is similar to a solution of depressurizing the wheel cylinder for the first wheel 25. For brevity, details are not described again.

In the hydraulic adjustment unit 300, the first isolation valve 12, the second isolation valve 13, the oil inlet valve 21 for the first wheel, the first reducing valve 10, the second reducing valve 11, and the fifth reducing valve 16 are in a closed state. The oil inlet valves 22, 23, and 24, the third reducing valve 14, the fourth reducing valve 15, the sixth reducing valve 17, the master cylinder booster valve 6, and the third isolation valve 5 that are for the other wheels 26, 27, and 28 are in an open state.

When a wheel cylinder 21 for the first wheel needs to be depressurized, pressure of brake fluid in the wheel cylinder 21 for the first wheel is higher than that of the brake fluid in the first fluid reservoir 29 and the second fluid reservoir 2. Therefore, based on a pressure difference between the pressure of the brake fluid in the wheel cylinder 21 for the first wheel and the pressure of the brake fluid in the fluid reservoirs, the brake fluid in the wheel cylinder 21 for the first wheel may flow to the first fluid reservoir 29 through the first oil return pipe 110 and the second oil return pipe 120.

The oil inlet valve 21 and the fifth reducing valve 16 for the first wheel are in a closed state. Therefore, the first oil return pipe 110 may be connected to an oil return pipe located between the wheel cylinder 21 for the first wheel and the second fluid reservoir 2. Based on the foregoing pressure difference, the brake fluid may flow from the wheel cylinder 21 for the first wheel to the second fluid reservoir 2. Then, because the second fluid reservoir 2 and the first fluid reservoir 29 are connected through the first oil return pipe section 111 of the first oil return pipe 110, based on the foregoing pressure difference, the brake fluid may continue to flow from the second fluid reservoir 2 to the first fluid reservoir 29 through the first oil return pipe section 111.

Because the first isolation valve 12, the second isolation valve 13, the first reducing valve 10, and the second reducing valve 11 are in a closed state, the brake fluid flowing out of the wheel cylinder 21 for the first wheel based on the pressure difference may further flow to the second oil return pipe 120 through the first oil inlet pipe 130 and the first reducing valve 10, and flow to the first fluid reservoir 29 through the second oil return pipe 120.

It should be noted that in a process of depressurizing the wheel cylinders of the vehicle, the first oil inlet pipe 130 serves as an oil return pipe. As described above, the "oil inlet pipe" is only used to describe functions of the brake pipe from a function perspective, and does not limit the brake pipe to only serving as an oil inlet pipe.

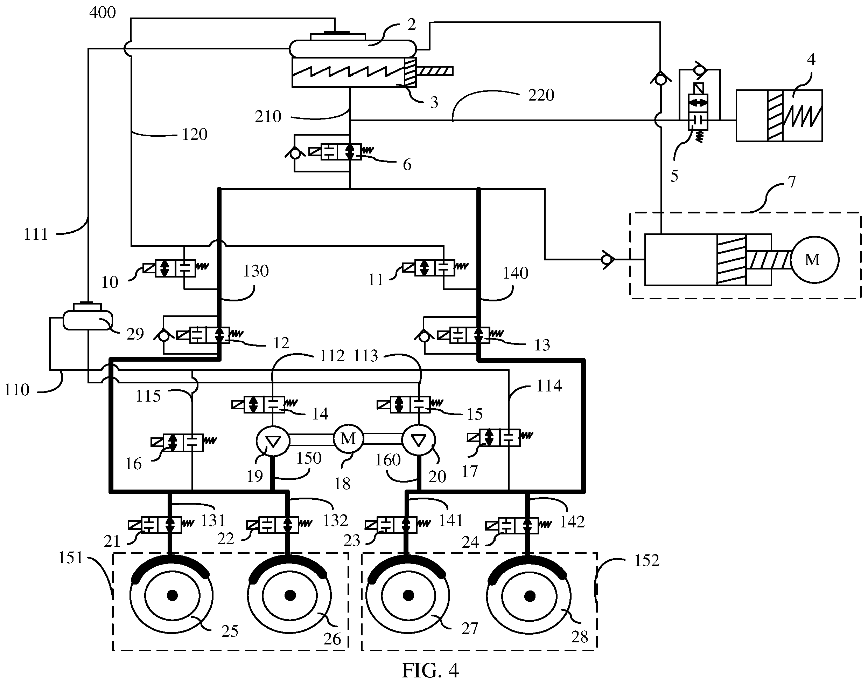

Redundant performance of the brake system is also a hot issue of the brake system. This embodiment of this application further provides a new hydraulic adjustment unit. A pressure providing apparatus 18 is added to the hydraulic adjustment unit, and the pressure providing apparatus 18 provides braking force to the wheel cylinders 151 and 152 of the vehicle through a third oil inlet pipe 150 and a fourth oil inlet pipe 160. A solution of providing braking force to the wheel cylinders 151 and 152 of the vehicle by the pressure providing apparatus 18 and a solution of providing braking force to the wheel cylinders 151 and 152 of the vehicle by the master cylinder 3 are based on mutually independent brake subsystems. When one of the brake subsystems is faulty, the other of the brake subsystems may provide braking force to the vehicle, which helps improve redundant performance of the brake system. Certainly, the foregoing two brake subsystems may also be in an operating state at the same time, to provide braking force to the vehicle, which helps improve braking efficiency of the brake system. The following describes a hydraulic adjustment unit 400 in an embodiment of this application with reference to FIG. 4.

FIG. 4 is a schematic diagram of the hydraulic adjustment unit 400 according to an embodiment of this application. It should be understood that a component in the hydraulic adjustment unit 400 and a component in the hydraulic adjustment unit 200 that implement same functions are numbered the same. For a specific operating mode, refer to the foregoing description. For brevity, details are not described herein again.

The hydraulic adjustment unit 400 shown in FIG. 4 includes a master cylinder 3 and a pressure providing apparatus 18.

The master cylinder 3 provides braking force to a first wheel 25 of a vehicle through a first oil inlet pipe branch 131 of a first oil inlet pipe 130, and the master cylinder 3 provides braking force to a second wheel 26 of the vehicle through a second oil inlet pipe branch 132 of the first oil inlet pipe 130.

The first oil inlet pipe 130 includes two branches: the first oil inlet pipe branch 131 and the second oil inlet pipe branch 132. A first pressure outlet port of the master cylinder 3 is connected to a pressure inlet port of the first oil inlet pipe branch 131, and the first pressure outlet port of the master cylinder 3 is connected to a pressure inlet port of the second oil inlet pipe branch 132. A pressure outlet port of the first oil inlet pipe branch 131 is connected to a pressure inlet port of a wheel cylinder for the first wheel 25, and a pressure outlet port of the second oil inlet pipe branch 132 is connected to a pressure inlet port of a wheel cylinder for the second wheel 26.

The master cylinder 3 provides braking force to a third wheel 27 of the vehicle through a third oil inlet pipe branch 141 of a second oil inlet pipe 140, and the master cylinder 3 provides braking force to a fourth wheel 28 of the vehicle through a fourth oil inlet pipe branch 142 of the second oil inlet pipe 140.

The second oil inlet pipe 140 includes two branches: the third oil inlet pipe branch 141 and the fourth oil inlet pipe branch 142. A second pressure outlet port of the master cylinder 3 is connected to a pressure inlet port of the third oil inlet pipe branch 141, and the second pressure outlet port is connected to a pressure inlet port of the fourth oil inlet pipe branch 142. A pressure outlet port of the third oil inlet pipe branch 141 is connected to a pressure inlet port of a wheel cylinder for the third wheel 27. A pressure outlet port of the fourth oil inlet pipe branch 142 is connected to a pressure inlet port of a wheel cylinder for the fourth wheel 28.

Optionally, the first pressure inlet port and a second pressure inlet port of the master cylinder 3 may be a same port, and the first pressure inlet port and the second pressure inlet port of the master cylinder 3 may be different ports. This is not limited in this embodiment of this application.

The pressure providing apparatus 18 provides braking force to the first wheel 25 and the second wheel 26 through a third oil inlet pipe 150, the first oil inlet pipe branch 131, and the second oil inlet pipe branch 132. The third oil inlet pipe 150 is connected to the first oil inlet pipe branch 131, and the third oil inlet pipe 150 is connected to the second oil inlet pipe branch 132.

It should be noted that there are a plurality of manners in which the pressure providing apparatus 18 provides the braking force to the first wheel 25 and the second wheel 26. This is not specifically limited in this embodiment of this application. For example, a pressure outlet port of the pressure providing apparatus 18 is connected to a pressure inlet port of the third oil inlet pipe 150, a pressure outlet port of the third oil inlet pipe 150 is connected to the pressure inlet port of the second oil inlet pipe branch 132, and the first oil inlet pipe branch 131 is connected to the second oil inlet pipe branch 132. Therefore, the pressure providing apparatus 18 may provide the braking force to the first wheel 25 and the second wheel 26 through the first oil inlet pipe branch 131 and the second oil inlet pipe branch 132 that are connected.

For another example, the pressure outlet port of the pressure providing apparatus 18 is connected to the pressure inlet port of the third oil inlet pipe 150, and the pressure outlet port of the third oil inlet pipe 150 is connected to the pressure inlet port of the first oil inlet pipe branch 131 and the pressure inlet port of the second oil inlet pipe branch 132. Correspondingly, the pressure providing apparatus 18 may provide the braking force to the first wheel 25 and the second wheel 26 through the first oil inlet pipe branch 131 and the second oil inlet pipe branch 132.

The pressure providing apparatus 18 provides the braking force to the third wheel 27 and the fourth wheel 28 through a fourth oil inlet pipe 160, the third oil inlet pipe branch 141, and the fourth oil inlet pipe branch 142. The fourth oil inlet pipe 160 is connected to the third oil inlet pipe branch 141, and the fourth oil inlet pipe 160 is connected to the fourth oil inlet pipe branch 142.

It should be noted that there are a plurality of manners in which the pressure providing apparatus 18 provides the braking force to the third wheel 27 and the fourth wheel 28. This is not specifically limited in this embodiment of this application. For example, the pressure outlet port of the pressure providing apparatus 18 is connected to a pressure inlet port of the fourth oil inlet pipe 160, a pressure outlet port of the fourth oil inlet pipe 160 is connected to the pressure inlet port of the third oil inlet pipe branch 141, and the third oil inlet pipe branch 141 is connected to the fourth oil inlet pipe branch 142. Therefore, the pressure providing apparatus 18 may provide the braking force to the third wheel 27 and the fourth wheel 28 through the fourth oil inlet pipe branch 142 and the third oil inlet pipe branch 141 that are connected.

For another example, a pressure outlet port of the pressure providing apparatus 18 is connected to the pressure inlet port of the fourth oil inlet pipe 160, and the pressure outlet port of the fourth oil inlet pipe 160 is connected to the pressure inlet port of the third oil inlet pipe branch 141 and the pressure inlet port of the fourth oil inlet pipe branch 142. Correspondingly, the pressure providing apparatus 18 may provide the braking force to the third wheel 27 and the fourth wheel 28 through the third oil inlet pipe branch 141 and the fourth oil inlet pipe branch 142.

Optionally, the pressure providing apparatus 18 is a motor. The motor drives a first plunger pump 19 to move, to feed brake fluid into the second oil inlet pipe branch 132. The motor drives a second plunger pump 20 to move, to feed brake fluid into the third oil inlet pipe branch 141.

Correspondingly, the second oil inlet pipe branch 132 is connected to the first oil inlet pipe branch 131. Therefore, the first plunger pump 19 may feed brake fluid into the first oil inlet pipe branch 131 through the second oil inlet pipe branch 132 and first oil inlet pipe branch 131 that are connected.

The third oil inlet pipe branch 141 is connected to the fourth oil inlet pipe branch 142. Therefore, the second plunger pump 20 may feed brake fluid into the fourth oil inlet pipe branch 142 through the third oil inlet pipe branch 141 and fourth oil inlet pipe branch 142 that are connected.

A pressure outlet port of the first plunger pump 19 may be connected to the pressure inlet port of the second oil inlet pipe branch 132. A pressure outlet port of the second plunger pump 20 may be connected to the pressure inlet port of the third oil inlet pipe branch 141.

Optionally, oil inlet pipes 130 and 140 that provide braking force to the master cylinder 3 and oil inlet pipes 150 and 160 that provide braking force to the pressure providing apparatus 18 may be understood as two groups of independent oil inlet pipes, which may independently provide braking force to the wheel cylinders 151 and 152 of the vehicle.

Generally, to simplify a deployment of the brake pipe, a pressure outlet port of the first brake pipe 1011 and a pressure outlet port of a third brake pipe 1013 are connected to the pressure inlet port of the first oil inlet pipe branch 131. Alternatively, the first brake pipe 1011 and the third brake pipe 1013 converge at the pressure inlet port of the first oil inlet pipe branch 131. The pressure outlet port of the first brake pipe 1011 and the pressure outlet port of the third brake pipe 1013 are connected to the pressure inlet port of the second oil inlet pipe branch 132. Alternatively, the first brake pipe 1011 and the third brake pipe 1013 converge at the pressure inlet port of the second oil inlet pipe branch 132.

Similarly, a pressure outlet port of the second brake pipe 1012 and a pressure outlet port of a fourth brake pipe 160 are connected to the pressure inlet port of the third oil inlet pipe branch 141. Alternatively, the second brake pipe 1012 and the fourth brake pipe 160 converge at the pressure inlet port of the third oil inlet pipe branch 141. The pressure outlet port of the second brake pipe 1012 and the pressure outlet port of the fourth brake pipe 160 are connected to the pressure inlet port of the fourth oil inlet pipe branch 142. Alternatively, the second brake pipe 1012 and the fourth brake pipe 160 converge at the pressure inlet port of the fourth oil inlet pipe branch 142.

In order that the oil inlet pipes 130 and 140 providing the braking force to the master cylinder 3 and the oil inlet pipes 150 and 160 providing the braking force to the pressure providing apparatus 18 operate independently and do not interfere with each other, isolation valves 12 and 13 may be disposed to block oil inlet pipes connected between the two brake subsystems.

That is, the first oil inlet pipe 130 is connected to the first oil inlet pipe branch 131 and the second oil inlet pipe branch 132 by using a first isolation valve 12. If the first isolation valve 12 is in an open state, brake fluid in the first oil inlet pipe 130 is blocked by the first isolation valve 12, and cannot flow into wheel cylinders for the first wheel 25 and the second wheel 26 through the first oil inlet pipe branch 131 and the second oil inlet pipe branch 132.

Because the first isolation valve 12 is disposed in the first oil inlet pipe 130, and is disposed before the pressure inlet ports of the third oil inlet pipe 150 and the first oil inlet pipe branch 131 and before the pressure inlet ports of the third oil inlet pipe 150 and the second oil inlet pipe branch 132, an operating state of the first isolation valve 12 does not affect flow of brake fluid in the third oil inlet pipe 150. No matter whether the first isolation valve 12 is in an open state or a closed state, the brake fluid in the third oil inlet pipe 150 may provide the braking force to the first wheel 25 and the second wheel 26 through the first oil inlet pipe branch 131 and the second oil inlet pipe branch 132.

The second oil inlet pipe 140 is connected to the third oil inlet pipe branch 141 and the fourth oil inlet pipe branch 142 by using a second isolation valve 13. If the second isolation valve 13 is in an open state, brake fluid in the second oil inlet pipe 140 is blocked by the first isolation valve 12, and cannot flow into the first wheel 25 and the second wheel 26 through the third oil inlet pipe branch 141 and the fourth oil inlet pipe branch 142.

Because the second isolation valve 13 is disposed in the second oil inlet pipe 140, and is disposed before the pressure inlet ports of the fourth oil inlet pipe 160 and the third oil inlet pipe branch 141 and before the pressure inlet ports of the fourth oil inlet pipe 160 and the fourth oil inlet pipe branch 142, an operating state of the second isolation valve 13 does not affect flow of brake fluid in the fourth oil inlet pipe 160. No matter whether the second isolation valve 13 is in an open state or a closed state, the brake fluid in the fourth oil inlet pipe 160 may provide the braking force to the third wheel 27 and the fourth wheel 28 through the third oil inlet pipe branch 141 and the fourth oil inlet pipe branch 142.

Generally, to implement a function of providing braking force to some wheels in the vehicle, oil inlet valves 21, 22, 23, and 24 may be respectively disposed on the first oil inlet pipe branch 131, the second oil inlet pipe branch 132, the third oil inlet pipe branch 141, and the fourth oil inlet pipe branch 142. The first oil inlet valve 21 is disposed on the first oil inlet pipe branch 131, to control whether braking force is provided to the first wheel 25. The second oil inlet valve 22 is disposed on the second oil inlet pipe branch 132, to control whether braking force is provided to the second wheel 26. The third oil inlet valve 23 is disposed on the third oil inlet pipe branch 141, to control whether braking force is provided to the third wheel 27. The fourth oil inlet valve 24 is disposed on the fourth oil inlet pipe branch 142, to control whether braking force is provided to the fourth wheel 28.

The hydraulic adjustment unit 400 shown in FIG. 4 further supports a high-speed pressurization mode in addition to the mechanical braking mode, the brake-by-wire mode, and the automatic driving mode described above. It should be noted that for the mechanical braking mode, the brake-by-wire mode, and the automatic driving mode, refer to related descriptions of the three modes in the hydraulic adjustment unit 200. For brevity, details are not described herein again.

In the foregoing high-speed pressurization mode, the pressure providing apparatus 18 serves as an auxiliary apparatus, to assist another pressure providing apparatus of the hydraulic adjustment unit in providing braking force to the vehicle together, which helps improve efficiency of providing braking force. Based on different pressure of the foregoing another pressure providing apparatus, the high-speed pressurization mode may be classified into two cases. Case 1: When the another pressure providing apparatus is a supercharging device 7, the pressure providing apparatus 18 assists the supercharging device 7 in providing braking force to the vehicle. Case 2: When the another pressure providing apparatus is the master cylinder 3, the pressure providing apparatus 18 assists the master cylinder 3 in providing braking force to the vehicle.

Case 1: The pressure providing apparatus 18 assists the supercharging device 7 in providing the braking force to the vehicle. In this mode, the pressure providing apparatus 18 and the supercharging device 7 are in an operating state at the same time.

A controller determines, based on the required braking force, pressure (or braking force) of brake fluid that the pressure providing apparatus 18 needs to provide for the vehicle, and pressure (or braking force) of brake fluid that the supercharging device 7 needs to provide for the vehicle. The controller separately notifies the pressure providing apparatus 18 of the pressure (or braking force) of the brake fluid that needs to be provided for the vehicle and notifies the supercharging device 7 of the pressure (or braking force) of the brake fluid that needs to be provided for the vehicle.

The required braking force may be determined based on an input of a driver, or may be determined based on road condition information of the vehicle. This is not limited in this embodiment of this application.

In Case 2, the pressure providing apparatus 18 assists the master cylinder 3 in providing the braking force to the vehicle. In this mode, the pressure providing apparatus 18 and the master cylinder 3 are in an operating state at the same time.

The controller determines, based on the required braking force, the pressure (or braking force) of the brake fluid that needs to be provided for the vehicle by the pressure providing apparatus 18. The controller notifies the pressure providing apparatus 18 of the pressure (or braking force) of the brake fluid that needs to be provided for the vehicle and the pressure (or braking force) of the brake fluid that needs to be provided for the vehicle by the supercharging device 7.

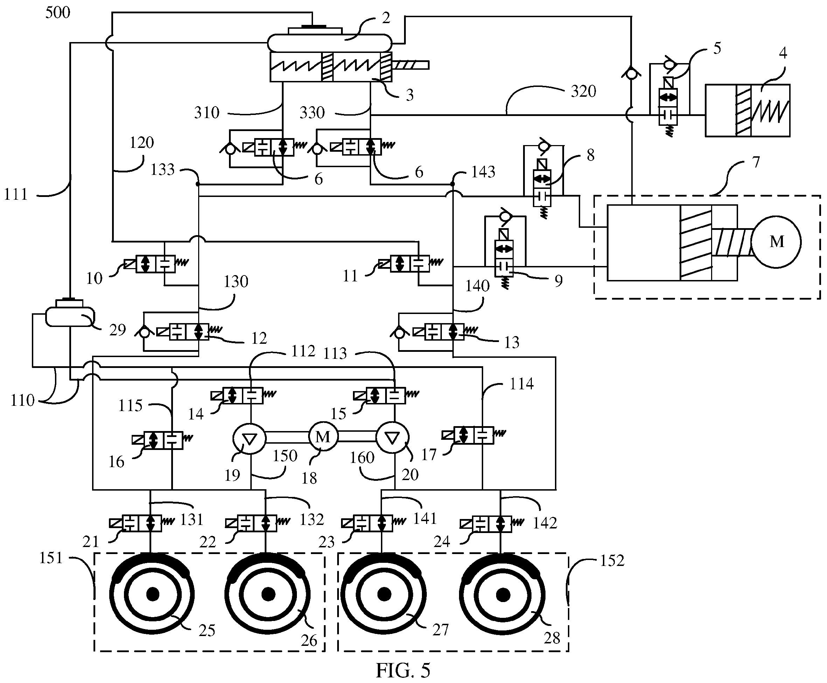

A depressurizing solution of the newly added pressure providing apparatus 18 provided in this embodiment of this application may be applied to a plurality of hydraulic adjustment units. The hydraulic adjustment unit 400 shows only one hydraulic adjustment unit 400. The following describes, with reference to FIG. 5, another hydraulic adjustment unit to which the depressurizing solution of this application is applicable.

FIG. 5 is a schematic diagram of a hydraulic adjustment unit 500 according to an embodiment of this application. A component in the hydraulic adjustment unit 500 shown in FIG. 5 and a component in the hydraulic adjustment unit 300 that implement same functions are numbered the same. For operating principles of components with a same number, refer to related descriptions in the foregoing hydraulic adjustment unit 300. For brevity, details are not described herein again.

The hydraulic adjustment system 500 shown in FIG. 5 further supports a high-speed pressurization mode in addition to the mechanical braking mode, the brake-by-wire mode, and the automatic driving mode in the hydraulic adjustment unit 500 described above. It should be noted that for the mechanical braking mode, the brake-by-wire mode, and the automatic driving mode, refer to related descriptions of the three modes in the hydraulic adjustment unit 300. For brevity, details are not described herein again.

In the foregoing high-speed pressurization mode, the pressure providing apparatus 18 serves as an auxiliary apparatus, to assist another pressure providing apparatus of the hydraulic adjustment unit in providing braking force to the vehicle together, which helps improve efficiency of providing braking force. Based on different pressure of the foregoing another pressure providing apparatus, the high-speed pressurization mode may be classified into two cases. Case 1: When the another pressure providing apparatus is a supercharging device 7, the pressure providing apparatus 18 assists the supercharging device 7 in providing braking force to the vehicle. Case 2: When the another pressure providing apparatus is a master cylinder 3, the pressure providing apparatus 18 assists the master cylinder 3 in providing braking force to the vehicle.

Case 1: The pressure providing apparatus 18 assists the supercharging device 7 in providing the braking force to the vehicle. In this mode, the pressure providing apparatus 18 and the pressurizing device 7 are in an operating state at the same time.

A controller determines, based on the required braking force, pressure (or braking force) of brake fluid that needs to be provided for the vehicle by the pressure providing apparatus 18, and pressure (or braking force) of brake fluid that needs to be provided for the vehicle by the supercharging device 7. The controller separately notifies the pressure providing apparatus 18 of the pressure (or braking force) of the brake fluid that needs to be provided for the vehicle and notifies the supercharging device 7 of the pressure (or braking force) of the brake fluid that needs to be provided for the vehicle.

The required braking force may be determined based on an input of a driver, or may be determined based on road condition information of the vehicle. This is not limited in this embodiment of this application.

In Case 2, the pressure providing apparatus 18 assists the master cylinder 3 in providing the braking force to the vehicle. In this mode, the pressure providing apparatus 18 and the master cylinder 3 are in an operating state at the same time.

The controller determines, based on the required braking force, the pressure (or braking force) of the brake fluid that needs to be provided for the vehicle by the pressure providing apparatus 18. The controller notifies the pressure providing apparatus 18 of the pressure (or braking force) of the brake fluid that needs to be provided for the vehicle and the pressure (or braking force) of the brake fluid that needs to be provided for the vehicle by the supercharging device 7.

It should be noted that Case 1 in the hydraulic adjustment system 500 and a hydraulic adjustment system 600 may be understood as a combination of the high-speed pressurization mode and the brake-by-wire mode. Case 2 in the hydraulic adjustment system 500 and the hydraulic adjustment system 600 may be understood as a combination of the high-speed pressurization mode and the mechanical braking mode.

Optionally, in addition to the foregoing high-speed pressurization mode, a control subsystem in which the pressure providing apparatus 18 is located may further implement a redundant braking mode. That is, after the supercharging device 7 is faulty, the pressure providing apparatus 18 replaces the supercharging device 7 to assist the brake system in entering the brake-by-wire mode or the automatic driving mode. A specific control process is described below.

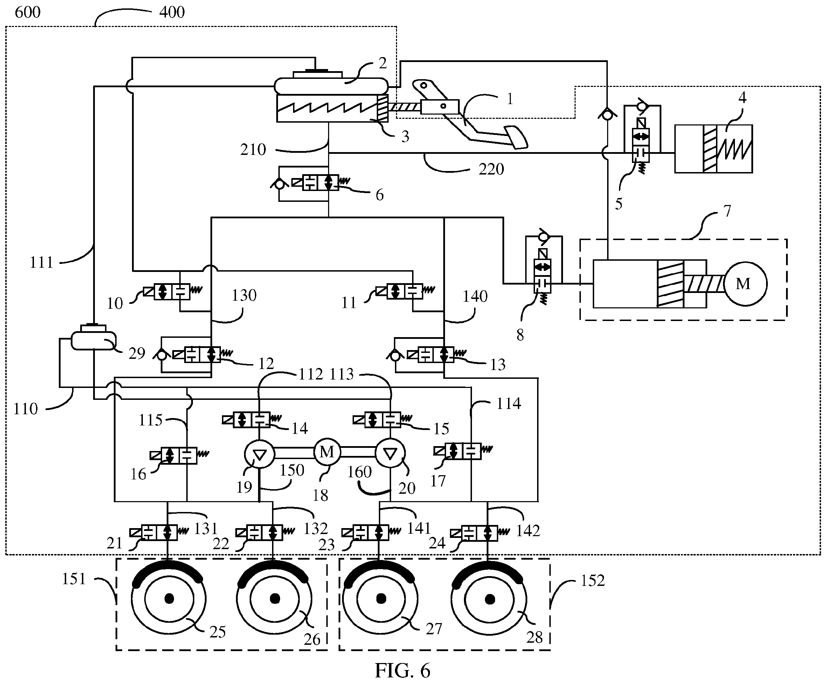

The foregoing describes the hydraulic adjustment unit in embodiments of this application with reference to FIG. 2 to FIG. 5. The following describes a brake system in the embodiments of this application with reference to FIG. 6 to FIG. 28. It should be understood that the brake system may include any hydraulic adjustment unit described above. For ease of understanding, the following uses a brake system including the hydraulic adjustment unit 400 or the hydraulic adjustment unit 500 as an example for description.

FIG. 6 is a schematic diagram of a brake system 600 according to an embodiment of this application. The brake system 600 includes the hydraulic adjustment unit 400, and wheel cylinders 151 and 152 of a vehicle. It should be understood that a component in the brake system 600 and a component in the hydraulic adjustment unit 400 that implement same functions are numbered the same. For brevity, details are not described herein again.

A first oil return pipe 110 is connected to the wheel cylinders 151 and 152 of the vehicle. The first oil return pipe 110 is configured to deliver brake fluid in the wheel cylinders 151 and 152 of the vehicle to a first fluid reservoir 29, to depressurize wheels of the vehicle.

That the first oil return pipe 110 is connected to the wheel cylinders 151 and 152 of the vehicle may be understood as that a pressure inlet port of the first oil return pipe 110 is connected to pressure outlet ports of the wheel cylinders 151 and 152.

The wheel cylinders of the vehicle may be understood as a wheel cylinder in the vehicle, for example, a wheel cylinder for a first wheel. Alternatively, the wheel cylinders of the vehicle may be understood as wheel cylinders for all wheels in the vehicle.

Optionally, when the wheel cylinders 151 and 152 need to be depressurized, pressure of the brake fluid in the wheel cylinders 151 and 152 is higher than that of brake fluid in the fluid reservoir 2. In this way, a pressure difference between the pressure of the brake fluid in the wheel cylinders 151 and 152 and the pressure of the brake fluid in the fluid reservoir 2 may be utilized, to transfer the pressure of the brake fluid in the wheel cylinders 151 and 152 to the second fluid reservoir 2 through the first oil return pipe 110.

A second oil return pipe 120 is connected to oil inlet pipes 130 and 140 of the brake system. The second oil return pipe 120 is configured to deliver the brake fluid in the wheel cylinders 151 and 152 of the vehicle to the second fluid reservoir 2 through the oil inlet pipes 130 and 140 of the brake system, to depressurize the wheels of the vehicle.

That the second oil return pipe 120 is connected to the oil inlet pipes 130 and 140 of the brake system may be understood as that the second oil return pipe 120 is connected to the wheel cylinders 151 and 152 through the oil inlet pipes 130 and 140.

The oil inlet pipes 130 and 140 are connected to the wheel cylinders 151 and 152, and are configured to feed brake fluid into the wheel cylinders 151 and 152, to provide braking force to the wheels of the vehicle. When the wheel cylinders 151 and 152 need to be depressurized, the foregoing oil inlet pipes 130 and 140 may be used as oil return pipes, to deliver the brake fluid in the wheel cylinders 151 and 152 to a pressure inlet port of the second oil return pipe 120, and deliver the brake fluid to the fluid reservoir 2 through the second oil return pipe 120.

Optionally, the oil inlet pipes 130 and 140 may include a first oil inlet pipe 130 and a second oil inlet pipe 140. The first oil inlet pipe 130 is configured to feed brake fluid into a wheel cylinder 151 for a first group of wheels, to provide braking force to the first group of wheels. The second oil inlet pipe 140 is configured to feed brake fluid into a wheel cylinder 152 for a second group of wheels, to provide braking force to the second group of wheels.

First group of wheels 25 and 26 are different from second group of wheels 27 and 28. For example, the first group of wheels 25 and 26 may include a right front wheel of the vehicle and a left front wheel of the vehicle. Correspondingly, the second group of wheels 27 and 28 may include a left rear wheel of the vehicle and a right rear wheel of the vehicle. In this case, the brake system is arranged in an H-shape. For another example, the first group of wheels 25 and 26 may include the right front wheel of the vehicle and the left rear wheel of the vehicle. Correspondingly, the second group of wheels 27 and 28 may include the right rear wheel of the vehicle and the left front wheel of the vehicle. In this case, the brake system is arranged in an X-shape.

As described above, when the brake system implements pressurization and depressurization functions, functions of the oil inlet pipes 130 and 140 are different. In order that the oil inlet pipes 130 and 140 implement a function of pressurizing or depressurizing the wheel cylinders, the oil inlet pipes 130 and 140 may be connected to the second oil return pipe 120 by using reducing valves 10 and 11. In this way, when the reducing valves 10 and 11 are in an open state, the oil inlet pipes 130 and 140 are disconnected from the second oil return pipe 120, and the brake system may provide braking force to the wheel cylinders 151 and 152 of the vehicle through the oil inlet pipes 130 and 140. When the reducing valves 10 and 11 are in a closed state, the oil inlet pipes 130 and 140 are connected to the second oil return pipe 120, and the brake system may depressurize the wheel cylinders 151 and 152 of the vehicle through the oil inlet pipes 130 and 140.

To be specific, the oil inlet pipes of the brake system include the first oil inlet pipe 130 and the second oil inlet pipe 140. The second oil return pipe 120 is connected to the first oil inlet pipe 130 by using the first reducing valve 10. If the first reducing valve 10 is in a closed state, the second oil return pipe 120 is connected to the first oil inlet pipe 130. If the first reducing valve 10 is in an open state, the second oil return pipe 120 is disconnected from the first oil inlet pipe 130. The second oil return pipe 120 is connected to the second oil inlet pipe 140 by using the second reducing valve 11. If the second reducing valve 11 is in a closed state, the second oil return pipe 120 is connected to the second oil inlet pipe 140. If the second reducing valve 11 is in an open state, the second oil return pipe 120 is disconnected from the second oil inlet pipe 140.

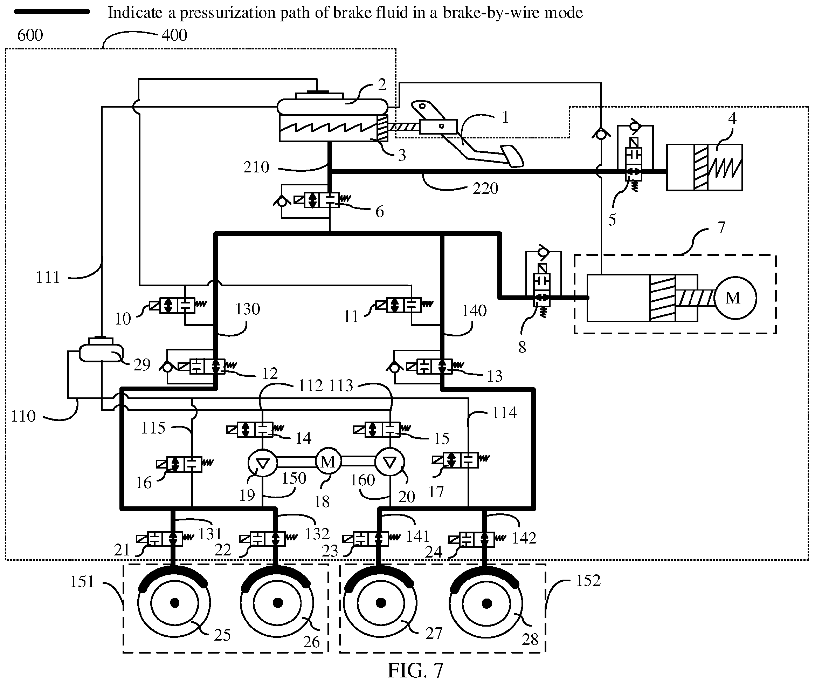

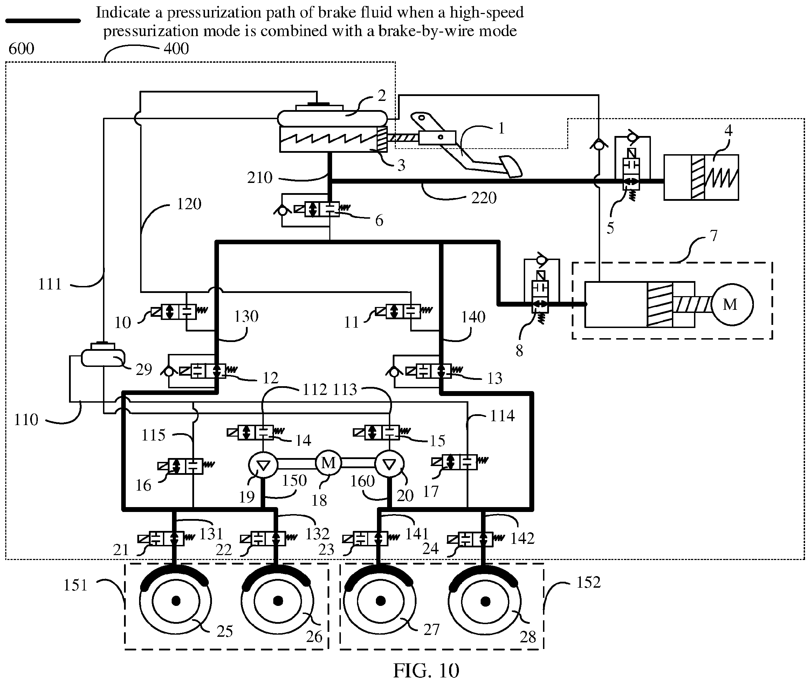

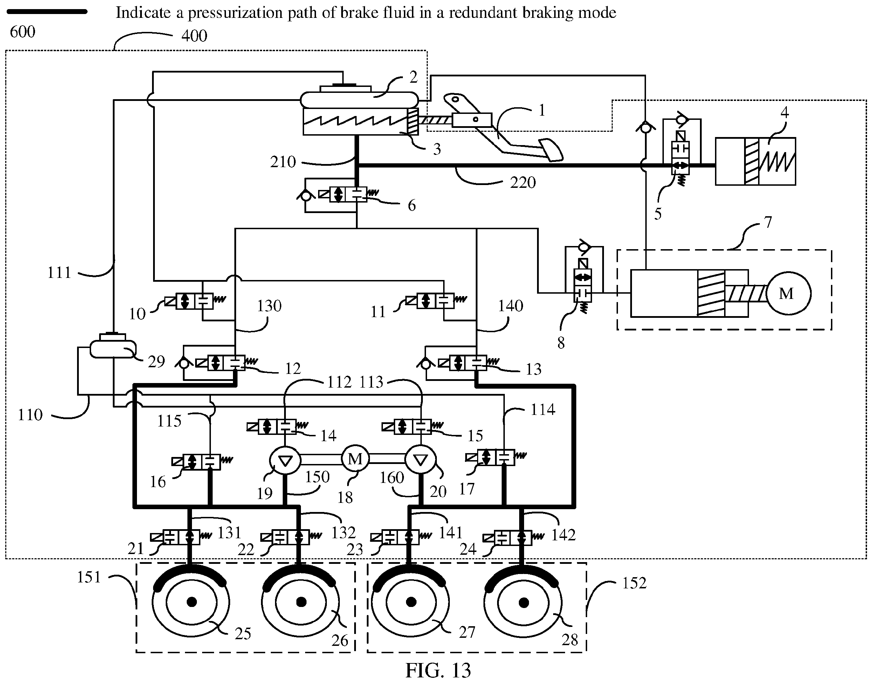

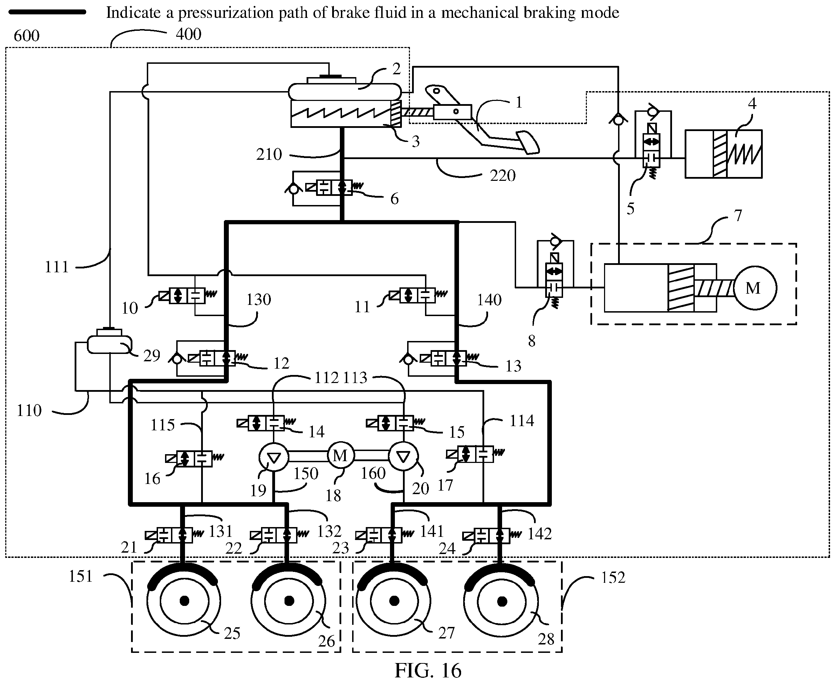

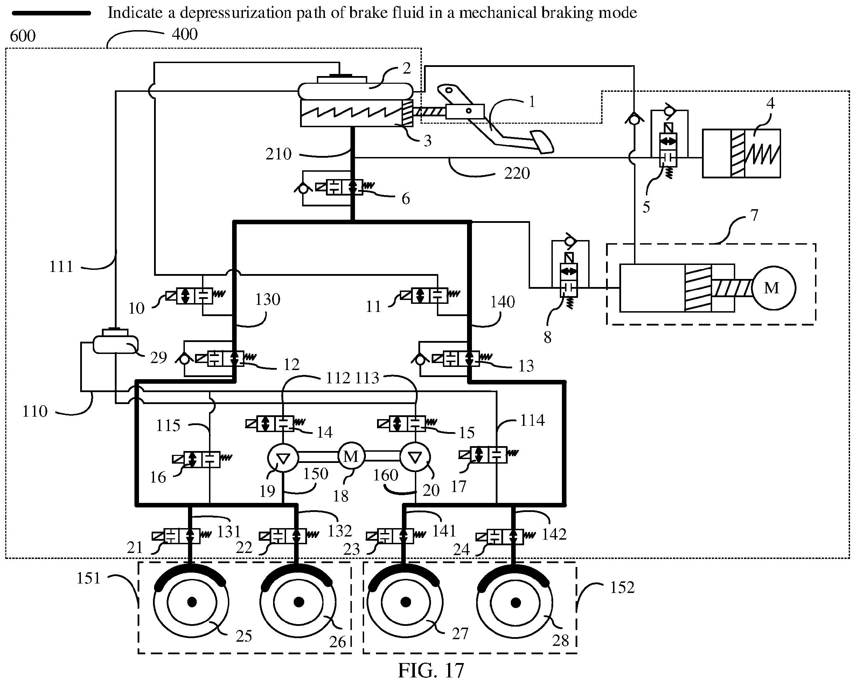

As described above, the hydraulic adjustment unit 400 of the brake system 600 supports a plurality of operating modes. Correspondingly, the brake system 600 also supports a plurality of operating modes. The following describes an operating process of the brake system 600 with reference to FIG. 7 to FIG. 17 and by using a brake-by-wire-mode, a combination of a high-speed pressurization mode and the brake-by-wire-mode, and a redundant braking mode as an example. FIG. 7 to FIG. 9 describe a pressurization process, a pressure preservation process, and a depressurization process of brake fluid in the brake-by-wire mode. FIG. 10 to FIG. 12 describe a pressurization process, a pressure preservation process, and a depressurization process of brake fluid when the high-speed pressurization mode is combined with the brake-by-wire mode. FIG. 13 to FIG. 15 describe a pressurization process, a pressure preservation process, and a depressurization process of brake fluid in the redundant braking mode. FIG. 16 and FIG. 17 describe a pressurization process and a depressurization process of brake fluid in the mechanical braking mode.

FIG. 7 is a schematic diagram of a pressurization path of brake fluid in the brake system 600 according to an embodiment of this application. The brake system 600 shown in FIG. 7 operates in the brake-by-wire mode. In the brake-by-wire mode, a first isolation valve 12, a second isolation valve 13, oil inlet valves 21, 22, 23, and 24, a supercharging device booster valve 8, and a third isolation valve 5 are in a closed state. A master cylinder booster valve 6, the first reducing valve 10, the second reducing valve 11, a third reducing valve 14, a fourth reducing valve 15, a fifth reducing valve 16, and a sixth reducing valve 17 are in an open state.

When a driver steps on a brake pedal 1, a master cylinder 3 feeds brake fluid into a brake pipe 210. The brake pipe 210 is configured to connect an oil outlet port of the master cylinder to brake pipes of the first oil inlet pipe 130 and the second oil inlet pipe 140. Because the master cylinder booster valve 6 is in an open state, the brake fluid fed into the brake pipe 210 is blocked by the master cylinder booster valve 6, and flows to a pedal feedback simulator 4 through a brake pipe 220 and the third isolation valve 5.

A controller controls, based on the required braking force entered by the driver, a supercharging device 7 to feed brake fluid in a hydraulic cylinder into the first oil inlet pipe 130 and the second oil inlet pipe 140. The brake fluid is fed into the wheel cylinder 151 for the first group of wheels through the first oil inlet pipe 130, and fed into the wheel cylinder 152 for the second group of wheels through the second oil inlet pipe 140.

It should be noted that there are many manners in which the controller obtains the required braking force entered by the driver. This is not specifically limited in this embodiment of this application. For example, the controller may obtain, by using a pedal stroke sensor (not shown in the figure) disposed on the master cylinder 3, a pedal stroke generated by a brake pedal in the master cylinder when the driver steps on the pedal. The controller determines the required braking force based on the pedal stroke and a correspondence between the pedal stroke and the required braking force. For another example, a pressure sensor (not shown in the figure) may be disposed on the brake pipe 210. The pressure sensor is configured to detect pressure of the brake fluid in the brake pipe 210. In this way, the controller may determine the required braking force based on the pressure of the brake fluid in the brake pipe 210 and a correspondence between the pressure of the brake fluid and the required braking force.

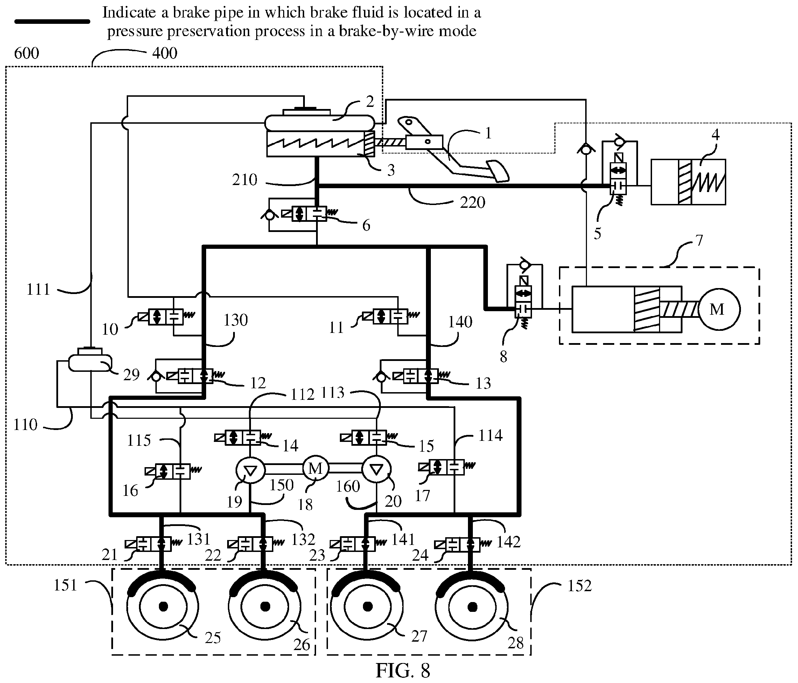

After the brake system 600 completes a pressurization process, the brake system may enter a pressure preservation process in the brake-by-wire mode. In this case, the supercharging device booster valve 8 only needs to be controlled to be in an open state, and states of other control valves in the brake system 600 remain unchanged. In addition, it is also necessary to control the supercharging device 7 to stop providing pressure to the brake system. FIG. 8 shows a brake pipe in which brake fluid is located in the pressure preservation process in the brake-by-wire mode.

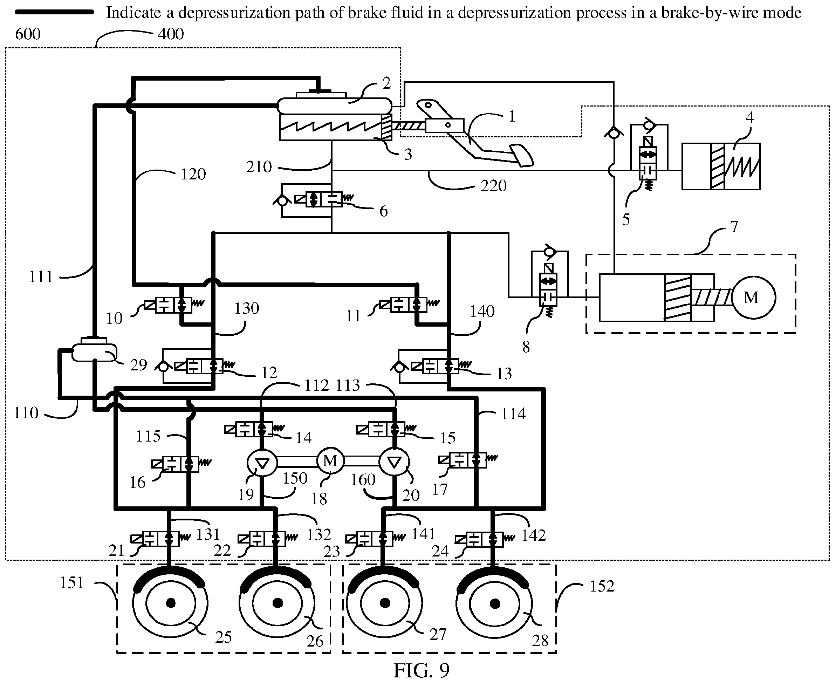

When the brake system 600 needs to enter a depressurization process from a pressure preservation process, only the first reducing valve 10 and the second reducing valve 11 need to be controlled to be in a closed state, and operating states of other control valves in the brake system 600 may remain unchanged. In this case, brake fluid in the brake system 600 may flow to the second fluid reservoir 2 through the second oil return pipe 120. Optionally, if the depressurization process needs to be accelerated, reducing valves 14, 15, 16, and 17 may also be controlled to be in a closed state. In this case, the brake fluid in the wheel cylinders 151 and 152 may flow to the first fluid reservoir 29 through the first oil return pipe 110. FIG. 9 shows a depressurization path of brake fluid in the depressurization process.

FIG. 10 is a schematic diagram of a pressurization path of brake fluid when the high-speed pressurization mode is combined with the brake-by-wire mode according to an embodiment of this application. In a case in which the high-speed pressurization mode is combined with the brake-by-wire mode, the first isolation valve 12, the second isolation valve 13, the oil inlet valves 21, 22, 23, and 24, the supercharging device booster valve 8, and the third isolation valve 5 are in a closed state. The master cylinder booster valve 6, the first reducing valve 10, the second reducing valve 11, the third reducing valve 14, the fourth reducing valve 15, the fifth reducing valve 16, and the sixth reducing valve 17 are in an open state.

When a driver steps on the brake pedal 1, the master cylinder 3 feeds brake fluid into the brake pipe 210. The brake pipe 210 is configured to connect an oil outlet port of the master cylinder to brake pipes of the first oil inlet pipe 130 and the second oil inlet pipe 140. Because the master cylinder booster valve 6 is in an open state, the brake fluid fed into the brake pipe 210 is blocked by the master cylinder booster valve 6, and flows to the pedal feedback simulator 4 through the brake pipe 220 and the third isolation valve 5.

The controller determines, based on the required braking force entered by the driver, braking force that needs to be provided by the supercharging device 7 and the pressure providing apparatus 18. Then the controller controls, based on the braking force that needs to be provided by the supercharging device 7, the supercharging device 7 to feed brake fluid in a hydraulic cylinder into the first oil inlet pipe 130 and the second oil inlet pipe 140. The brake fluid is fed into the wheel cylinder 151 for the first group of wheels through the first oil inlet pipe 130, and fed into the wheel cylinder 152 for the second group of wheels through the second oil inlet pipe 140.

In addition, based on the braking force that needs to be provided by the pressure providing apparatus 18, the controller controls the pressure providing apparatus 18 to feed brake fluid into a third oil inlet pipe 150 by using a plunger pump 19. The brake fluid in the third oil inlet pipe 150 may provide the braking force to the first wheel 25 and the second wheel 26 through the first oil inlet pipe branch 131 and the second oil inlet pipe branch 132. Correspondingly, the controller controls the pressure providing apparatus 18 to feed brake fluid into a fourth oil inlet pipe 160 by using a plunger pump 20. The brake fluid in the fourth oil inlet pipe 160 may provide the braking force to the third wheel 27 and the fourth wheel 28 through the third oil inlet pipe branch 141 and the fourth oil inlet pipe branch 142.

It should be noted that there are many manners in which the controller obtains the required braking force entered by the driver. This is not specifically limited in this embodiment of this application. For example, the controller may obtain, by using a pedal stroke sensor (not shown in the figure) disposed on the master cylinder 3, a pedal stroke generated by a brake pedal in the master cylinder when the driver steps on the pedal. The controller determines the required braking force based on the pedal stroke and a correspondence between the pedal stroke and the required braking force. For another example, a pressure sensor (not shown in the figure) may be disposed on the brake pipe 210. The pressure sensor is configured to detect pressure of the brake fluid in the brake pipe 210. In this way, the controller may determine the required braking force based on the pressure of the brake fluid in the brake pipe 210 and a correspondence between the pressure of the brake fluid and the required braking force.

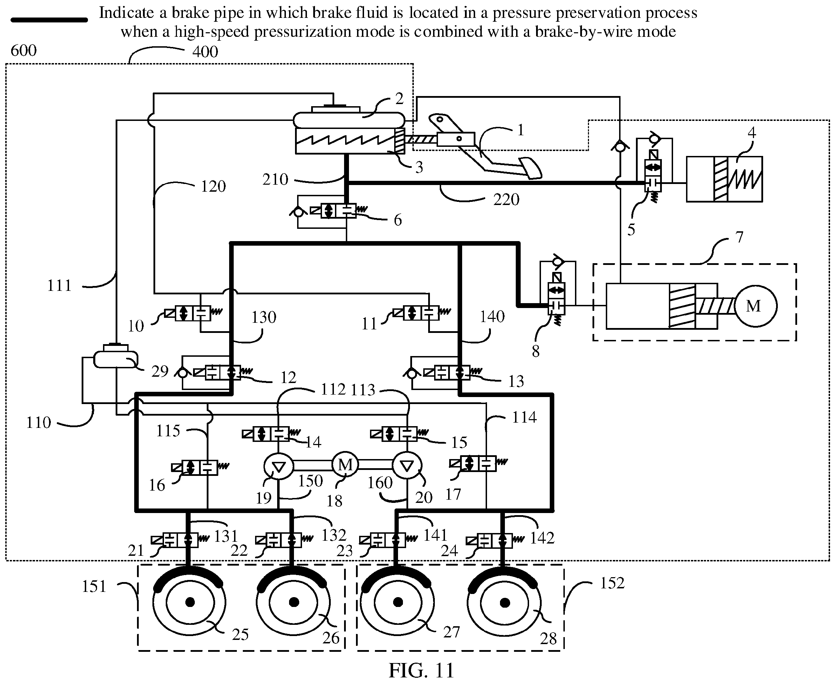

After the brake system 600 completes a pressurization process, the brake system may enter a pressure preservation process in which the high-speed pressurization mode is combined with the brake-by-wire mode. In this case, the supercharging device booster valve 8 only needs to be controlled to be in an open state, and states of other control valves in the brake system 600 remain unchanged. In addition, it is also necessary to control the pressure providing apparatus 18 and the supercharging device 7 to stop providing pressure to the brake system. When the high-speed pressurization mode is combined with the brake-by-wire mode, a brake pipe in which brake fluid is located in the pressure preservation process is shown in FIG. 11.

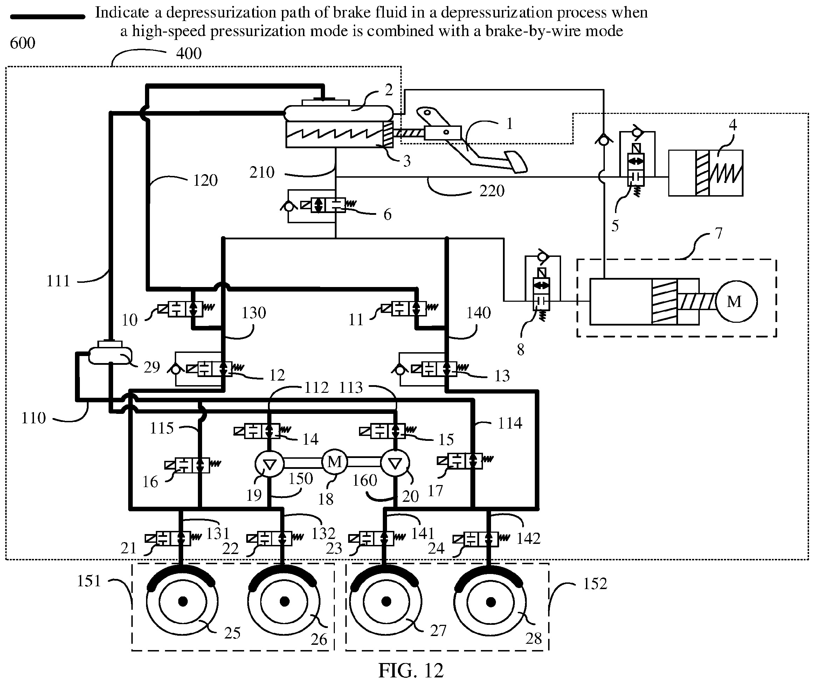

When the brake system 600 needs to enter a depressurization process from a pressure preservation process, only the first reducing valve 10 and the second reducing valve 11 need to be controlled to be in a closed state, and operating states of other control valves in the brake system 600 may remain unchanged. In this case, brake fluid in the brake system 600 may flow to the second fluid reservoir 2 through the second oil return pipe 120. Optionally, if the depressurization process needs to be accelerated, the reducing valves 14, 15, 16, and 17 may also be controlled to be in a closed state. In this case, the brake fluid in the wheel cylinders 151 and 152 may flow to the first fluid reservoir 29 through the first oil return pipe 110. FIG. 12 shows a depressurization path of brake fluid in the depressurization process.

FIG. 13 is a schematic diagram of a pressurization path of brake fluid in the brake system 600 according to an embodiment of this application. The brake system 600 shown in FIG. 13 operates in the redundant braking mode. If the supercharging device 7 is faulty, the brake system 600 enters the redundant braking mode. In this case, the oil inlet valves 21, 22, 23, and 24, the supercharging device booster valve 8, and the third isolation valve 5 are in a closed state. The first isolation valve 12, the second isolation valve 13, the master cylinder booster valve 6, the first reducing valve 10, the second reducing valve 11, the third reducing valve 14, the fourth reducing valve 15, the fifth reducing valve 16, and the sixth reducing valve 17 are in an open state.

When a driver steps on the brake pedal 1, the master cylinder 3 feeds brake fluid into the brake pipe 210. The brake pipe 210 is configured to connect an oil outlet port of the master cylinder to brake pipes of the first oil inlet pipe 130 and the second oil inlet pipe 140. Because the master cylinder booster valve 6 is in an open state, the brake fluid fed into the brake pipe 210 is blocked by the master cylinder booster valve 6, and flows to the pedal feedback simulator 4 through the brake pipe 220 and the third isolation valve 5.

A controller controls, based on the required braking force entered by the driver, the pressure providing apparatus 18 to feed brake fluid in a hydraulic cylinder into the third oil inlet pipe 150 and the fourth oil inlet pipe 160. The brake fluid is fed into the wheel cylinder 151 for the first group of wheels through the third oil inlet pipe 150, and fed into the wheel cylinder 152 for the second group of wheels through the fourth oil inlet pipe 160.

It should be noted that there are many manners in which the controller obtains the required braking force entered by the driver. This is not specifically limited in this embodiment of this application. For example, the controller may obtain, by using a pedal stroke sensor (not shown in the figure) disposed on the master cylinder 3, a pedal stroke generated by a brake pedal in the master cylinder when the driver steps on the pedal. The controller determines the required braking force based on the pedal stroke and a correspondence between the pedal stroke and the required braking force. For another example, a pressure sensor (not shown in the figure) may be disposed on the brake pipe 210. The pressure sensor is configured to detect pressure of the brake fluid in the brake pipe 210. In this way, the controller may determine the required braking force based on the pressure of the brake fluid in the brake pipe 210 and a correspondence between the pressure of the brake fluid and the required braking force.

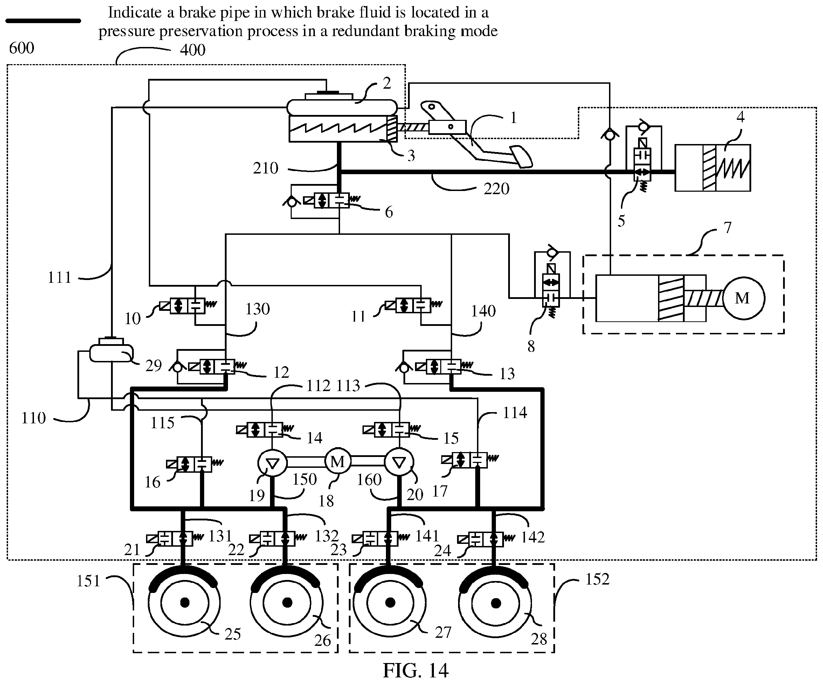

After the brake system 600 completes a pressurization process, the brake system may enter a pressure preservation process in the redundant braking mode. In this case, the pressure providing apparatus 18 only needs to be controlled to stop providing pressure for the brake system. FIG. 14 shows a brake pipe in which brake fluid is located in the pressure preservation process in the redundant braking mode.

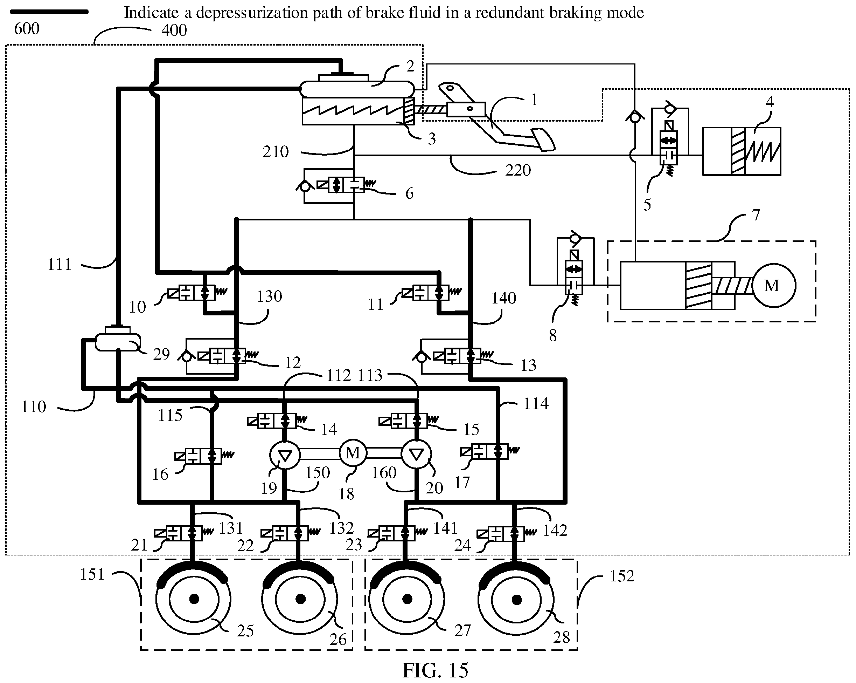

When the brake system 600 needs to enter a depressurization process from the pressure preservation process, only the first isolation valve 12, the second isolation valve 13, the first reducing valve 10, and the second reducing valve 11 need to be controlled to be in a closed state, and operating states of other control valves in the brake system 600 may remain unchanged. In this case, brake fluid in the brake system 600 may flow to the second fluid reservoir 2 through the second oil return pipe 120. Optionally, if the depressurization process needs to be accelerated, the reducing valves 14, 15, 16, and 17 may also be controlled to be in a closed state. In this case, the brake fluid in the wheel cylinders 151 and 152 may flow to the first fluid reservoir 29 through the first oil return pipe 110. FIG. 15 shows a depressurization path of brake fluid in the depressurization process.

It should be noted that the redundant braking mode described in FIG. 13 to FIG. 15 may further not require participation of a driver. To be specific, in the automatic driving mode, after the supercharging device 7 is faulty, the pressure providing apparatus may replace the supercharging device 7 to provide braking force for the brake system. A pressurization process, a pressure preservation process, and a depressurization process are similar to paths described in FIG. 13 to FIG. 15. For brevity, details are not described below.

FIG. 16 is a schematic diagram of a pressurization path of brake fluid in the brake system 600 in the mechanical braking mode according to an embodiment of this application. In the mechanical braking mode, the master cylinder booster valve 6, the first isolation valve 12, the second isolation valve 13, and the oil inlet valves 21, 22, 23, and 24 are in a closed state. The first reducing valve 10, the second reducing valve 11, the third reducing valve 14, the fourth reducing valve 15, the fifth reducing valve 16, the sixth reducing valve 17, and the third isolation valve 5 are in an open state. When a driver steps on the brake pedal 1, the master cylinder 3 feeds brake fluid into the first oil inlet pipe 130 and the second oil inlet pipe 140. The brake fluid flows to the wheel cylinders 151 and 152 of the vehicle through the first oil inlet pipe 130 and the second oil inlet pipe 140.

When the brake system 600 needs to enter a depressurization process, the driver reduces force of stepping on the braking pedal 1. In this case, the master cylinder 3 sucks the brake fluid in the wheel cylinders 151 and 152 into the master cylinder 3 through the first oil inlet pipe 130 and the second oil inlet pipe 140 under the action of the return spring. Excess fluid may enter the second fluid reservoir 2, to depressurize the brake system. FIG. 17 shows a depressurization path of brake fluid in the brake system 600 in the mechanical braking mode.

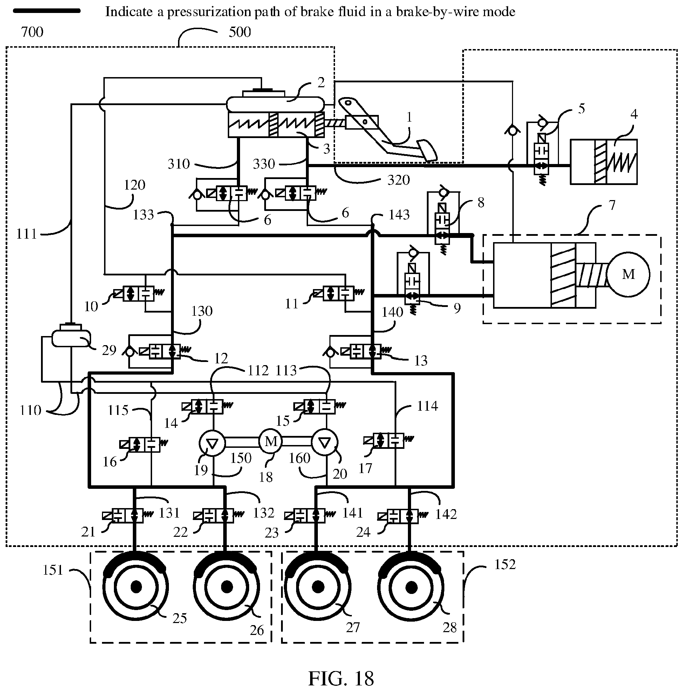

The foregoing describes the brake system 600 for the hydraulic adjustment unit 400 and operating principles of the brake system 600 in different operating modes with reference to FIG. 7 to FIG. 17. The following describes a brake system 700 for a hydraulic adjustment unit 500 and operating principles of the brake system 700 in different operating modes with reference to FIG. 18 to FIG. 28. It should be understood that a component in the brake system 700 and a component in the hydraulic adjustment unit 500 that implement same functions are numbered the same. For brevity, details are not specifically described below.

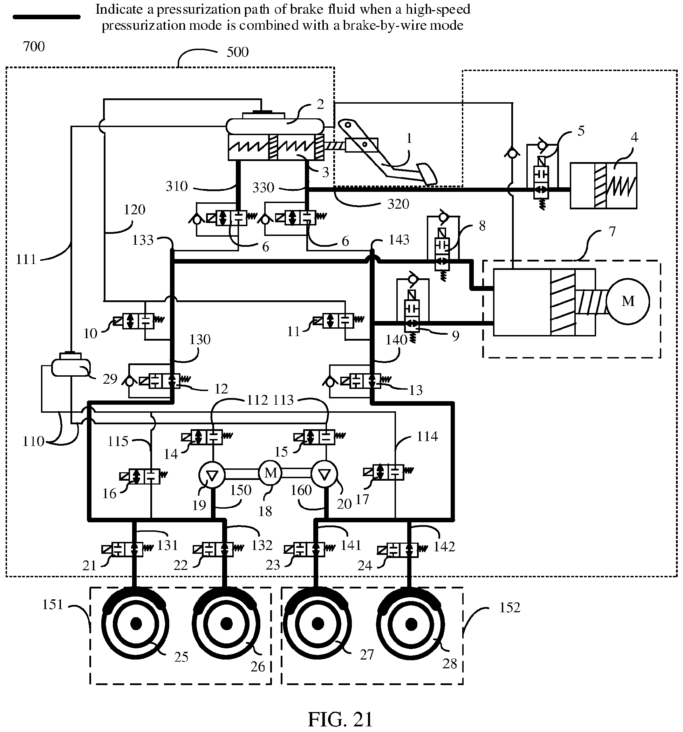

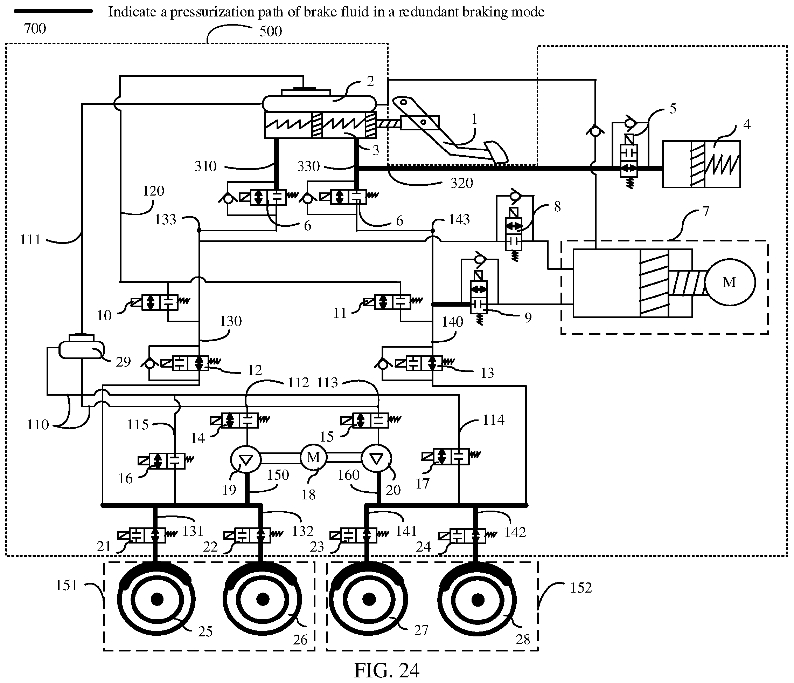

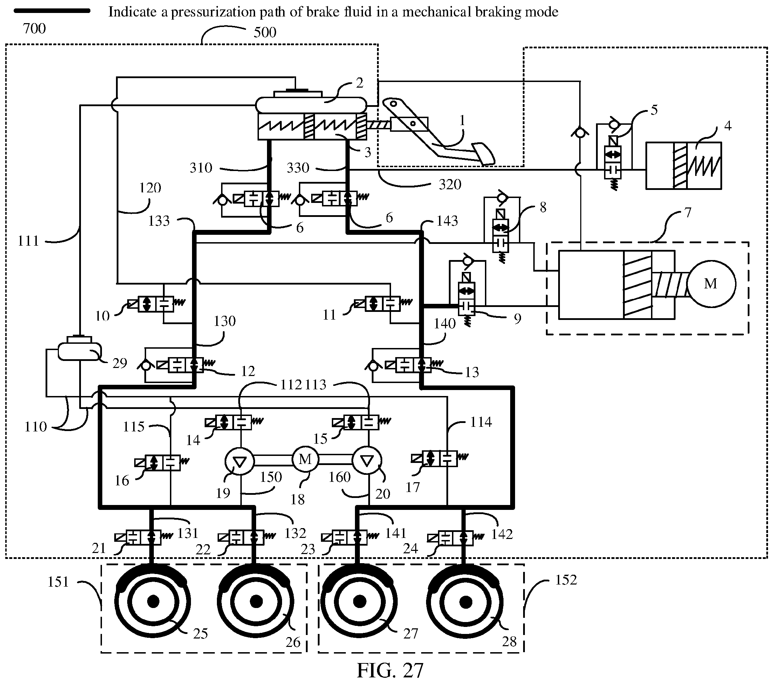

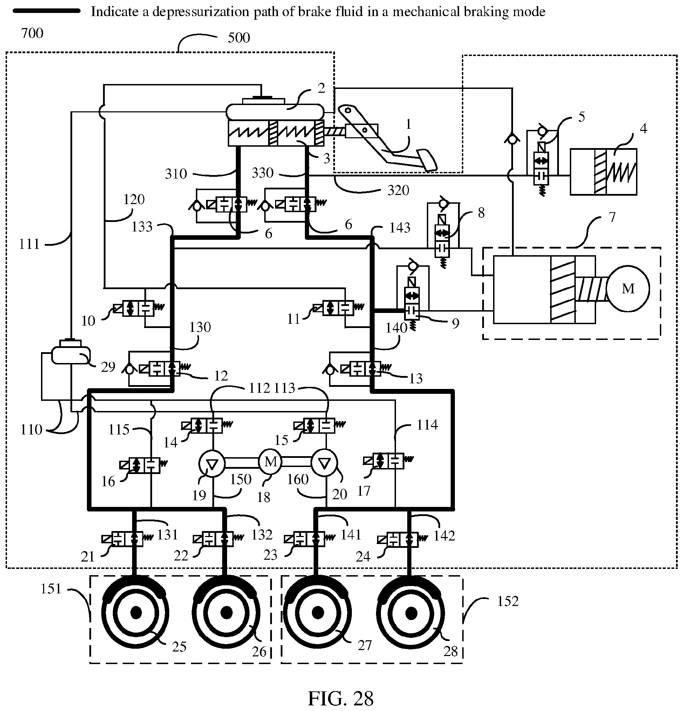

As described above, the hydraulic adjustment unit 500 in the brake system 700 supports a plurality of operating modes. Correspondingly, the brake system 700 also supports a plurality of operating modes. The following describes an operating process of the brake system 700 with reference to FIG. 18 to FIG. 28 and by using a brake-by-wire-mode, a combination of a high-speed pressurization mode and the brake-by-wire-mode, and a redundant braking mode as an example. FIG. 18 to FIG. 20 describe a pressurization process, a pressure preservation process, and a depressurization process of brake fluid in the brake-by-wire mode. FIG. 21 to FIG. 23 describe a pressurization process, a pressure preservation process, and a depressurization process of brake fluid when the high-speed pressurization mode is combined with the brake-by-wire mode. FIG. 24 to FIG. 26 describe a pressurization process, a pressure preservation process, and a depressurization process of brake fluid in redundant braking mode. FIG. 27 and FIG. 28 describe a pressurization process and a depressurization process of brake fluid in the mechanical braking mode.

A master cylinder 3 in the brake system 700 may be a tandem master cylinder. A first hydraulic chamber of the master cylinder 3 provides braking force to a wheel cylinder 151 for a first group of wheels of a vehicle through a first oil inlet pipe 130. A second hydraulic chamber of the master cylinder 3 provides braking force to a wheel cylinder 152 for a second group of wheels of the vehicle through a second oil inlet pipe 140.

FIG. 18 is a schematic diagram of a pressurization path of brake fluid in the brake system 700 according to an embodiment of this application. The brake system 700 shown in FIG. 18 operates in the brake-by-wire mode. In the brake-by-wire mode, a first isolation valve 12, a second isolation valve 13, oil inlet valves 21, 22, 23 and 24, a supercharging device booster valve 8, a supercharging device booster valve 9, and a third isolation valve 5 are in a closed state. A master cylinder booster valve 6, a first reducing valve 10, a second reducing valve 11, a third reducing valve 14, a fourth reducing valve 15, a fifth reducing valve 16, and a sixth reducing valve 17 are in an open state.

When a driver steps on a brake pedal 1, the master cylinder 3 feeds brake fluid into a brake pipe 310 and a brake pipe 330. The brake pipe 310 is configured to connect an oil outlet port of the master cylinder to the first oil inlet pipe 130, and the brake pipe 330 is configured to connect the oil outlet port of the master cylinder to a second oil inlet pipe 140. Because the master cylinder booster valve 6 is in an open state, the brake fluid fed into the brake pipe 310 and the brake pipe 330 is blocked by the master cylinder booster valves 6 deployed on the two brake pipes, and flows to a pedal feedback simulator 4 through a brake pipe 320 and the third isolation valve 5.

A controller controls, based on the required braking force entered by the driver, a supercharging device 7 to feed brake fluid in a hydraulic cylinder into the first oil inlet pipe 130 and the second oil inlet pipe 140. The brake fluid is fed into the wheel cylinder 151 for the first group of wheels through the first oil inlet pipe 130, and fed into the wheel cylinder 152 for the second group of wheels through the second oil inlet pipe 140.

It should be noted that there are many manners in which the controller obtains the required braking force entered by the driver. This is not specifically limited in this embodiment of this application. For example, the controller may obtain, by using a pedal stroke sensor (not shown in the figure) disposed on the master cylinder 3, a pedal stroke generated by a brake pedal in the master cylinder when the driver steps on the pedal. The controller determines the required braking force based on the pedal stroke and a correspondence between the pedal stroke and the required braking force. For another example, a pressure sensor (not shown in the figure) may be disposed on the brake pipe 310 and/or the brake pipe 330, and the pressure sensor is configured to detect pressure of brake fluid in the brake pipe. In this way, the controller may determine the required braking force based on the pressure of the brake fluid in the brake pipe and a correspondence between the pressure of the brake fluid and the required braking force.

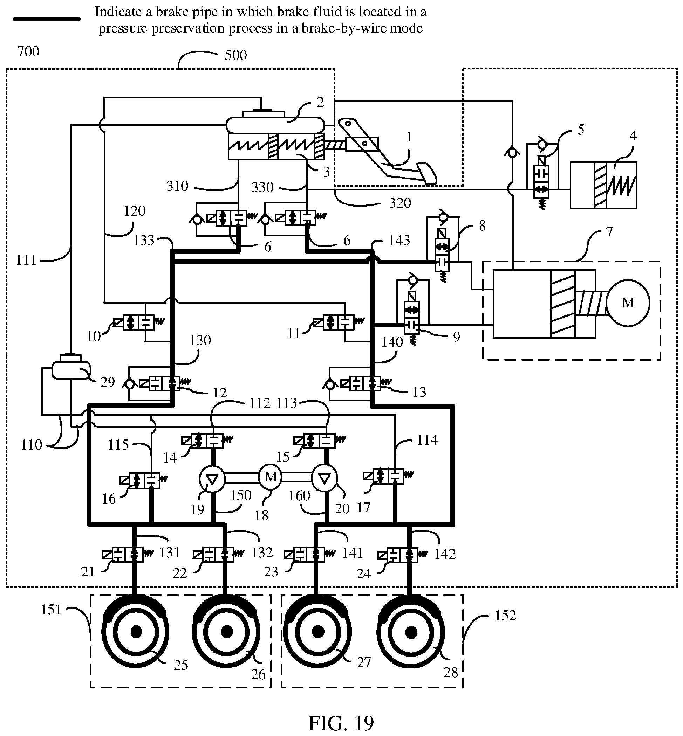

After the brake system 700 completes a pressurization process, the brake system may enter a pressure preservation process in the brake-by-wire mode. In this case, only the supercharging device booster valve 8 and the supercharging device booster valve 9 need to be controlled to be in an open state, and states of other control valves in the brake system 700 remain unchanged. In addition, it is also necessary to control the supercharging device 7 to stop providing pressure to the brake system. FIG. 19 shows a brake pipe in which brake fluid is located in the pressure preservation process in brake-by-wire mode.

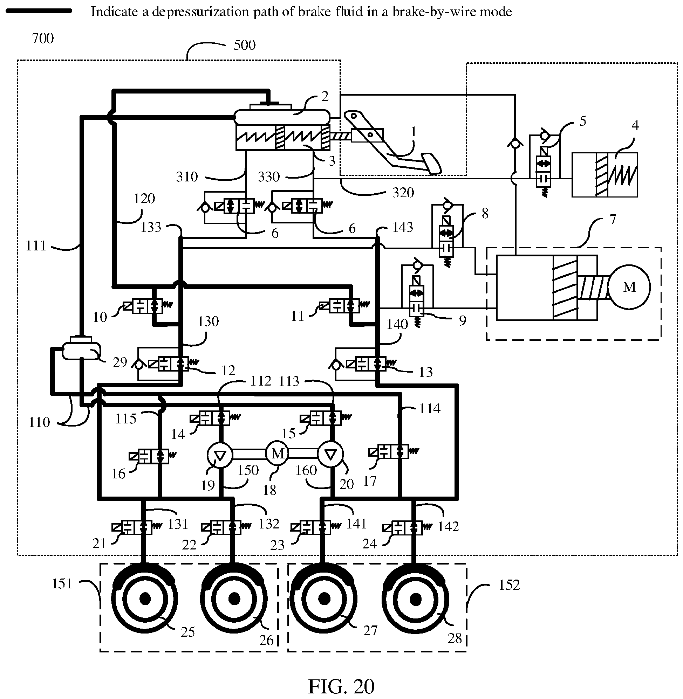

When the brake system 700 needs to enter a depressurization process from a pressure preservation process, only the first reducing valve 10 and the second reducing valve 11 need to be controlled to be in a closed state, and operating states of other control valves in the brake system 700 may remain unchanged. In this case, brake fluid in the brake system 700 may flow to a second fluid reservoir 2 through a second oil return pipe 120. Optionally, if the depressurization process needs to be accelerated, reducing valves 14, 15, 16, and 17 may also be controlled to be in a closed state. In this case, brake fluid in wheel cylinders 151 and 152 may flow to a first fluid reservoir 29 through a first oil return pipe 110. FIG. 20 shows a depressurization path of brake fluid in the depressurization process.

FIG. 21 is a schematic diagram of a pressurization path of brake fluid when the high-speed pressurization mode is combined with the brake-by-wire mode according to an embodiment of this application. In a case in which the high-speed pressurization mode is combined with the brake-by-wire mode, the first isolation valve 12, the second isolation valve 13, the oil inlet valves 21, 22, 23, and 24, the supercharging device booster valve 8, the supercharging device booster valve 9, and the third isolation valve 5 are in a closed state. The master cylinder booster valve 6, the first reducing valve 10, the second reducing valve 11, the third reducing valve 14, the fourth reducing valve 15, the fifth reducing valve 16, and the sixth reducing valve 17 are in an open state.

When a driver steps on the brake pedal 1, the master cylinder 3 feeds brake fluid into the brake pipe 310 and the brake pipe 330. The brake pipe 310 is configured to connect an oil outlet port of the master cylinder to the first oil inlet pipe 130, and the brake pipe 330 is configured to connect the oil outlet port of the master cylinder to the second oil inlet pipe 140. Because the master cylinder booster valve 6 is in an open state, the brake fluid fed into the brake pipe 310 and the brake pipe 330 is blocked by the master cylinder booster valves 6 deployed on the two brake pipes, and flows to the pedal feedback simulator 4 through the brake pipe 320 and the third isolation valve 5.

The controller determines, based on the required braking force entered by the driver, braking force that needs to be provided by the supercharging device 7 and a pressure providing apparatus 18. Then the controller controls, based on the braking force that needs to be provided by the supercharging device 7, the supercharging device 7 to feed brake fluid in a hydraulic cylinder into the first oil inlet pipe 130 and the second oil inlet pipe 140. The brake fluid is fed into the wheel cylinder 151 for the first group of wheels through the first oil inlet pipe 130, and fed into the wheel cylinder 152 for the second group of wheels through the second oil inlet pipe 140.

In addition, based on the braking force that needs to be provided by the pressure providing apparatus 18, the controller controls the pressure providing apparatus 18 to feed brake fluid into a third oil inlet pipe 150 by using a plunger pump 19. The brake fluid in the third oil inlet pipe 150 may provide the braking force to a first wheel 25 and a second wheel 26 through a first oil inlet pipe branch 131 and a second oil inlet pipe branch 132. Correspondingly, the controller controls the pressure providing apparatus 18 to feed brake fluid into a fourth oil inlet pipe 160 by using a plunger pump 20. The brake fluid in the fourth oil inlet pipe 160 may provide the braking force to a third wheel 27 and a fourth wheel 28 through the third oil inlet pipe branch 141 and a fourth oil inlet pipe branch 142.

It should be noted that there are many manners in which the controller obtains the required braking force entered by the driver. This is not specifically limited in this embodiment of this application. For example, the controller may obtain, by using a pedal stroke sensor (not shown in the figure) disposed on the master cylinder 3, a pedal stroke generated by a brake pedal in the master cylinder when the driver steps on the pedal. The controller determines the required braking force based on the pedal stroke and a correspondence between the pedal stroke and the required braking force. For another example, a pressure sensor (not shown in the figure) may be disposed on the brake pipe 310 and/or the brake pipe 330, and the pressure sensor is configured to detect pressure of brake fluid in the brake pipe. In this way, the controller may determine the required braking force based on the pressure of the brake fluid in the brake pipe and a correspondence between the pressure of the brake fluid and the required braking force.

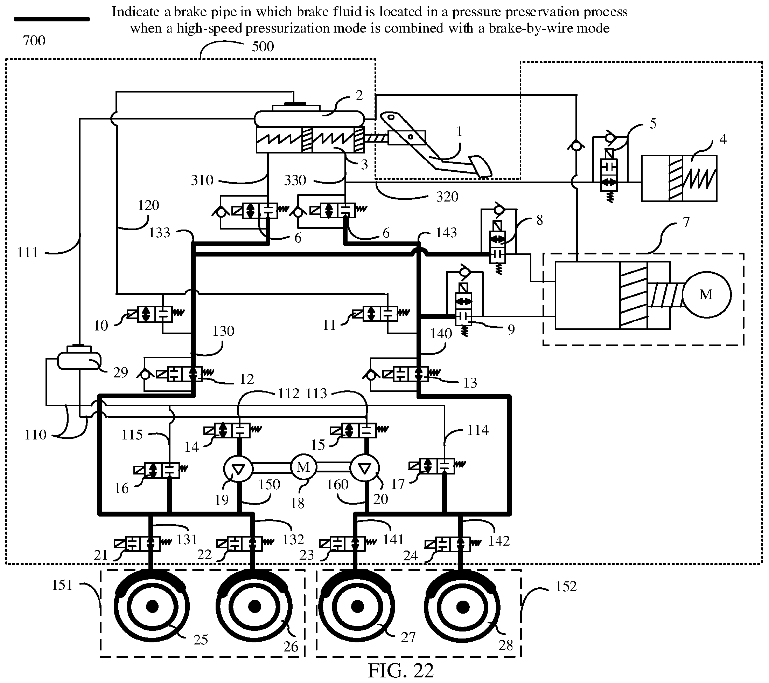

After the brake system 700 completes a pressurization process, the brake system may enter a pressure preservation process in which the high-speed pressurization mode is combined with the brake-by-wire mode. In this case, the supercharging device booster valve 8 only needs to be controlled to be in an open state, and states of other control valves in the brake system 700 remain unchanged. In addition, it is also necessary to control the pressure providing apparatus 18 and the supercharging device 7 to stop providing pressure to the brake system. When the high-speed pressurization mode is combined with the brake-by-wire mode, a brake pipe in which brake fluid is located in the pressure preservation process is shown in FIG. 22.

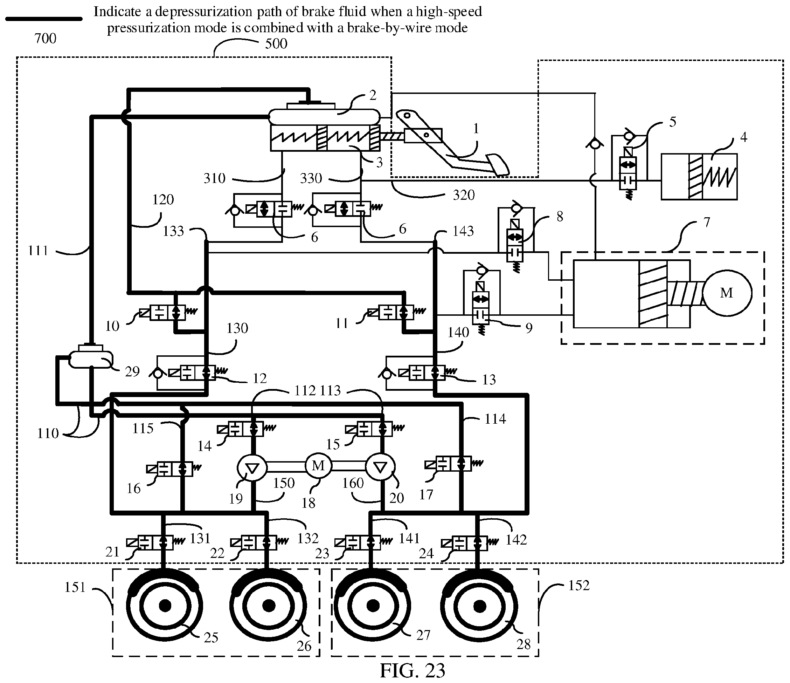

When the brake system 700 needs to enter a depressurization process from a pressure preservation process, only the first reducing valve 10 and the second reducing valve 11 need to be controlled to be in a closed state, and operating states of other control valves in the brake system 700 may remain unchanged. In this case, brake fluid in the brake system 700 may flow to the second fluid reservoir 2 through the second oil return pipe 120. Optionally, if the depressurization process needs to be accelerated, the reducing valves 14, 15, 16, and 17 may also be controlled to be in a closed state. In this case, brake fluid in the wheel cylinders 151 and 152 may flow to the first fluid reservoir 29 through the first oil return pipe 110. FIG. 23 shows a depressurization path of brake fluid in the depressurization process.

FIG. 24 is a schematic diagram of a pressurization path of brake fluid in the brake system 700 according to an embodiment of this application. The brake system 700 shown in FIG. 24 operates in the redundant braking mode. If the supercharging device 7 is faulty, the brake system 700 enters the redundant braking mode. In this case, the oil inlet valves 21, 22, 23, and 24, the supercharging device booster valve 8, the supercharging device booster valve 9, and the third isolation valve 5 are in a closed state. The first isolation valve 12, the second isolation valve 13, the master cylinder booster valve 6, the first reducing valve 10, the second reducing valve 11, the third reducing valve 14, the fourth reducing valve 15, the fifth reducing valve 16, and the sixth reducing valve 17 are in an open state.

When a driver steps on the brake pedal 1, the master cylinder 3 feeds brake fluid into the brake pipe 310 and the brake pipe 330. The brake pipe 310 is configured to connect an oil outlet port of the master cylinder to the first oil inlet pipe 130, and the brake pipe 330 is configured to connect the oil outlet port of the master cylinder to the second oil inlet pipe 140. Because the master cylinder booster valve 6 is in an open state, the brake fluid fed into the brake pipe 310 and the brake pipe 330 is blocked by the master cylinder booster valves 6 deployed on the two brake pipes, and flows to the pedal feedback simulator 4 through the brake pipe 320 and the third isolation valve 5.

A controller controls, based on the required braking force entered by the driver, the pressure providing apparatus 18 to feed brake fluid in a hydraulic cylinder into the third oil inlet pipe 150 and the fourth oil inlet pipe 160. The brake fluid is fed into the wheel cylinder 151 for the first group of wheels through the third oil inlet pipe 150, and fed into the wheel cylinder 152 for the second group of wheels through the fourth oil inlet pipe 160.

It should be noted that there are many manners in which the controller obtains the required braking force entered by the driver. This is not specifically limited in this embodiment of this application. For example, the controller may obtain, by using a pedal stroke sensor (not shown in the figure) disposed on the master cylinder 3, a pedal stroke generated by a brake pedal in the master cylinder when the driver steps on the pedal. The controller determines the required braking force based on the pedal stroke and a correspondence between the pedal stroke and the required braking force. For another example, a pressure sensor (not shown in the figure) may be disposed on the brake pipe 310 and/or the brake pipe 330, and the pressure sensor is configured to detect pressure of brake fluid in the brake pipe. In this way, the controller may determine the required braking force based on the pressure of the brake fluid in the brake pipe and a correspondence between the pressure of the brake fluid and the required braking force.

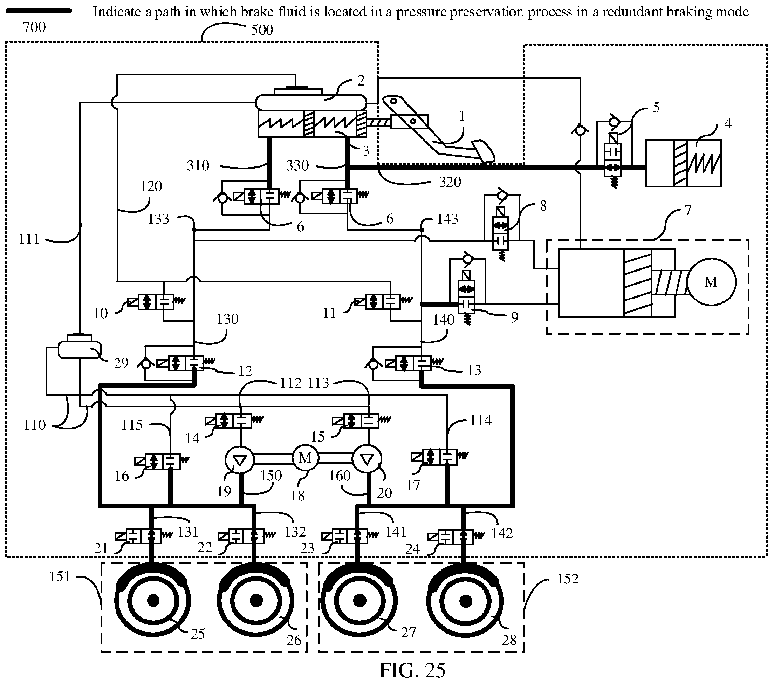

After the brake system 700 completes a pressurization process, the brake system may enter a pressure preservation process in the redundant braking mode. In this case, the pressure providing apparatus 18 only needs to be controlled to stop providing pressure for the brake system. FIG. 25 shows a brake pipe in which brake fluid is located in the pressure preservation process in the redundant braking mode.

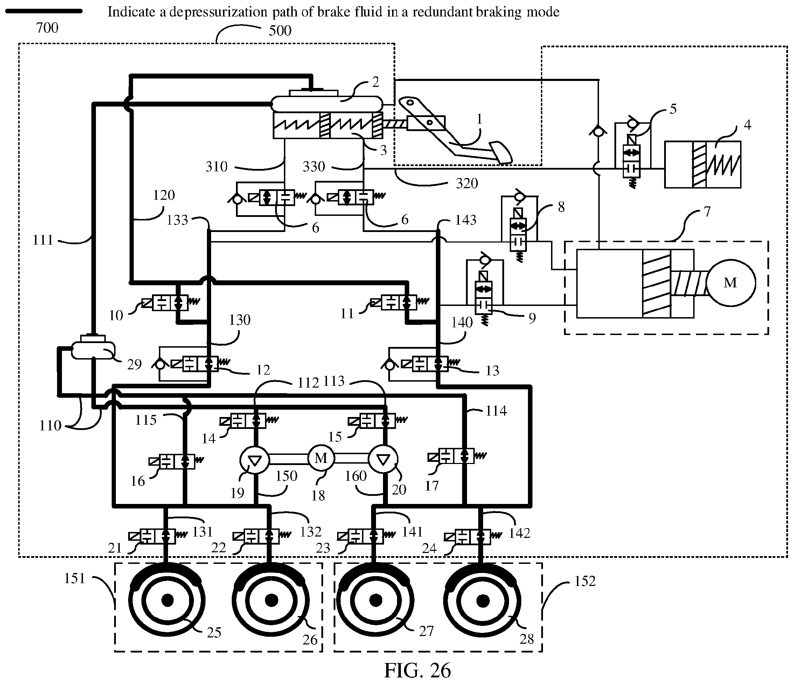

When the brake system 700 needs to enter a depressurization process from the pressure preservation process, only the first isolation valve 12, the second isolation valve 13, the first reducing valve 10, and the second reducing valve 11 need to be controlled to be in a closed state, and operating states of other control valves in the brake system 700 may remain unchanged. In this case, brake fluid in the brake system 700 may flow to the second fluid reservoir 2 through the second oil return pipe 120. Optionally, if the depressurization process needs to be accelerated, the reducing valves 14, 15, 16, and 17 may also be controlled to be in a closed state. In this case, brake fluid in the wheel cylinders 151 and 152 may flow to the first fluid reservoir 29 through the first oil return pipe 110. FIG. 26 shows a depressurization path of brake fluid in the depressurization process.

It should be noted that the redundant braking mode described in FIG. 24 to FIG. 26 may further not require participation of a driver. To be specific, in the automatic driving mode, after the supercharging device 7 is faulty, the pressure providing apparatus may replace the supercharging device 7 to provide braking force for the brake system. A pressurization process, a pressure preservation process, and a depressurization process are similar to paths described in FIG. 24 to FIG. 26. For brevity, details are not described below.

FIG. 27 is a schematic diagram of a pressurization path of brake fluid in the brake system 700 in the mechanical braking mode according to an embodiment of this application. In the mechanical braking mode, the master cylinder booster valve 6, the first isolation valve 12, the second isolation valve 13, and the oil inlet valves 21, 22, 23, and 24 are in a closed state. The first reducing valve 10, the second reducing valve 11, the third reducing valve 14, the fourth reducing valve 15, the fifth reducing valve 16, the sixth reducing valve 17, and the third isolation valve 5 are in an open state. When the driver steps on the brake pedal 1, the master cylinder 3 feeds brake fluid into the first oil inlet pipe 130 through the brake pipe 310 and into the second oil inlet pipe 140 through the brake pipe 330. Correspondingly, brake fluid in the brake pipe 310 and the brake pipe 330 flows to the wheel cylinders 151 and 152 of the vehicle through the first oil inlet pipe 130 and the second oil inlet pipe 140.

When the brake system 700 needs to enter a depressurization process, the driver reduces force of stepping on the braking pedal 1. Under the action of a return spring, the master cylinder 3 sucks brake fluid in the wheel cylinder 151 into a first hydraulic chamber of the master cylinder 3 through the first oil inlet pipe 130 and the brake pipe 310, and sucks brake fluid in the wheel cylinder 152 into a second hydraulic chamber of the master cylinder 3 through the second oil inlet pipe 140 and the brake pipe 330. Excess fluid may enter the second fluid reservoir 2, to depressurize the brake system. FIG. 28 shows a depressurization path of brake fluid in the brake system 700 in the mechanical braking mode.

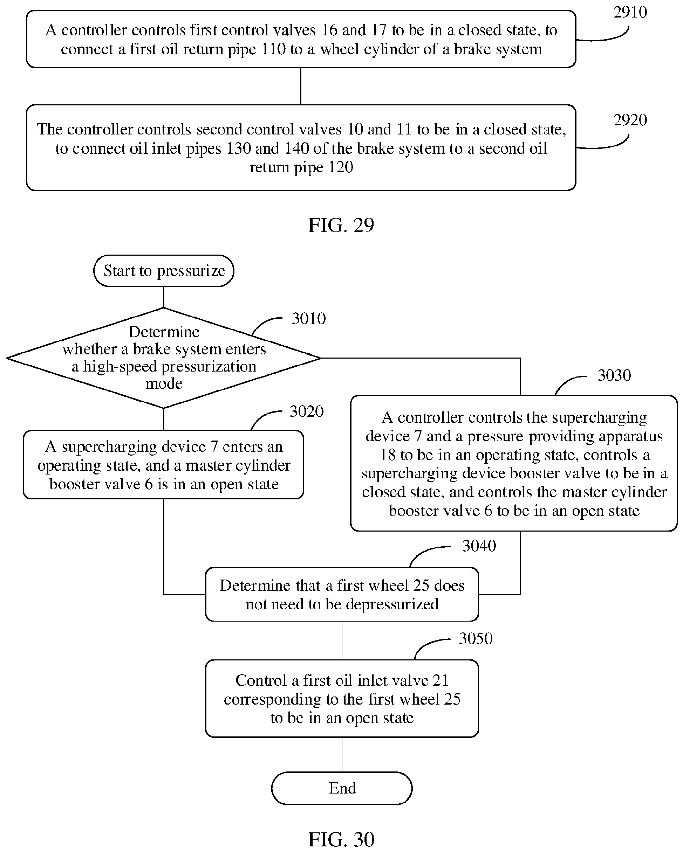

The foregoing describes the apparatuses in embodiments of this application with reference to FIG. 2 to FIG. 28. The following describes the control methods in embodiments of this application with reference to FIG. 29 to FIG. 33B. It should be noted that the control methods in embodiments of this application may be applied to any apparatus described above. This is not limited in embodiments of this application.

FIG. 29 is a flowchart of a control method according to an embodiment of this application. The method shown in FIG. 29 may be performed by a controller in a brake system. The method shown in FIG. 29 may include steps 2910 and 2920.

2910: A controller controls first control valves 16 and 17 to be in a closed state, to connect a first oil return pipe 110 to a wheel cylinder of the brake system. Brake fluid in the wheel cylinder of the brake system flows to a first fluid reservoir 29 of the brake system through the first oil return pipe 110 of the brake system, to depressurize wheels of a vehicle.

The first control valves are also referred to as reducing valves, and may include one or more control valves. This is not limited in this embodiment of this application. For example, the first control valves may include the third reducing valve 14, the fourth reducing valve 15, the fifth reducing valve 16, and the sixth reducing valve 17 described above. When the reducing valves are in a closed state, the first oil return pipe 110 is connected to wheel cylinders 151 and 152 of the brake system. For another example, the first control valves may include only the fifth reducing valve 16 and the sixth reducing valve 17. Because a first oil inlet pipe branch 131 and a second oil inlet pipe branch 132 are connected to the first oil return pipe 110 by using the fifth reducing valve 16, when the fifth reducing valve 16 is in a closed state, brake fluid in wheel cylinders for the first wheel 25 and the second wheel 26 may flow to the first oil return pipe 110 through the first oil inlet pipe branch 131 and the second oil inlet pipe branch 132, to depressurize the wheels of the vehicle.

2920: The controller controls second control valves 10 and 11 to be in a closed state, to connect oil inlet pipes 130 and 140 of the brake system to a second oil return pipe 120. The brake fluid in the wheel cylinder of the brake system flows to a second fluid reservoir 2 through the oil inlet pipes 130 and 140 and the second oil return pipe 120 of the brake system.

Optionally, the foregoing step 2920 includes: If a depressurization rate of the brake system is less than a preset depressurization rate threshold, the controller controls the second control valves 10 and 11 to be in a closed state.

Optionally, the oil inlet pipes of the brake system include a first oil inlet pipe 130 and a second oil inlet pipe 140. The second oil return pipe 120 is connected to the first oil inlet pipe 130 by using a first reducing valve 10. The second oil return pipe 120 is connected to the second oil inlet pipe 140 by using a second reducing valve 11. The foregoing step 2920 includes: The controller controls the first reducing valve 10 to be in a closed state, to connect the second oil return pipe 120 to the first oil inlet pipe 130 in the oil inlet pipes of the brake system. The controller controls the second reducing valve 11 to be in a closed state, to connect the second oil return pipe 120 to the second oil inlet pipe 140 in the oil inlet pipes of the brake system.

Optionally, a master cylinder 3 provides braking force to the first wheel 25 through the first oil inlet pipe branch 131, and controls the master cylinder 3 to provide braking force to the second wheel 26 of the vehicle through the second oil inlet pipe branch 132 of the first oil inlet pipe 130. The master cylinder 3 provides braking force to a third wheel 27 of the vehicle through a third oil inlet pipe branch 141 of the second oil inlet pipe 140, and controls the master cylinder 3 to provide braking force to a fourth wheel 28 of the vehicle through a fourth oil inlet pipe branch 142 of the second oil inlet pipe 140. The method includes: A controller controls a pressure providing apparatus 18 to provide braking force to the first wheel 25 and the second wheel 26 through a third oil inlet pipe 150, the first oil inlet pipe branch 131, and the second oil inlet pipe branch 132. The third oil inlet pipe 150 is connected to the first oil inlet pipe branch 131, and the third oil inlet pipe 150 is connected to the second oil inlet pipe branch 132.

The controller controls the pressure providing apparatus 18 to provide braking force to the third wheel 27 and the fourth wheel 28 through a fourth oil inlet pipe 160, the third oil inlet pipe branch 141, and the fourth oil inlet pipe branch 142. The fourth oil inlet pipe 160 is connected to the third oil inlet pipe branch 141, and the fourth oil inlet pipe 160 is connected to the fourth oil inlet pipe branch 142.

Optionally, the third oil inlet pipe 150 and the first oil inlet pipe 130 are brake pipes independent of each other, and the fourth oil inlet pipe 160 and the second oil inlet pipe 140 are brake pipes independent of each other.

Optionally, that the controller controls the pressure providing apparatus 18 of the brake system to provide the braking force to the first wheel 25 and the second wheel 26 through the third oil inlet pipe 150 of the brake system, the first oil inlet pipe branch 131, and the second oil inlet pipe branch 132 includes: If a supercharging device 7 is faulty, the controller controls the pressure providing apparatus 18 to provide the braking force to the first wheel 25 and the second wheel 26 through the third oil inlet pipe 150, the first oil inlet pipe branch 131, and the second oil inlet pipe branch 132.

Optionally, that the controller controls the pressure providing apparatus 18 to provide the braking force to the third wheel 27 and the fourth wheel 28 through the fourth oil inlet pipe 160, the third oil inlet pipe branch 141, and the fourth oil inlet pipe branch 142 of the brake system includes: If the supercharging device 7 is faulty, the controller controls the pressure providing apparatus 18 to provide the braking force to the third wheel 27 and the fourth wheel 28 through the fourth oil inlet pipe 160, the third oil inlet pipe branch 141, and the fourth oil inlet pipe branch 142.

Optionally, that the controller controls the pressure providing apparatus 18 of the brake system to provide the braking force to the first wheel 25 and the second wheel 26 through the third oil inlet pipe 150, the first oil inlet pipe branch 131, and the second oil inlet pipe branch 132 includes: If a pressurization rate of the brake system is less than a preset pressurization rate threshold, the controller controls the pressure providing apparatus 18 of the brake system to provide the braking force to the first wheel 25 and the second wheel 26 through the third oil inlet pipe 150, the first oil inlet pipe branch 131, and the second oil inlet pipe branch 132.

Optionally, that the controller controls the pressure providing apparatus 18 to provide the braking force to the third wheel 27 and the fourth wheel 28 through the fourth oil inlet pipe 160, the third oil inlet pipe branch 141, and the fourth oil inlet pipe branch 142 includes: If the pressurization rate of the brake system is less than the preset pressurization rate threshold, the controller controls the pressure providing apparatus 18 to provide the braking force to the third wheel 27 and the fourth wheel 28 through the fourth oil inlet pipe 160, the third oil inlet pipe branch 141, and the fourth oil inlet pipe branch 142.

For ease of understanding, the following describes a control method in embodiments of this application with reference to FIG. 30 to FIG. 33B. It should be noted that the control methods shown in FIG. 30 to FIG. 33B are merely specific examples for ease of understanding, and do not limit the scope of embodiments of this application.

FIG. 30 is a flowchart of a control method according to another embodiment of this application. The method may be applied to the hydraulic adjustment unit 400 and the hydraulic adjustment unit 500 shown above. Certainly, the control method may also be applied to a brake system 600 including the hydraulic adjustment unit 400, or a brake system 700 including the hydraulic adjustment unit 500.

The method shown in FIG. 30 describes a method procedure for determining whether a brake system needs to operate in a high-speed pressurization mode and does not need to depressurize a first wheel 25. The method shown in FIG. 30 includes steps 3010 to 3050.

3010: A controller determines whether the brake system enters the high-speed pressurization mode.

Specifically, the controller may determine, based on a current depressurization rate of the brake system and a depressurization rate threshold, whether the brake system enters the high-speed pressurization mode. If the current depressurization rate is greater than the depressurization rate threshold, the controller determines that there is no need to enter the high-speed pressurization mode, and performs step 3020. If the current depressurization rate is less than the depressurization rate threshold, the controller determines that the brake system enters the high-speed pressurization mode, and performs step 3030.

3020: The controller controls the supercharging device 7 to enter an operating state, controls a master cylinder booster valve 6 to be in an open state, and performs step 3040.

3030: The controller controls the supercharging device 7 and the pressure providing apparatus 18 to be in an operating state, controls a supercharging device booster valve to be in a closed state, controls the master cylinder booster valve 6 to be in an open state, and performs step 3040.

3040: The controller determines that the first wheel 25 does not need to be depressurized.

3050: The controller controls a first oil inlet valve 21 corresponding to the first wheel 25 to be in an open state, and oil inlet valves 22, 23, and 24 corresponding to other wheels to be in a closed state.

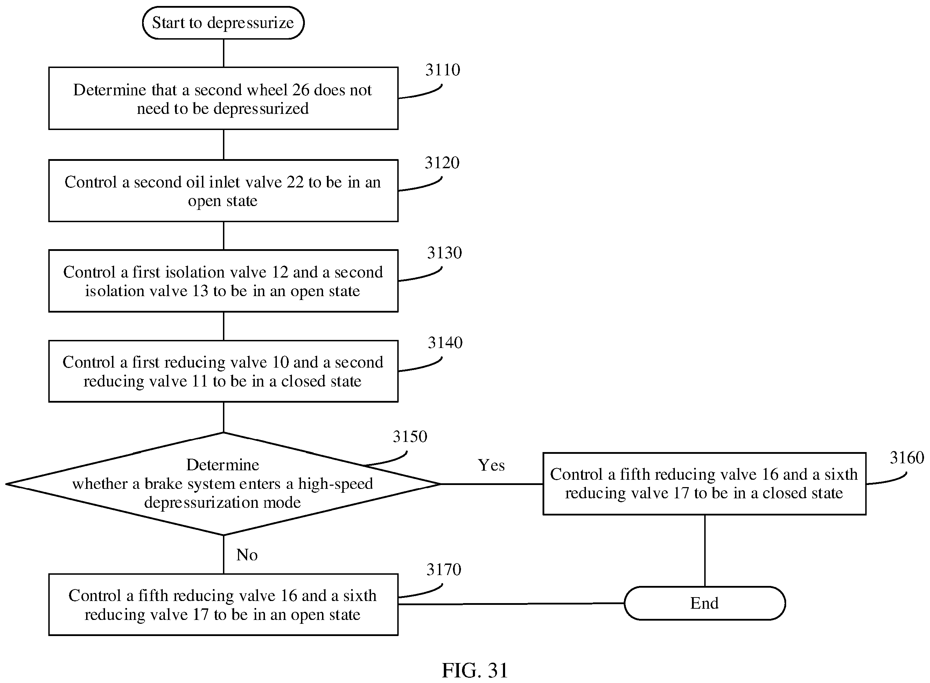

FIG. 31 is a flowchart of a control method according to another embodiment of this application. The method may be applied to the hydraulic adjustment unit 400 and the hydraulic adjustment unit 500 shown above. Certainly, the control method shown in FIG. 31 may also be applied to a brake system 600 including the hydraulic adjustment unit 400, or a brake system 700 including the hydraulic adjustment unit 500.

The method shown in FIG. 31 describes a method procedure for determining whether a brake system needs to operate in a high-speed depressurization mode and does not need to depressurize a second wheel 26. The method shown in FIG. 31 includes steps 3110 to 3170.

3110: A controller determines that the second wheel 26 does not need to be depressurized.

3120: The controller controls a second oil inlet valve 22 corresponding to the second wheel 26 to be in an open state.

3130: The controller controls a first isolation valve 12 and a second isolation valve 13 to be in an open state.

3140: The controller controls a first reducing valve 10 and a second reducing valve 11 to be in a closed state.

The controller controls the first reducing valve 10 and the second reducing valve 11 to be in a closed state, to connect a first oil inlet pipe 130 and a second oil return pipe 120, and connect a second oil inlet pipe 140 and the second oil return pipe 120. In this way, brake fluid in the first oil inlet pipe 130 and the second oil inlet pipe 140 may flow to a second fluid reservoir 2 through the second oil return pipe 120, to depressurize the brake system.

3150: The controller determines whether the brake system enters a high-speed depressurization mode.

The controller may determine, based on a current depressurization rate of the brake system and a depressurization rate threshold, whether the brake system enters the high-speed depressurization mode. If the current depressurization rate is less than the depressurization rate threshold, the controller determines that the brake system enters the high-speed depressurization mode, and the controller performs step 3160. If the current depressurization rate is greater than the depressurization rate threshold, the controller determines that the brake system does not enter the high-speed depressurization mode, and the controller performs 3170.

3160: The controller controls a fifth reducing valve 16 and a sixth reducing valve 17 to be in a closed state.

After the fifth reducing valve 16 and the sixth reducing valve 17 are in a closed state, wheel cylinders other than a wheel cylinder for the second wheel 26 may be connected to a first fluid reservoir 29 through a fourth oil outlet pipe branch 114 and a first oil outlet pipe branch 115, so that brake fluid in the other wheel cylinders is sucked into the first fluid reservoir 29, to depressurize the other wheel cylinders.

3170: The controller controls the fifth reducing valve 16 and the sixth reducing valve 17 to be in an open state.

After the fifth reducing valve 16 and the sixth reducing valve 17 are in an open state, only the second oil return pipe 120 is configured to depressurize the brake system, and a first oil return pipe 110 does not operate at this time.

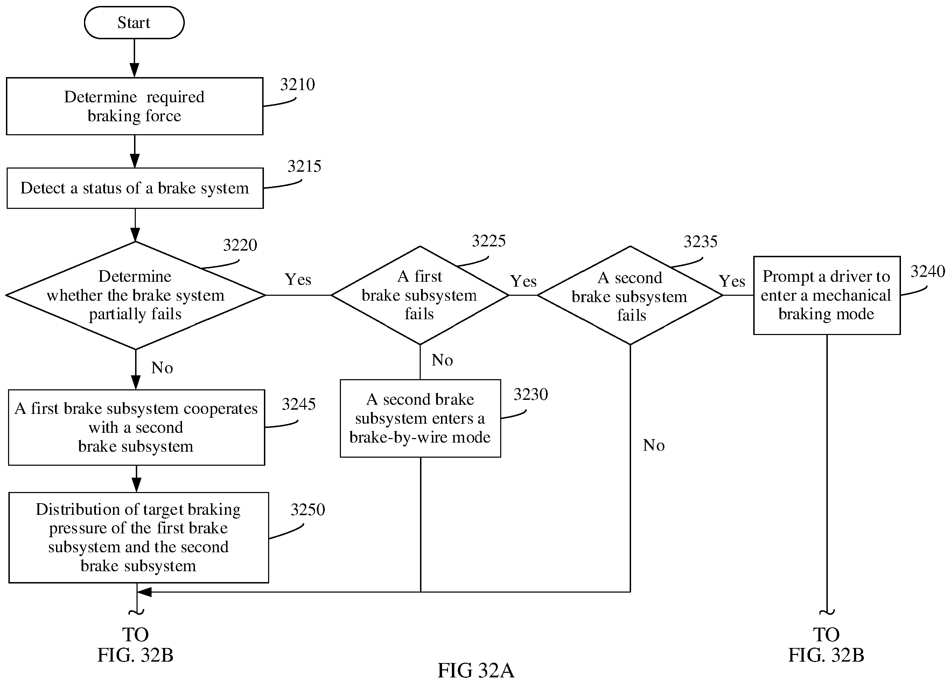

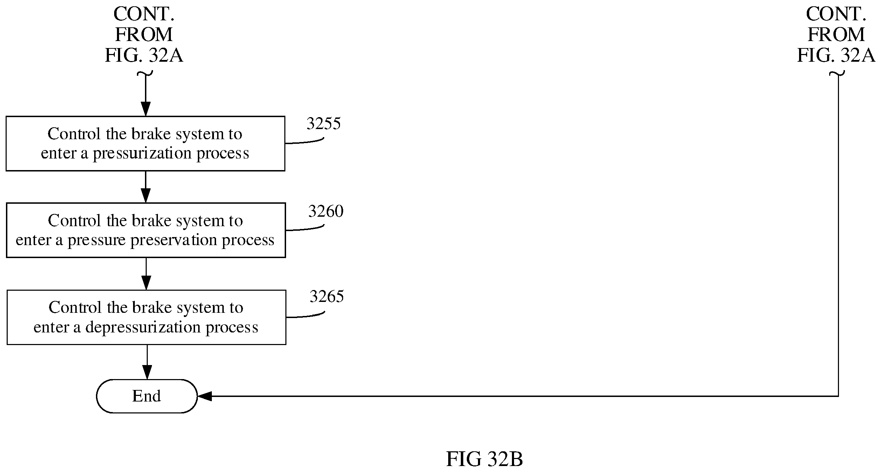

FIG. 32A and FIG. 32B is a flowchart of a control method according to another embodiment of this application. The method may be applied to the hydraulic adjustment unit 400 and the hydraulic adjustment unit 500 shown above. Certainly, the control method shown in FIG. 32A and FIG. 32B may also be applied to a brake system 600 including the hydraulic adjustment unit 400, or a brake system 700 including the hydraulic adjustment unit 500.

It is assumed that a brake subsystem whose braking force is provided by a supercharging device 7 is referred to as a "first brake subsystem", and a brake subsystem whose braking force is provided by a pressure providing apparatus 18 is referred to as a "second brake subsystem". The method shown in FIG. 32A and FIG. 32B describes a method process for switching between a plurality of operating modes of a brake system including the first brake subsystem and the second brake subsystem. The method shown in FIG. 32A and FIG. 32B includes steps 3210 to 3265.

3210: A controller determines the required braking force of a brake system.

It should be understood that the controller may determine the required braking power of the brake system based on an input of a driver, or the controller may determine the required braking force of the brake system based on road condition information of a vehicle. This is not limited in this embodiment of this application.

3215: The controller detects a status of the brake system.

It should be understood that a specific manner in which the controller detects the status of the brake system is not limited in this embodiment of this application. The controller may determine the status of the brake system by using a pressure sensor (not shown in the figure) disposed in the brake system. For example, pressure sensors may be disposed on a brake pipe 310 and a brake pipe 330 in the brake system 700, to detect pressure of brake fluid in the brake pipe 310 and the brake pipe 330, and determine the status of the brake system based on the pressure of the brake fluid in the brake pipe 310 and the brake pipe 330. For another example, the controller may alternatively determine the status of the brake system based on current depressurization time of the brake system and average depressurization time of the brake system.

3220: The controller determines whether the brake system partially fails.

That the brake system partially fails means failure of the first brake subsystem in the brake system or failure of the second brake subsystem in the brake system.

The controller may determine, based on the current depressurization time of the brake system, whether the brake system partially fails. For example, the controller may determine, based on the current depressurization time of the brake system and the average depressurization time of the brake system, whether the brake system partially fails. If the current depressurization time of the brake system is greater than the average depressurization time of the brake system, it may be determined that the brake system partially fails. If the current depressurization time of the brake system is less than the average depressurization time of the brake system, it may be determined that the brake system is normal.

If the brake system partially fails, perform step 3225. If the brake system operates normally, perform step 3245.

3225: The controller determines whether the first brake subsystem fails.

The controller may determine, based on a depressurization rate of the supercharging device 7 in the first brake subsystem, whether the first brake subsystem fails. For example, in a brake-by-wire mode or an intelligent driving mode, if the depressurization rate of the supercharging apparatus 7 is less than an average depressurization rate of the supercharging apparatus 7, it may be determined that the first brake subsystem fails. On the contrary, it may be determined that the first brake subsystem operates normally. The controller may further determine, based on pressure of brake fluid at an oil outlet port of the supercharging device 7, whether the first brake subsystem operates properly. This is not specifically limited in this embodiment of this application.

If the first brake subsystem fails, perform step 3235. If the first brake subsystem operates normally, perform step 3230.

3230: The controller controls the second brake subsystem to enter the brake-by-wire mode, and performs step 3255.

That the second brake subsystem enters the brake-by-wire mode may be understood as that a function of the supercharging device 7 in the brake-by-wire mode is replaced by the pressure providing apparatus 18. The second brake subsystem enters the brake-by-wire mode, that is, the redundant braking mode described above. For an operating manner in which the second brake subsystem enters the brake-by-wire mode, refer to the foregoing operating manner in which the brake system 600 or the brake system 700 enters the redundant braking mode.

3235: The controller determines whether the second brake subsystem fails.

The controller may determine, based on a depressurization rate of the pressure providing apparatus 18 in the second brake subsystem, whether the second brake subsystem fails. For example, in the brake-by-wire mode or the intelligent driving mode, if the depressurization rate of the pressure providing apparatus 18 is less than an average depressurization rate of the pressure providing apparatus 18, it may be determined that the second brake subsystem fails. On the contrary, it may be determined that the second brake subsystem operates normally. The controller may further determine, based on pressure of brake fluid at an oil outlet port of the pressure providing apparatus 18, whether the second brake subsystem operates properly. This is not specifically limited in this embodiment of this application.

If the second brake subsystem fails, perform step 3240. If the second brake subsystem operates normally, perform step 3255.

3240: The controller prompts the driver to enter a mechanical braking mode.

If it is determined that the second brake subsystem fails and the first brake subsystem fails after the foregoing step 3250, it may be determined that the driver needs to access and enter the mechanical braking mode.

3245: The controller controls the first brake subsystem and the second brake subsystem to simultaneously provide the braking force to a vehicle.

3250: The controller determines, based on the required braking force, braking force that needs to be provided by the first brake subsystem and the second brake subsystem.

3255: The controller controls the brake system to enter a pressurization process.

3260: The controller controls the brake system to enter a pressure preservation process.

3265: The controller controls the brake system to enter a depressurization process.

It should be noted that for the pressurization process, the pressure preservation process, and the depressurization process in the steps 3255, 3260, and 3265, refer to the foregoing descriptions. For brevity, details are not described again.

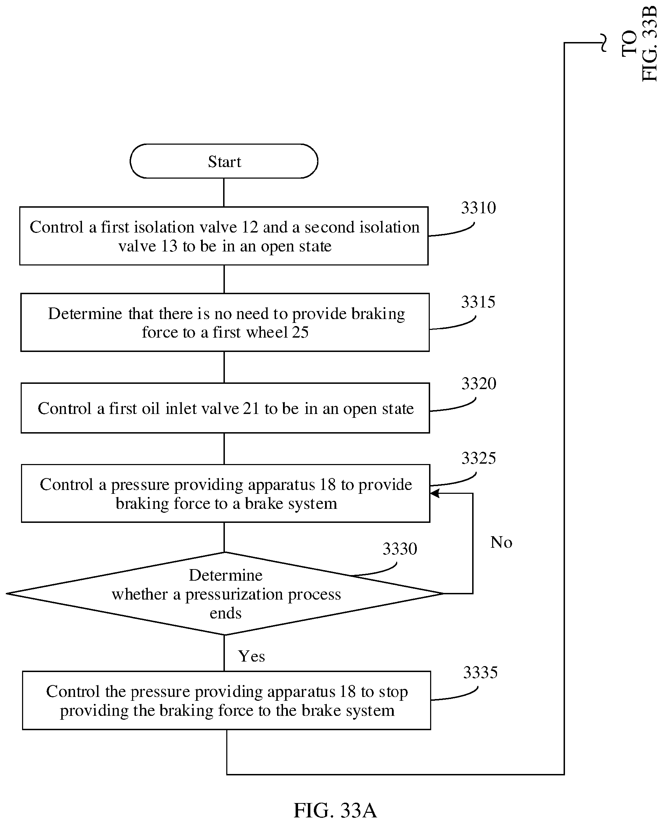

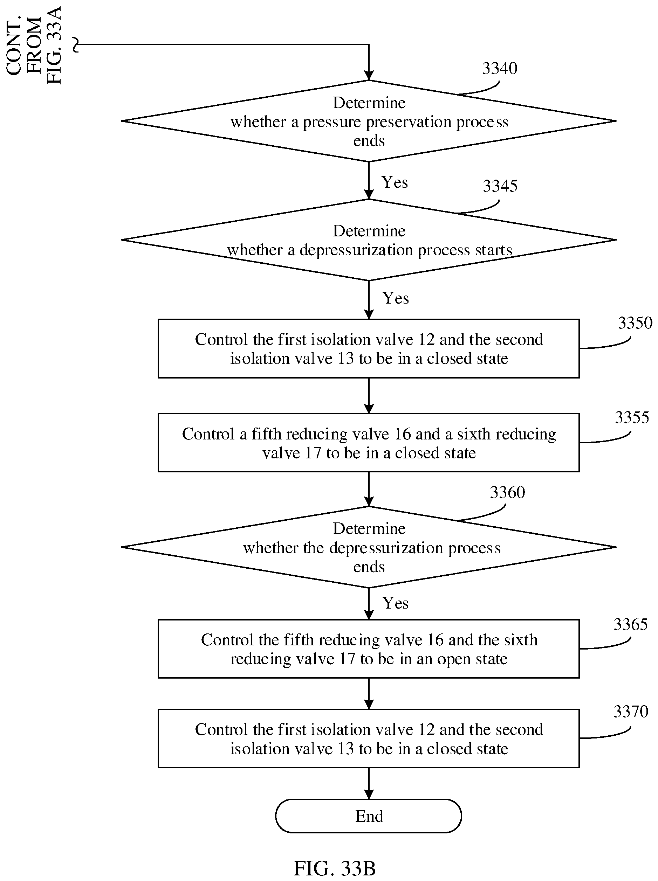

FIG. 33A and FIG. 33B is a flowchart of a control method according to another embodiment of this application. The method shown in FIG. 33A and FIG. 33B may be applied to the hydraulic adjustment unit 400 and the hydraulic adjustment unit 500 shown above. Certainly, the method may also be applied to a brake system 600 including the hydraulic adjustment unit 400, or a brake system 700 including the hydraulic adjustment unit 500.

The method shown in FIG. 33A and FIG. 33B describes a solution in which a second brake subsystem provides braking force to a vehicle after a first brake subsystem is faulty. It is assumed that there is no need to depressurize a first wheel 25 in a pressurization process. The method shown in FIG. 33A and FIG. 33B includes steps 3310 to 3370.

3310: A controller controls a first isolation valve 12 and a second isolation valve 13 to be in an open state.

3315: The controller determines that there is no need to provide braking force to the first wheel 25.

3320: The controller controls a first oil inlet valve 21 corresponding to the first wheel 25 to be in an open state.

3325: The controller controls a pressure providing apparatus 18 to provide braking force to a brake system.

3330: The controller determines whether the pressurization process ends. If the pressurization process ends, perform step 3335. If the pressurization process does not end, continue to perform step 3325.

It should be noted that the controller may determine, based on a current speed of the vehicle, whether the foregoing pressurization process ends.

3335: The controller controls the pressure providing apparatus 18 to stop providing the braking force to the brake system, and the brake system enters a pressure preservation process.

3340: The controller determines whether the pressure preservation process ends. If the pressure preservation process ends, perform step 3345. If the pressure preservation process does not end, the pressure preservation process continues.

3345: The controller determines whether a depressurization process starts. If the depressurization process starts, perform step 3350.

3350: The controller controls a first isolation valve 12 and a second isolation valve 13 to be in a closed state.

3355: The controller controls a fifth reducing valve 16 and a sixth reducing valve 17 to be in a closed state.

3360: The controller determines whether the depressurization process ends. If it is determined that the depressurization process ends, perform step 3365.

3365: The controller controls the fifth reducing valve 16 and the sixth reducing valve 17 to be in an open state.

3370: The controller controls the first isolation valve 12 and the second isolation valve 13 to be in a closed state.

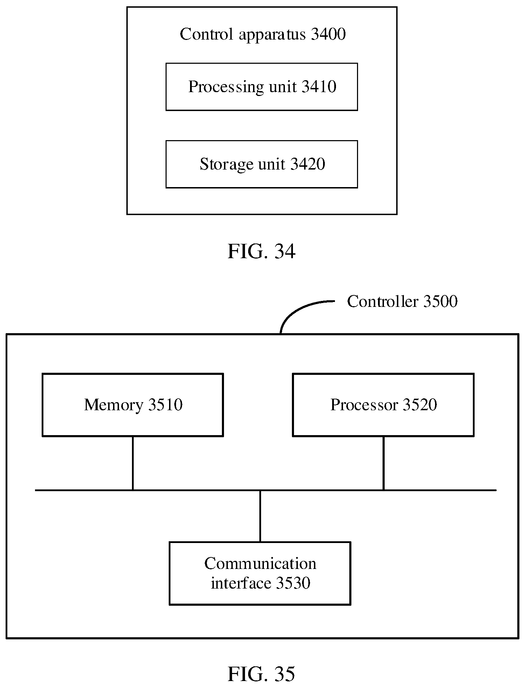

The foregoing describes the control method in embodiments of this application with reference to FIG. 29 to FIG. 33B. The following describes an apparatus in embodiments of this application with reference to FIG. 34 to FIG. 35. It should be noted that the apparatus in embodiments of this application may be applied to any hydraulic adjustment unit described above, to implement any control method described above. For brevity, details are not described herein again.

FIG. 34 is a schematic diagram of a control apparatus according to an embodiment of this application. A control apparatus 3400 shown in FIG. 34 includes a processing unit 3410 and a storage unit 3420. The storage unit 3420 is configured to store instructions. The processing unit 3410 is configured to read the instructions from the storage unit 3420 to implement any one of the foregoing control methods.

To be specific, the processing unit 3410 controls first control valves 16 and 17 to be in a closed state, to connect a first oil return pipe 110 to a wheel cylinder. Brake fluid in the wheel cylinder flows to a first fluid reservoir 29 through the first oil return pipe 110, to depressurize wheels of a vehicle.

The processing unit 3410 controls second control valves 10 and 11 to be in a closed state, to connect oil inlet pipes 130 and 140 to a second oil return pipe 120. Brake fluid in the wheel cylinder flows to a second fluid reservoir 2 through the oil inlet pipes 130 and 140 and the second oil return pipe 120.

Optionally, if a depressurization rate of a brake system is less than a preset depressurization rate threshold, the processing unit 3410 is further configured to control second control valves 10 and 11 to be in a closed state.

Optionally, oil inlet pipes of the brake system include a first oil inlet pipe 130 and a second oil inlet pipe 140. The second oil return pipe 120 is connected to the first oil inlet pipe 130 by using a first reducing valve 10. The second oil return pipe 120 is connected to the second oil inlet pipe 140 by using a second reducing valve 11. The processing unit 3410 is further configured to control the first reducing valve 10 in the second control valves 10 and 11 to be in a closed state, to connect the second oil return pipe 120 to the first oil inlet pipe 130 in the oil inlet pipes of the brake system. The processing unit 3410 is further configured to control the second reducing valve 11 in the second control valves 10 and 11 to be in a closed state, to connect the second oil return pipe 120 to the second oil inlet pipe 140 in the oil inlet pipes of the brake system.

Optionally, a master cylinder 3 of the brake system provides braking force to a first wheel 25 of the vehicle through a first oil inlet pipe branch 131 of the first oil inlet pipe 130, and provides braking force to a second wheel 26 of the vehicle through a second oil inlet pipe branch 132 of the first oil inlet pipe 130. The master cylinder 3 provides braking force to a third wheel 27 of the vehicle through a third oil inlet pipe branch 141 of the second oil inlet pipe 140, and provides braking force to a fourth wheel 28 of the vehicle through a fourth oil inlet pipe branch 142 of the second oil inlet pipe 140. The processing unit 3410 is further configured to control a pressure providing apparatus 18 of the brake system to provide braking force to the first wheel 25 and the second wheel 26 through a third oil inlet pipe 150 of the brake system, the first oil inlet pipe branch 131, and the second oil inlet pipe branch 132. The third oil inlet pipe 150 is connected to the first oil inlet pipe branch 131, and the third oil inlet pipe 150 is connected to the second oil inlet pipe branch 132. The processing unit 3410 is further configured to control the pressure providing apparatus 18 to provide braking force to the third wheel 27 and the fourth wheel 28 through a fourth oil inlet pipe 160 of the brake system, the third oil inlet pipe branch 141, and the fourth oil inlet pipe branch 142. The fourth oil inlet pipe 160 is connected to the third oil inlet pipe branch 141, and the fourth oil inlet pipe 160 is connected to the fourth oil inlet pipe branch 142.

Optionally, if the master cylinder 3 is faulty, the processing unit 3410 is further configured to control the pressure providing apparatus 18 to provide the braking force to the first wheel 25 and the second wheel 26 through the third oil inlet pipe 150, the first oil inlet pipe branch 131, and the second oil inlet pipe branch 132.

Optionally, if the master cylinder 3 is faulty, the processing unit 3410 is further configured to control the pressure providing apparatus 18 to provide the braking force to the third wheel 27 and the fourth wheel 28 through the fourth oil inlet pipe 160, the third oil inlet pipe branch 141, and the fourth oil inlet pipe branch 142.

Optionally, if a pressurization rate of the brake system is less than a preset pressurization rate threshold, the processing unit 3410 is further configured to control the pressure providing apparatus 18 of the brake system to provide the braking force to the first wheel 25 and the second wheel 26 through the third oil inlet pipe 150, the first oil inlet pipe branch 131, and the second oil inlet pipe branch 132.

Optionally, if the pressurization rate of the brake system is less than the preset pressurization rate threshold, the processing unit 3410 is further configured to control the pressure providing apparatus 18 to provide the braking force to the third wheel 27 and the fourth wheel 28 through the fourth oil inlet pipe 160, the third oil inlet pipe branch 141, and the fourth oil inlet pipe branch 142.

In an optional embodiment, the processing unit 3410 may be a processor 3520, the storage unit 3420 may be a memory 3510, and the control apparatus 3400 may further include a communication interface 3530. Details are shown in FIG. 35.

FIG. 35 is a schematic block diagram of a controller according to a non-claimed embodiment of this application. A controller 3500 shown in FIG. 35 may include the memory 3510, the processor 3520, and the communication interface 3530. The memory 3510, the processor 3520, and the communication interface 3530 are connected by using an internal connection path. The memory 3510 is configured to store instructions. The processor 3520 is configured to execute the instructions stored in the memory 3510, to control the communication interface 3530 to receive/send information. Optionally, the memory 3510 may be coupled to the processor 3520 through an interface, or may be integrated with the processor 3520.

It should be noted that the communication interface 3530 implements communication between the controller 3500 and another device or a communication network by using, for example but not limited to, a transceiver apparatus such as a transceiver. The communication interface 3530 may further include an input/output interface (input/output interface).

In an implementation process, steps in the foregoing method can be implemented by using a hardware integrated logical circuit in the processor 3520, or by using instructions in a form of software. The method disclosed with reference to non-claimed embodiments of this application may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory 3510. The processor 3520 reads information from the memory 3510, and performs the steps of the foregoing method in combination with the hardware of the processor. To avoid repetition, details are not described herein again.

It should be understood that the processor in non-claimed embodiments of this application may be a central processing unit (central processing unit, CPU), or may be another general purpose processor, a digital signal processor (digital signal processor, DSP), an application-specific integrated circuit (application-specific integrated circuit, ASIC), a field programmable gate array (field programmable gate array, FPGA), or another programmable logic device, discrete gate or transistor logic device, discrete hardware component, or the like. The general purpose processor may be a microprocessor, or the processor may be any conventional processor or the like.

It should also be understood that in non-claimed embodiments of this application, the memory may include a read-only memory and a random access memory, and provide instructions and data to the processor. A part of the processor may further include a non-volatile random access memory. For example, the processor may further store information of a device type.

It should be understood that the term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not mean execution sequences in embodiments of this application. The execution sequences of the processes should be determined based on functions and internal logic of the processes, and should not constitute any limitation on implementation processes of embodiments of this application.

A person of ordinary skill in the art may be aware that the units and algorithm steps in the examples described with reference to the embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

## Claims

1. A hydraulic adjustment unit of a brake system in a vehicle, comprising a first fluid reservoir (29), a second fluid reservoir (2), a first oil return pipe (110), and a second oil return pipe (120), wherein:
the first fluid reservoir (29) and the second fluid reservoir (2) are a same fluid reservoir, or the first fluid reservoir (29) and the second fluid reservoir (2) are different fluid reservoirs;
the first oil return pipe (110) is configured to connect to wheel cylinders (151, 152) of the vehicle, so that brake fluid in the wheel cylinders (151, 152) of the vehicle is delivered to the first fluid reservoir (29), to depressurize wheel cylinders (151, 152) of the vehicle;
the second oil return pipe (120) is configured to connect to the wheel cylinders (151, 152) of the vehicle through oil inlet pipes (130, 140) of the brake system, so that the brake fluid in the wheel cylinders (151, 152) of the vehicle is delivered to the second fluid reservoir (2) through the oil inlet pipes (130, 140) of the brake system, to depressurize the wheel cylinders (151, 152) of the vehicle; and, oil inlet pipes of the hydraulic adjustment unit comprise a first oil inlet pipe (130) and a second oil inlet pipe (140);
**characterized in that** the second oil return pipe (120) is connected to the first oil inlet pipe (130) by using a first reducing valve (10); if the first reducing valve (10) is in a closed state, the second oil return pipe (120) is connected to the first oil inlet pipe (130); and if the first reducing valve (10) is in an open state, the second oil return pipe (120) is disconnected from the first oil inlet pipe (130); and
the second oil return pipe (120) is connected to the second oil inlet pipe (140) by using a second reducing valve (11); if the second reducing valve (11) is in a closed state, the second oil return pipe (120) is connected to the second oil inlet pipe (140); and if the second reducing valve (11) is in an open state, the second oil return pipe (120) is disconnected from the second oil inlet pipe (140).

2. The hydraulic adjustment unit according to claim 1, wherein the hydraulic adjustment unit comprises a master cylinder (3) and a pressure providing apparatus (18);
the master cylinder (3) provides braking force to a first wheel (25) of the vehicle through a first oil inlet pipe branch (131) of the first oil inlet pipe (130), and the master cylinder (3) provides braking force to a second wheel (26) of the vehicle through a second oil inlet pipe branch (132) of the first oil inlet pipe (130);
the master cylinder (3) provides braking force to a third wheel (27) of the vehicle through a third oil inlet pipe branch (141) of the second oil inlet pipe (140), and the master cylinder (3) provides braking force to a fourth wheel (28) of the vehicle through a fourth oil inlet pipe branch (142) of the second oil inlet pipe (140);
the pressure providing apparatus (18) provides braking force to the first wheel (25) and the second wheel (26) through a third oil inlet pipe (150), the first oil inlet pipe branch (131), and the second oil inlet pipe branch (132); the third oil inlet pipe (150) is connected to the first oil inlet pipe branch (131); and the third oil inlet pipe (150) is connected to the second oil inlet pipe branch (132); and
the pressure providing apparatus (18) provides braking force to the third wheel (27) and the fourth wheel (28) through a fourth oil inlet pipe (160), the third oil inlet pipe branch (141), and the fourth oil inlet pipe branch (142); the fourth oil inlet pipe (160) is connected to the third oil inlet pipe branch (141); and the fourth oil inlet pipe (160) is connected to the fourth oil inlet pipe branch (142).

3. The hydraulic adjustment unit according to claim 2, wherein the first oil inlet pipe (130) is connected to the first oil inlet pipe branch (131) and the second oil inlet pipe branch (132) by using a first isolation valve (12); and if the first isolation valve (12) is in an open state, brake fluid in the first oil inlet pipe (130) is blocked by the first isolation valve (12), and cannot flow into wheel cylinders for the first wheel (25) and the second wheel (26) through the first oil inlet pipe branch (131) and the second oil inlet pipe branch (132); and
the second oil inlet pipe (140) is connected to the third oil inlet pipe branch (141) and the fourth oil inlet pipe branch (142) by using a second isolation valve (13); and if the second isolation valve (13) is in an open state, brake fluid in the second oil inlet pipe (140) is blocked by the first isolation valve (12), and cannot flow into the first wheel (25) and the second wheel (26) through the third oil inlet pipe branch (141) and the fourth oil inlet pipe branch (142).

4. A brake system in a vehicle, comprising a hydraulic adjustment unit according to any one of claims 1 to 3 and a plurality of wheel cylinders (151, 152).

5. A vehicle, comprising the brake system according to claim 4.

6. A control method for a brake system according to claim 4 in a vehicle, comprising:
controlling, by a controller of a brake system, first control valves (16, 17) to be in a closed state, to connect a first oil return pipe (110) of the brake system to a wheel cylinder of the brake system, so that brake fluid in the wheel cylinder of the brake system flows into a first fluid reservoir (29) of the brake system through the first oil return pipe (110), to depressurize wheel cylinders (151, 152) of a vehicle; and
**characterized by** controlling, by the controller, second control valves (10, 11) to be in a closed state, to connect oil inlet pipes (130, 140) of the brake system to a second oil return pipe (120) of the brake system, so that the brake fluid in the wheel cylinder of the brake system flows into a second fluid reservoir (2) of the brake system through the oil inlet pipes (130, 140) of the brake system and the second oil return pipe (120).

7. The control method according to claim 6, wherein the controlling, by the controller, second control valves (10, 11) to be in a closed state comprises:
if a depressurization rate of the brake system is less than a preset depressurization rate threshold, controlling, by the controller, the second control valves (10, 11) to be in a closed state.

8. The control method according to claim 7, wherein the oil inlet pipes of the brake system comprise a first oil inlet pipe (130) and a second oil inlet pipe (140);
the second oil return pipe (120) is connected to the first oil inlet pipe (130) by using a first reducing valve (10), and the second oil return pipe (120) is connected to the second oil inlet pipe (140) by using a second reducing valve (11); and
the controlling, by the controller, second control valves (10, 11) to be in a closed state comprises:
controlling, by the controller, the first reducing valve (10) in the second control valves (10, 11) to be in a closed state, to connect the second oil return pipe (120) to the first oil inlet pipe (130) in the oil inlet pipes of the brake system; and
controlling, by the controller, the second reducing valve (11) in the second control valves (10, 11) to be in a closed state, to connect the second oil return pipe (120) to the second oil inlet pipe (140) in the oil inlet pipes of the brake system.

9. The control method according to claim 8, wherein a master cylinder (3) of the brake system provides braking force to a first wheel (25) of the vehicle through a first oil inlet pipe branch (131) of the first oil inlet pipe (130), and provides braking force to a second wheel (26) of the vehicle through a second oil inlet pipe branch (132) of the first oil inlet pipe (130); and the master cylinder (3) provides braking force to a third wheel (27) of the vehicle through a third oil inlet pipe branch (141) of the second oil inlet pipe (140), and provides braking force to a fourth wheel (28) of the vehicle through a fourth oil inlet pipe branch (142) of the second oil inlet pipe (140); and
the method further comprises:
controlling, by the controller, a pressure providing apparatus (18) of the brake system to provide braking force to the first wheel (25) and the second wheel (26) through a third oil inlet pipe (150) of the brake system, the first oil inlet pipe branch (131), and the second oil inlet pipe branch (132), wherein the third oil inlet pipe (150) is connected to the first oil inlet pipe branch (131), and the third oil inlet pipe (150) is connected to the second oil inlet pipe branch (132); and
controlling, by the controller, the pressure providing apparatus (18) to provide braking force for the third wheel (27) and the fourth wheel (28) through a fourth oil inlet pipe (160) of the brake system, the third oil inlet pipe branch (141), and the fourth oil inlet pipe branch (142), wherein the fourth oil inlet pipe (160) is connected to the third oil inlet pipe branch (141), and the fourth oil inlet pipe (160) is connected to the fourth oil inlet pipe branch (142).

## Patentansprüche

1. Hydraulische Regulierungseinheit eines Bremssystems in einem Fahrzeug, umfassend einen ersten Flüssigkeitsbehälter (29), einen zweiten Flüssigkeitsbehälter (2), eine erste Ölrücklaufleitung (110) und eine zweite Ölrücklaufleitung (120), wobei:
der erste Flüssigkeitsbehälter (29) und der zweite Flüssigkeitsbehälter (2) ein gleicher Flüssigkeitsbehälter sind oder der erste Flüssigkeitsbehälter (29) und der zweite Flüssigkeitsbehälter (2) verschiedene Flüssigkeitsbehälter sind;
die erste Ölrücklaufleitung (110) dazu ausgelegt ist, mit Radzylindern (151, 152) des Fahrzeugs verbunden zu sein, sodass Bremsflüssigkeit in den Radzylindern (151, 152) des Fahrzeugs in den ersten Flüssigkeitsbehälter (29) geleitet wird, um die Radzylinder (151, 152) des Fahrzeugs drucklos zu machen;
die zweite Ölrücklaufleitung (120) dazu ausgelegt ist, mit den Radzylindern (151, 152) des Fahrzeugs über Ölzulaufleitungen (130, 140) des Bremssystems verbunden zu sein, sodass die Bremsflüssigkeit in den Radzylindern (151, 152) des Fahrzeugs über die Ölzulaufleitungen (130, 140) des Bremssystems in den zweiten Flüssigkeitsbehälter (2) geleitet wird, um die Radzylinder (151, 152) des Fahrzeugs drucklos zu machen; und Ölzulaufleitungen der hydraulischen Regulierungseinheit eine erste Ölzulaufleitung (130) und eine zweite Ölzulaufleitung (140) umfassen;
**dadurch gekennzeichnet, dass** die zweite Ölrücklaufleitung (120) mit der ersten Ölzulaufleitung (130) mittels eines ersten Reduzierventils (10) verbunden ist; wenn sich das erste Reduzierventil (10) in einem geschlossenen Zustand befindet, die zweite Ölrücklaufleitung (120) mit der ersten Ölzulaufleitung (130) verbunden ist; und, wenn sich das erste Reduzierventil (10) in einem geöffneten Zustand befindet, die zweite Ölrücklaufleitung (120) von der ersten Ölzulaufleitung (130) getrennt ist; und
die zweite Ölrücklaufleitung (120) mit der zweiten Ölzulaufleitung (140) mittels eines zweiten Reduzierventils (11) verbunden ist; wenn sich das zweite Reduzierventil (11) in einem geschlossenen Zustand befindet, die zweite Ölrücklaufleitung (120) mit der zweiten Ölzulaufleitung (140) verbunden ist; und, wenn sich das zweite Reduzierventil (11) in einem offenen Zustand befindet, die zweite Ölrücklaufleitung (120) von der zweiten Ölzulaufleitung (140) getrennt ist.

2. Hydraulische Regulierungseinheit nach Anspruch 1, wobei die hydraulische Regulierungseinheit einen Hauptzylinder (3) und eine Druckbereitstellungsvorrichtung (18) umfasst;
der Hauptzylinder (3) einem ersten Rad (25) des Fahrzeugs Bremskraft über einen ersten Ölzulaufleitungsabzweig (131) der ersten Ölzulaufleitung (130) bereitstellt und der Hauptzylinder (3) einem zweiten Rad (26) des Fahrzeugs Bremskraft über einen zweiten Ölzulaufleitungsabzweig (132) der ersten Ölzulaufleitung (130) bereitstellt;
der Hauptzylinder (3) einem dritten Rad (27) des Fahrzeugs Bremskraft über einen dritten Ölzulaufleitungsabzweig (141) der zweiten Ölzulaufleitung (140) bereitstellt und der Hauptzylinder (3) einem vierten Rad (28) des Fahrzeugs Bremskraft über einen vierten Ölzulaufleitungsabzweig (142) der zweiten Ölzulaufleitung (140) bereitstellt;
die Druckbereitstellungsvorrichtung (18) dem ersten Rad (25) und dem zweiten Rad (26) Bremskraft über eine dritte Ölzulaufleitung (150), den ersten Ölzulaufleitungsabzweig (131) und den zweiten Ölzulaufleitungsabzweig (132) bereitstellt; die dritte Ölzulaufleitung (150) mit dem ersten Ölzulaufleitungsabzweig (131) verbunden ist; und die dritte Ölzulaufleitung (150) mit dem zweiten Ölzulaufleitungsabzweig (132) verbunden ist; und
die Druckbereitstellungsvorrichtung (18) dem dritten Rad (27) und dem vierten Rad (28) Bremskraft über eine vierte Ölzulaufleitung (160), den dritten Ölzulaufleitungsabzweig (141) und den vierten Ölzulaufleitungsabzweig (142) bereitstellt; die vierte Ölzulaufleitung (160) mit dem dritten Ölzulaufleitungsabzweig (141) verbunden ist; und die vierte Ölzulaufleitung (160) mit dem vierten Ölzulaufleitungsabzweig (142) verbunden ist.

3. Hydraulische Regulierungseinheit nach Anspruch 2, wobei die erste Ölzulaufleitung (130) mit dem ersten Ölzulaufleitungsabzweig (131) und dem zweiten Ölzulaufleitungsabzweig (132) mittels eines ersten Absperrventils (12) verbunden ist; und, wenn sich das erste Absperrventil (12) in einem geöffneten Zustand befindet, Bremsflüssigkeit in der ersten Ölzulaufleitung (130) durch das erste Absperrventil (12) blockiert wird und nicht über den ersten Ölzulaufleitungsabzweig (131) und den zweiten Ölzulaufleitungsabzweig (132) in die Radzylinder für das erste Rad (25) und das zweite Rad (26) fließen kann; und
die zweite Ölzulaufleitung (140) mit dem dritten Ölzulaufleitungsabzweig (141) und dem vierten Ölzulaufleitungsabzweig (142) mittels eines zweiten Absperrventils (13) verbunden ist; und, wenn sich das zweite Absperrventil (13) in einem geöffneten Zustand befindet, Bremsflüssigkeit in der zweiten Ölzulaufleitung (140) durch das erste Absperrventil (12) blockiert wird und nicht über den dritten Ölzulaufleitungsabzweig (141) und den vierten Ölzulaufleitungsabzweig (142) in das erste Rad (25) und das zweite Rad (26) fließen kann.

4. Bremssystem in einem Fahrzeug, umfassend eine hydraulische Regulierungseinheit nach einem der Ansprüche 1 bis 3 und eine Vielzahl von Radzylindern (151, 152).

5. Fahrzeug, umfassend das Bremssystem nach Anspruch 4.

6. Steuerverfahren für ein Bremssystem nach Anspruch 4 in einem Fahrzeug, umfassend:
Steuern, durch eine Steuerung eines Bremssystems, von ersten Steuerventilen (16, 17), damit sich diese in einem geschlossenem Zustand befinden, um eine erste Ölrücklaufleitung (110) des Bremssystems mit einem Radzylinder des Bremssystems zu verbinden, sodass Bremsflüssigkeit in dem Radzylinder des Bremssystems über die erste Ölrücklaufleitung (110) in einen ersten Flüssigkeitsbehälter (29) des Bremssystems fließt, um die Radzylinder (151, 152) eines Fahrzeugs drucklos zu machen; und
**gekennzeichnet durch** Steuern, durch die Steuerung, von zweiten Steuerventilen (10, 11), damit sich diese in einem geschlossenen Zustand befinden, um die Ölzulaufleitungen (130, 140) des Bremssystems mit einer zweiten Ölrücklaufleitung (120) des Bremssystems zu verbinden, sodass die Bremsflüssigkeit in dem Radzylinder des Bremssystems über die Ölzulaufleitungen (130, 140) des Bremssystems und die zweite Ölrücklaufleitung (120) in einen zweiten Flüssigkeitsbehälter (2) des Bremssystems fließt.

7. Steuerverfahren nach Anspruch 6, wobei das Steuern, durch die Steuerung, von zweiten Steuerventilen (10, 11), damit sich diese in einem geschlossenen Zustand befinden, Folgendes umfasst:
wenn eine Druckentlastungsrate des Bremssystems kleiner ist als ein voreingestellter Schwellenwert für die Druckentlastungsrate, Steuern, durch die Steuerung, der zweiten Steuerventile (10, 11), damit sich diese in einem geschlossenen Zustand befinden.

8. Steuerverfahren nach Anspruch 7, wobei die Ölzulaufleitungen des Bremssystems eine erste Ölzulaufleitung (130) und eine zweite Ölzulaufleitung (140) umfassen;
die zweite Ölrücklaufleitung (120) mit der ersten Ölzulaufleitung (130) mittels eines ersten Reduzierventils (10) verbunden ist und die zweite Ölrücklaufleitung (120) mit der zweiten Ölzulaufleitung (140) mittels eines zweiten Reduzierventils (11) verbunden ist; und
das Steuern, durch die Steuerung, von zweiten Steuerventilen (10, 11), damit sich diese in einem geschlossenen Zustand befinden, Folgendes umfasst:
Steuern, durch die Steuerung, des ersten Reduzierventils (10) in den zweiten Steuerventilen (10, 11), damit sich dieses in einem geschlossenen Zustand befindet, um die zweite Ölrücklaufleitung (120) mit der ersten Ölzulaufleitung (130) in den Ölzulaufleitungen des Bremssystems zu verbinden; und
Steuern, durch die Steuerung, des zweiten Reduzierventils (11) in den zweiten Steuerventilen (10, 11), damit sich dieses in einem geschlossenen Zustand befindet, um die zweite Ölrücklaufleitung (120) mit der zweiten Ölzulaufleitung (140) in den Ölzulaufleitungen des Bremssystems zu verbinden.

9. Steuerverfahren nach Anspruch 8, wobei ein Hauptzylinder (3) des Bremssystems einem ersten Rad (25) des Fahrzeugs Bremskraft über einen ersten Ölzulaufleitungsabzweig (131) der ersten Ölzulaufleitung (130) bereitstellt und einem zweiten Rad (26) des Fahrzeugs Bremskraft über einen zweiten Ölzulaufleitungsabzweig (132) der ersten Ölzulaufleitung (130) bereitstellt; und der Hauptzylinder (3) einem dritten Rad (27) des Fahrzeugs Bremskraft über einen dritten Ölzulaufleitungsabzweig (141) der zweiten Ölzulaufleitung (140) bereitstellt und einem vierten Rad (28) des Fahrzeugs Bremskraft über einen vierten Ölzulaufleitungsabzweig (142) der zweiten Ölzulaufleitung (140) bereitstellt; und
das Verfahren ferner Folgendes umfasst:
Steuern, durch die Steuerung, einer Druckbereitstellungsvorrichtung (18) des Bremssystems, um dem ersten Rad (25) und dem zweiten Rad (26) Bremskraft über eine dritte Ölzulaufleitung (150) des Bremssystems, den ersten Ölzulaufleitungsabzweig (131) und den zweiten Ölzulaufleitungsabzweig (132) bereitzustellen, wobei die dritte Ölzulaufleitung (150) mit dem ersten Ölzulaufleitungsabzweig (131) verbunden ist und die dritte Ölzulaufleitung (150) mit dem zweiten Ölzulaufleitungsabzweig (132) verbunden ist; und
Steuern, durch die Steuerung, der Druckbereitstellungsvorrichtung (18), um dem dritten Rad (27) und dem vierten Rad (28) Bremskraft über eine vierte Ölzulaufleitung (160) des Bremssystems, den dritten Ölzulaufleitungsabzweig (141) und den vierten Ölzulaufleitungsabzweig (142) bereitzustellen, wobei die vierte Ölzulaufleitung (160) mit dem dritten Ölzulaufleitungsabzweig (141) verbunden ist und die vierte Ölzulaufleitung (160) mit dem vierten Ölzulaufleitungsabzweig (142) verbunden ist.

## Revendications

1. Unité de réglage hydraulique d'un système de freinage dans un véhicule, comprenant un premier réservoir de fluide (29), un second réservoir de fluide (2), un premier tuyau de retour d'huile (110), et un second tuyau de retour d'huile (120), dans laquelle :
le premier réservoir de fluide (29) et le second réservoir de fluide (2) sont un même réservoir de fluide, ou le premier réservoir de fluide (29) et le second réservoir de fluide (2) sont des réservoirs de fluide différents ;
le premier tuyau de retour d'huile (110) est configuré pour se raccorder aux cylindres de roue (151, 152) du véhicule, de sorte que le liquide de frein dans les cylindres de roue (151, 152) du véhicule est acheminé vers le premier réservoir de fluide (29), pour dépressuriser les cylindres de roue (151, 152) du véhicule ;
le second tuyau de retour d'huile (120) est configuré pour se raccorder aux cylindres de roue (151, 152) du véhicule par l'intermédiaire de tuyaux d'entrée d'huile (130, 140) du système de freinage, de sorte que le liquide de frein dans les cylindres de roue (151, 152) du véhicule est acheminé vers le second réservoir de fluide (2) par l'intermédiaire des tuyaux d'entrée d'huile (130, 140) du système de freinage, pour dépressuriser les cylindres de roue (151, 152) du véhicule ; et, les tuyaux d'entrée d'huile de l'unité de réglage hydraulique comprennent un premier tuyau d'entrée d'huile (130) et un deuxième tuyau d'entrée d'huile (140) ;
**caractérisé en ce que** le second tuyau de retour d'huile (120) est raccordé au premier tuyau d'entrée d'huile (130) à l'aide d'une première soupape de réduction (10) ; si la première soupape de réduction (10) est dans un état fermé, le second tuyau de retour d'huile (120) est raccordé au premier tuyau d'entrée d'huile (130) ; et si la première soupape de réduction (10) est dans un état ouvert, le second tuyau de retour d'huile (120) est déconnecté du premier tuyau d'entrée d'huile (130) ; et
le second tuyau de retour d'huile (120) est raccordé au deuxième tuyau d'entrée d'huile (140) à l'aide d'une seconde soupape de réduction (11) ; si la seconde soupape de réduction (11) est dans un état fermé, le second tuyau de retour d'huile (120) est raccordé au deuxième tuyau d'entrée d'huile (140) ; et si la seconde soupape de réduction (11) est dans un état ouvert, le second tuyau de retour d'huile (120) est déconnecté du deuxième tuyau d'entrée d'huile (140).

2. Unité de réglage hydraulique selon la revendication 1, dans laquelle l'unité de réglage hydraulique comprend un maître-cylindre (3) et un appareil de fourniture de pression (18) ;
le maître-cylindre (3) fournit une force de freinage à une première roue (25) du véhicule par l'intermédiaire d'une première branche de tuyau d'entrée d'huile (131) du premier tuyau d'entrée d'huile (130), et le maître-cylindre (3) fournit une force de freinage à une deuxième roue (26) du véhicule par l'intermédiaire d'une deuxième branche de tuyau d'entrée d'huile (132) du premier tuyau d'entrée d'huile (130) ;
le maître-cylindre (3) fournit une force de freinage à une troisième roue (27) du véhicule par l'intermédiaire d'une troisième branche de tuyau d'entrée d'huile (141) du deuxième tuyau d'entrée d'huile (140), et le maître-cylindre (3) fournit une force de freinage à une quatrième roue (28) du véhicule par l'intermédiaire d'une quatrième branche de tuyau d'entrée d'huile (142) du deuxième tuyau d'entrée d'huile (140) ;
l'appareil de fourniture de pression (18) fournit une force de freinage à la première roue (25) et à la deuxième roue (26) par l'intermédiaire d'un troisième tuyau d'entrée d'huile (150), de la première branche de tuyau d'entrée d'huile (131) et de la deuxième branche de tuyau d'entrée d'huile (132) ; le troisième tuyau d'entrée d'huile (150) est raccordé à la première branche de tuyau d'entrée d'huile (131) ; et le troisième tuyau d'entrée d'huile (150) est raccordé à la deuxième branche de tuyau d'entrée d'huile (132) ; et
l'appareil de fourniture de pression (18) fournit une force de freinage à la troisième roue (27) et à la quatrième roue (28) par l'intermédiaire d'un quatrième tuyau d'entrée d'huile (160), de la troisième branche de tuyau d'entrée d'huile (141), et de la quatrième branche de tuyau d'entrée d'huile (142) ; le quatrième tuyau d'entrée d'huile (160) est raccordé à la troisième branche de tuyau d'entrée d'huile (141) ; et le quatrième tuyau d'entrée d'huile (160) est raccordé à la quatrième branche de tuyau d'entrée d'huile (142).

3. Unité de réglage hydraulique selon la revendication 2, dans laquelle le premier tuyau d'entrée d'huile (130) est raccordé à la première branche de tuyau d'entrée d'huile (131) et à la deuxième branche de tuyau d'entrée d'huile (132) à l'aide d'une première soupape d'isolement (12) ; et si la première soupape d'isolement (12) est dans un état ouvert, le liquide de frein dans le premier tuyau d'entrée d'huile (130) est bloqué par la première soupape d'isolement (12), et ne peut pas s'écouler vers les cylindres de roue de la première roue (25) et de la deuxième roue (26) par l'intermédiaire de la première branche de tuyau d'entrée d'huile (131) et de la deuxième branche de tuyau d'entrée d'huile (132) ; et
le deuxième tuyau d'entrée d'huile (140) est raccordé à la troisième branche de tuyau d'entrée d'huile (141) et à la quatrième branche de tuyau d'entrée d'huile (142) à l'aide d'une seconde soupape d'isolement (13) ; et si la seconde soupape d'isolement (13) est dans un état ouvert, le liquide de frein dans le deuxième tuyau d'entrée d'huile (140) est bloqué par la première soupape d'isolement (12), et ne peut pas s'écouler vers la première roue (25) et la deuxième roue (26) par l'intermédiaire de la troisième branche de tuyau d'entrée d'huile (141) et de la quatrième branche de tuyau d'entrée d'huile (142).

4. Système de freinage dans un véhicule, comprenant une unité de réglage hydraulique selon l'une quelconque des revendications 1 à 3 et une pluralité de cylindres de roue (151, 152).

5. véhicule comprenant le système de freinage selon la revendication 4.

6. Procédé de commande d'un système de freinage selon la revendication 4 dans un véhicule, comprenant :
la commande, par un dispositif de commande d'un système de freinage, de premières soupapes de commande (16, 17) pour qu'elles soient dans un état fermé, pour raccorder un premier tuyau de retour d'huile (110) du système de freinage à un cylindre de roue du système de freinage, de sorte que le liquide de frein dans le cylindre de roue du système de freinage s'écoule vers un premier réservoir de fluide (29) du système de freinage par l'intermédiaire du premier tuyau de retour d'huile (110), pour dépressuriser les cylindres de roue (151, 152) d'un véhicule ; et
**caractérisé par** la commande, par le dispositif de commande, de secondes soupapes de commande (10, 11) pour qu'elles soient dans un état fermé, pour raccorder les tuyaux d'entrée d'huile (130, 140) du système de freinage à un second tuyau de retour d'huile (120) du système de freinage, de sorte que le liquide de frein dans le cylindre de roue du système de freinage s'écoule vers un second réservoir de fluide (2) du système de freinage par l'intermédiaire des tuyaux d'entrée d'huile (130, 140) du système de freinage et du second tuyau de retour d'huile (120).

7. Procédé de commande selon la revendication 6, dans lequel la commande, par le dispositif de commande, de secondes soupapes de commande (10, 11) pour qu'elles soient dans un état fermé comprend :
si un taux de dépressurisation du système de freinage est inférieur à un seuil de taux de dépressurisation prédéfini, la commande, par le dispositif de commande, des secondes soupapes de commande (10, 11) pour qu'elles soient dans un état fermé.

8. Procédé de commande selon la revendication 7, dans lequel les tuyaux d'entrée d'huile du système de freinage comprennent un premier tuyau d'entrée d'huile (130) et un deuxième tuyau d'entrée d'huile (140) ;
le second tuyau de retour d'huile (120) est raccordé au premier tuyau d'entrée d'huile (130) à l'aide d'une première soupape de réduction (10), et le second tuyau de retour d'huile (120) est raccordé au deuxième tuyau d'entrée d'huile (140) à l'aide d'une seconde soupape de réduction (11) ; et
la commande, par le dispositif de commande, de secondes soupapes de commande (10, 11) pour d'elles soient dans un état fermé comprend :
la commande, par le dispositif de commande, de la première soupape de réduction (10) dans les secondes soupapes de commande (10, 11) pour qu'elles soient dans un état fermé, pour raccorder le second tuyau de retour d'huile (120) au premier tuyau d'entrée d'huile (130) dans les tuyaux d'entrée d'huile du système de freinage ; et
la commande, par le dispositif de commande, de la seconde soupape de réduction (11) dans les secondes soupapes de commande (10, 11) pour qu'elles soient dans un état fermé, pour raccorder le second tuyau de retour d'huile (120) au deuxième tuyau d'entrée d'huile (140) dans les tuyaux d'entrée d'huile du système de freinage.

9. Procédé de commande selon la revendication 8, dans lequel un maître-cylindre (3) du système de freinage fournit une force de freinage à une première roue (25) du véhicule par l'intermédiaire d'une première branche de tuyau d'entrée d'huile (131) du premier tuyau d'entrée d'huile (130), et fournit une force de freinage à une deuxième roue (26) du véhicule par l'intermédiaire d'une deuxième branche de tuyau d'entrée d'huile (132) du premier tuyau d'entrée d'huile (130) ; et le maître-cylindre (3) fournit une force de freinage à une troisième roue (27) du véhicule par l'intermédiaire d'une troisième branche de tuyau d'entrée d'huile (141) du deuxième tuyau d'entrée d'huile (140), et fournit une force de freinage à une quatrième roue (28) du véhicule par l'intermédiaire d'une quatrième branche de tuyau d'entrée d'huile (142) du deuxième tuyau d'entrée d'huile (140) ; et
le procédé comprend également :
la commande, par le dispositif de commande, d'un appareil de fourniture de pression (18) du système de freinage pour fournir une force de freinage à la première roue (25) et à la deuxième roue (26) par l'intermédiaire d'un troisième tuyau d'entrée d'huile (150) du système de freinage, de la première branche de tuyau d'entrée d'huile (131), et de la deuxième branche de tuyau d'entrée d'huile (132), dans lequel le troisième tuyau d'entrée d'huile (150) est raccordé à la première branche de tuyau d'entrée d'huile (131), et le troisième tuyau d'entrée d'huile (150) est raccordé à la deuxième branche de tuyau d'entrée d'huile (132) ; et
la commande, par le dispositif de commande, de l'appareil de fourniture de pression (18) pour fournir une force de freinage à la troisième roue (27) et à la quatrième roue (28) par l'intermédiaire d'un quatrième tuyau d'entrée d'huile (160) du système de freinage, de la troisième branche de tuyau d'entrée d'huile (141), et de la quatrième branche de tuyau d'entrée d'huile (142), dans lequel le quatrième tuyau d'entrée d'huile (160) est raccordé à la troisième branche de tuyau d'entrée d'huile (141), et le quatrième tuyau d'entrée d'huile (160) est raccordé à la quatrième branche de tuyau d'entrée d'huile (142).
